# EUROPEAN PATENT APPLICATION

(11) **EP 4 834 987 A1**
(43) Date of publication of application: **04.11.2026**
(21) Application number: 24912062.7
(22) Date of filing: 12.11.2024
(51) Int. Cl.: C08L 9/00, B60C 1/00, C08K 3/013, C08K 5/00, C08L 9/06, C08L 101/00

(54) **TREAD RUBBER COMPOSITION, TREAD RUBBER, AND TIRE**

(30) Priority: 26.12.2023 JP 2023219760
(71) Applicant: BRIDGESTONE CORPORATION, Chuo-ku Tokyo 104-8340 (JP)
(72) Inventor: SAITO, Kosuke, Tokyo 104-8340 (JP)
(74) Representative: Marks & Clerk LLP
(86) International application number: PCT/JP2024/040222
(87) International publication number: WO 2025/142169

(57) **Abstract**

With the aim of providing a rubber composition for tread capable of balancing high levels of wet gripping performance and high fuel efficiency of a tire, and further capable of suppressing cracks in a tread portion of the tire, a rubber composition for tread contains a rubber component (A), a resin component (B), a filler (C), and an antioxidant (D), wherein the rubber component (A) includes isoprene-based rubber, content of the resin component (B) is not less than 1 part by mass and less than 50 parts by mass per 100 parts by mass of the rubber component (A), the resin component (B) is at least partially hydrogenated and a difference in SP value between the resin component (B) and the isoprene-based rubber is not more than 1.40 (cal/cm³)^{1/2}, the following formula: mass ratio of resin component (B)/isoprene-based rubber ≥ 0.5 is satisfied, and the antioxidant (D) is at least one selected from the group consisting of compounds represented by specific structures.

## Description

### TECHNICAL FIELD

The present disclosure relates to a rubber composition for tread, tread rubber, and a tire.

### BACKGROUND

Conventionally, from the viewpoint of improving vehicle safety, various studies have been conducted to enhance braking performance on wet road surfaces (hereinafter abbreviated as "wet gripping performance"). For example, PTL 1 discloses that by applying a rubber composition, which is prepared by compounding a thermoplastic resin and a filler containing silica into a rubber component containing not less than 70 mass% of natural rubber, to the tread rubber of a tire, the braking performance of the tire on both dry and wet road surfaces can be improved.

On the other hand, in connection with the recent global trend toward regulation of carbon dioxide emissions due to growing environmental concerns, there is an increasing demand for improved fuel efficiency of automobiles. To meet such demands, improvement in tire performance, specifically enhancement of high fuel efficiency (reduction of rolling resistance), is also required.

In addition, various rubber members constituting a tire may deteriorate under the influence of external atmospheric environments such as the presence of ozone, and when such deterioration progresses, cracks and the like may occur. As a countermeasure to such problems, rubber compositions containing an antioxidant are often applied to various rubber members constituting a tire. For example, PTL 2 discloses that by applying a rubber composition, in which a specific quinoline-based antioxidant and N-phenyl-N'-(1,3-dimethylbutyl)-p-phenylenediamine (antioxidant 6PPD) are selected and compounded, to the rubber constituting the surface of a tire, cracks and discoloration of the tire surface can be suppressed.

### CITATION LIST

### (Patent Literature)

PTL 1: WO 2015/079703 A1
PTL 2: WO 2018/056384 A1

### SUMMARY

### (Technical Problem)

Under such circumstances, the present inventors have studied and found that, although the technique described in PTL 1 can improve the wet gripping performance of a tire, there is room for improvement in high fuel efficiency.

Furthermore, N-phenyl-N'-(1,3-dimethylbutyl)-p-phenylenediamine (antioxidant 6PPD), which is used in PTL 2, may have an impact on the environment, and considering the possibility of future regulation under European laws, it is desirable to use an antioxidant with a lower environmental burden. In this regard, it is conceivable not to use or to substantially not use antioxidant 6PPD in the rubber constituting the surface of a tire; however, the present inventors have found that when antioxidant 6PPD is not used or is substantially not used, the ozone resistance of the rubber constituting the surface of a tire, particularly the tread rubber, decreases, making it easier for cracks to occur in the tread portion.

Accordingly, the present disclosure aims to solve the above problems of the prior art and to provide a rubber composition for tread and tread rubber that can achieve a high-level balance between wet gripping performance and high fuel efficiency of a tire, and further can suppress cracks in the tread portion of the tire.

Additionally, the present disclosure further aims to provide a tire in which wet gripping performance and high fuel efficiency are highly balanced and cracks in the tread portion are suppressed.

### (Solution to Problem)

The gist configuration of the rubber composition for tread, tread rubber, and tire of the present disclosure for solving the above problems is as follows.
[1] A rubber composition for tread comprising a rubber component (A), a resin component (B), a filler (C), and an antioxidant (D), wherein
   the rubber component (A) includes isoprene-based rubber,
   content of the resin component (B) is not less than 1 part by mass and less than 50 parts by mass per 100 parts by mass of the rubber component (A),
   the resin component (B) is at least partially hydrogenated, and a difference in SP value between the resin component (B) and the isoprene-based rubber is not more than 1.40 (cal/cm³)^{1/2},
   the following formula:
      mass ratio of resin component (B)/isoprene-based rubber ≥ 0.5 is satisfied, and
      the antioxidant (D) is at least one selected from the group consisting of:
         a compound represented by the following formula (1): 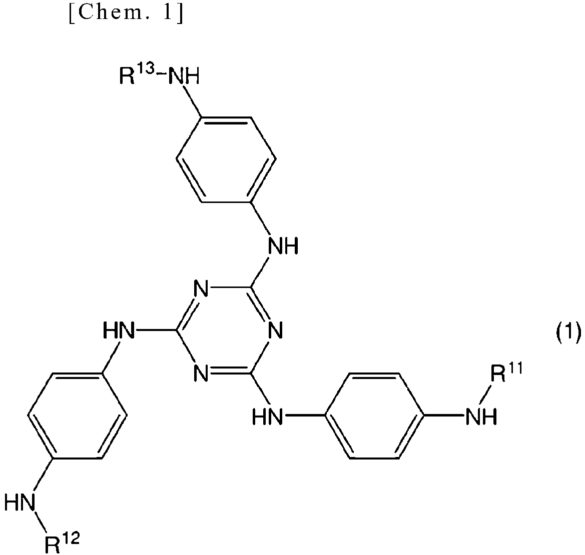 where, in formula (1), R¹¹, R¹², and R¹³ are each independently an alkyl group having 1 to 20 carbon atoms;
      a compound represented by the following formula (2): 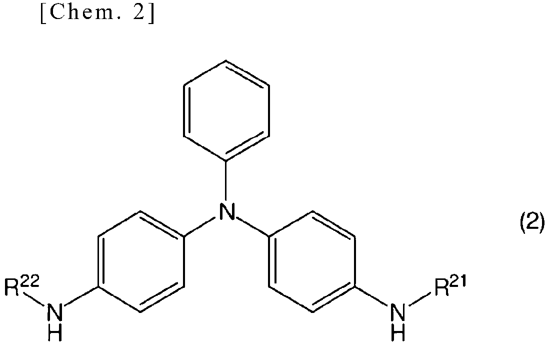 where, in formula (2), R²¹ and R²² are each independently an alkyl group having 1 to 20 carbon atoms;
      a compound represented by the following formula (3): 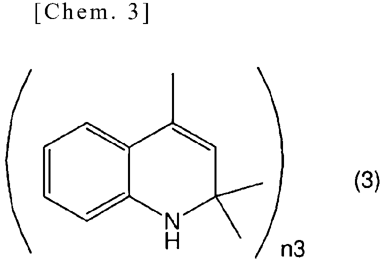 where, in formula (3), n3 is 2 to 5;
      a compound represented by the following formula (4): 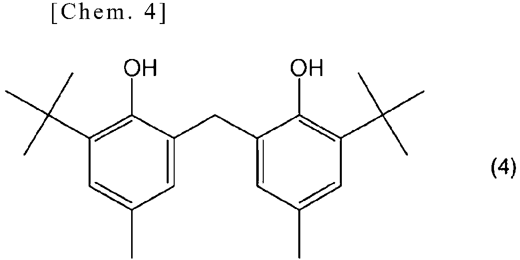
      a compound represented by the following formula (5): 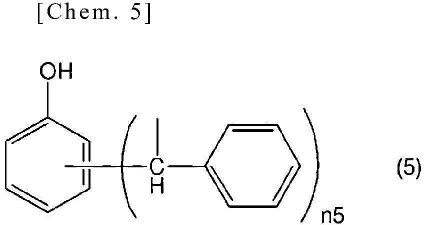 where, in formula (5), n5 is 2 to 5;
      a compound represented by the following formula (6): 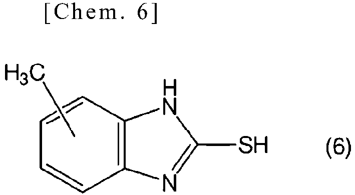
      a compound represented by the following formula (7): 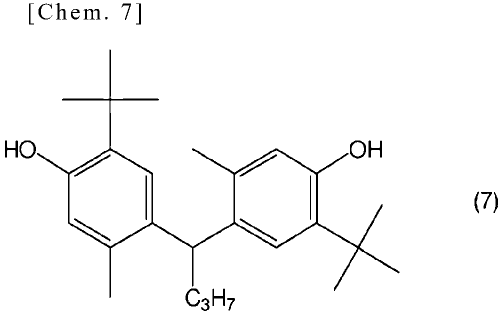
      a compound represented by the following formula (8): 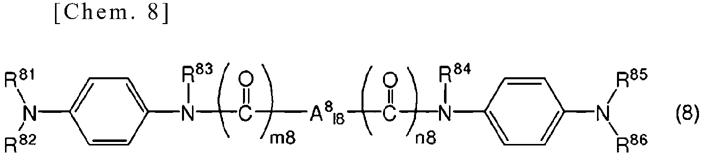 where, in formula (8), R⁸¹, R⁸², R⁸⁵, and R⁸⁶ each independently represent a hydrogen atom, an alkyl group having 1 to 10 carbon atoms, or a phenyl group, with a proviso that a case in which R⁸¹ and R⁸² are simultaneously hydrogen atoms and a case in which R⁸⁵ and R⁸⁶ are simultaneously hydrogen atoms are excluded, R⁸³ and R⁸⁴ each independently represent an alkyl group having 1 to 8 carbon atoms or an aralkyl group, A⁸ represents an alkylene group having 1 to 12 carbon atoms, and 18, m8, and n8 each represent an integer of 0 or 1;
      a compound represented by the following formula (9): 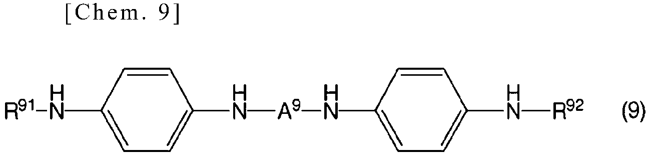 where, in formula (9), R⁹¹ and R⁹² each independently represent an alkyl group having 1 to 10 carbon atoms, an aralkyl group, or a phenyl group, and A⁹ represents an alkylene group having 6 to 30 carbon atoms and optionally having an interposed phenylene group; and
      a compound represented by the following formula (10): 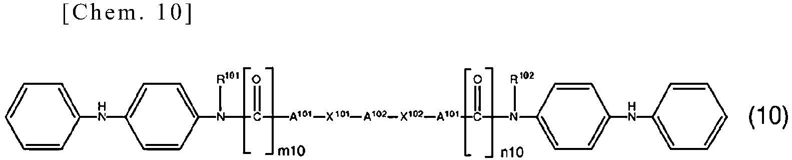 where, in formula (10), R¹⁰¹ and R¹⁰² each independently represent a hydrogen atom or an alkyl group having 1 to 6 carbon atoms, m10 and n10 each represent an integer of 0 or 1, each A¹⁰¹ independently represents an alkylene group having 1 to 7 carbon atoms, A¹⁰² represents an alkylene group having 1 to 8 carbon atoms, X¹⁰¹ represents an oxygen atom, a sulfur atom, or an -NR¹⁰³- group, and X¹⁰² represents an oxygen atom, a sulfur atom, or an -NR¹⁰⁴- group, wherein R¹⁰³ and R¹⁰⁴ are each independently a hydrogen atom or an alkyl group having 1 to 4 carbon atoms, or R¹⁰³ and R¹⁰⁴ optionally form an alkylene group having 1 to 4 carbon atoms together.
[2] The rubber composition for tread according to [1], wherein the rubber component (A) further includes styrene-butadiene rubber.
[3] The rubber composition for tread according to [2], wherein the styrene-butadiene rubber has a glass transition temperature of lower than -40°C.
[4] The rubber composition for tread according to any one of [1] to [3], wherein the difference in SP value between the resin component (B) and the isoprene-based rubber is not more than 0.50 (cal/cm³)^{1/2}.
[5] The rubber composition for tread according to any one of [2] to [4], wherein a difference in SP value between the styrene-butadiene rubber and the isoprene-based rubber is not less than 0.3 (cal/cm³)^{1/2}.
[6] The rubber composition for tread according to any one of [1] to [5], wherein content of the isoprene-based rubber is 1 part by mass to 80 parts by mass in 100 parts by mass of the rubber component (A).
[7] The rubber composition for tread according to [6], wherein the content of the isoprene-based rubber is 1 part by mass to 40 parts by mass in 100 parts by mass of the rubber component (A).
[8] The rubber composition for tread according to any one of [2] to [7], wherein the styrene-butadiene rubber is modified with a modifier having a functional group containing a nitrogen atom and an alkoxy group.
[9] The rubber composition for tread according to any one of [1] to [8], wherein the resin component (B) has a softening point of higher than 110°C and a polystyrene-equivalent weight-average molecular weight of 200 g/mol to 1600 g/mol.
[10] The rubber composition for tread according to any one of [1] to [9], wherein the resin component (B) is at least one selected from the group consisting of hydrogenated C₅ resin, hydrogenated C₅-C₉ resin, hydrogenated dicyclopentadiene resin, and hydrogenated terpene resin.
[11] The rubber composition for tread according to any one of [1] to [10], wherein the filler (C) includes recovered carbon black.
[12] The rubber composition for tread according to [11], wherein the recovered carbon black is obtained by pyrolysis of a vulcanized rubber product containing carbon black.
[13] The rubber composition for tread according to [11] or [12], wherein the recovered carbon black has an ash content of not more than 20 mass%.
[14] Tread rubber comprising the rubber composition for tread according to any one of [1] to [13].
[15] A tire comprising the tread rubber according to [14].

### (Advantageous Effect)

According to the present disclosure, it is possible to provide a rubber composition for tread and tread rubber that can achieve a high-level balance between wet gripping performance and high fuel efficiency of a tire, and further can suppress cracks in the tread portion of the tire.

Additionally, according to the present disclosure, it is possible to provide a tire in which wet gripping performance and high fuel efficiency are highly balanced and cracks in the tread portion are suppressed.

### DETAILED DESCRIPTION

Hereinafter, the rubber composition for tread, tread rubber, and tire of the present disclosure will be exemplified and described in detail based on embodiments thereof.

### <Definitions>

The compounds described in the present specification may be partially or entirely derived from fossil resources, derived from biological resources such as plant resources, or derived from recycled resources such as used tires. Furthermore, they may be derived from a mixture of any two or more of fossil resources, biological resources, and recycled resources.

In the present specification, the SP value (solubility parameter) of isoprene-based rubber, styrene-butadiene rubber, and resin component is calculated according to the Fedors method.

In the present specification, the glass transition temperature of styrene-butadiene rubber is determined in accordance with ISO 22768:2006 by recording the DSC curve while raising the temperature within a predetermined temperature range, and the peak top (inflection point) of the DSC differential curve is taken as the glass transition temperature.

In the present specification, the softening point of the resin component is measured in accordance with JIS-K2207-1996 (ring and ball method).

In the present specification, the weight-average molecular weight of the resin component is measured by gel permeation chromatography (GPC), and the value is calculated as polystyrene equivalent.

In the present specification, the "ratio of sustainable materials" refers to the total mass ratio of components derived from biological resources (biomass resources) and components derived from recycled resources in the target rubber composition for tread, tread rubber, and tire.

In the present specification, the aforementioned biological resources (biomass resources) refer to carbon-neutral organic resources derived from living organisms, including, for example, those stored in the form of starch or cellulose, animal bodies that grow by eating plants, products obtained by processing plants or animals, and the like, and exclude resources such as fossil resources (petroleum, coal, natural gas, etc.). The biological resources may be edible or non-edible, but from the viewpoint of not competing with food and effective utilization of resources, non-edible resources are preferred.

Specific examples of the aforementioned biological resources include, for example, cellulose-based crops (pulp, kenaf, wheat straw, rice straw, waste paper, papermaking residues, etc.), wood, charcoal, compost, kitchen waste, plant oil cake, fishery residues, livestock excrement, food waste, sewage sludge, natural rubber, cotton, fats and oils (palm oil, castor oil, cottonseed oil, soybean oil, linseed oil, rapeseed oil, Cocos nucifera oil, peanut oil, tall oil, corn oil, rice bran oil, safflower oil, sesame oil, olive oil, sunflower oil, palm kernel oil, camellia oil, jojoba oil, macadamia nut oil, tung oil, coconut oil, etc.), carbohydrate-based crops (corn, wheat, rice, rice husk, rice bran, old rice, tubers, buckwheat, cassava, sago palm, sugarcane, etc.), bagasse (i.e., residue after juice extraction from sugarcane), soybeans, okara (soy pulp), essential oils (pine root oil, orange oil, eucalyptus oil, etc.), black liquor from pulp, algae, and the like. As the biological resources, processed products thereof (i.e., substances derived from biological resources) may also be used. Examples of processing methods include biological processing methods utilizing the action of microorganisms, plants, animals, or their tissue cultures; chemical processing methods utilizing acids, alkalis, catalysts, thermal energy, light energy, etc.; physical processing methods such as micronization, compression, microwave treatment, electromagnetic wave treatment, and the like. Furthermore, as the biological resources, substances extracted or purified from the aforementioned biological resources or processed biological resources (i.e., substances derived from biological resources) may also be used. For example, sugars, proteins, amino acids, fatty acids, fatty acid esters, etc., purified from the aforementioned biological resources may also be used. Examples of the sugars include sucrose, glucose, trehalose, fructose, lactose, galactose, xylose, allose, talose, gulose, altrose, mannose, idose, arabinose, apiose, maltose, cellulose, starch, chitin, etc., derived from biological resources. Examples of the proteins include compounds formed by linking amino acids (preferably L-amino acids) derived from biological resources, and oligopeptides such as dipeptides are also included. Examples of the amino acids include valine, leucine, isoleucine, arginine, lysine, asparagine, glutamine, phenylalanine, etc., derived from biological resources, among which valine, leucine, isoleucine, arginine, and phenylalanine are preferred. The amino acids may be L-amino acids or D-amino acids, but from the viewpoint of abundance in nature and ease of availability, L-amino acids are preferred. Examples of the fatty acids include butyric acid, palmitic acid, stearic acid, oleic acid, linoleic acid, linolenic acid, etc., derived from biological resources. Examples of the fatty acid esters include modified products of fats and oils derived from plants or animals, or fats and oils derived from biological resources. These biological resources may contain various materials and impurities.

In the present specification, the aforementioned recycled resources refer to resources obtained by recycling products that have been used once, collected without being used, or discarded. For example, as recycled resources, resources obtained by recycling used rubber products such as used tires can be mentioned.

### <Rubber Composition for Tread>

The rubber composition for tread of the present embodiment (hereinafter, sometimes referred to as "the rubber composition of the present embodiment") contains a rubber component (A), a resin component (B), a filler (C), and an antioxidant (D). In the rubber composition of the present embodiment, the rubber component (A) includes isoprene-based rubber, the content of the resin component (B) is not less than 1 part by mass and less than 50 parts by mass per 100 parts by mass of the rubber component (A), the resin component (B) is at least partially hydrogenated, and the difference in SP value between the resin component (B) and the isoprene-based rubber is not more than 1.40 (cal/cm³)^{1/2}, the following formula:$mass ratio of resin component \left(B\right) / isoprene - based rubber \geq 0.5$ is satisfied, and the antioxidant (D) is at least one selected from the group consisting of compounds represented by any of the above formula (1) to (10).

In the rubber composition for tread of the present embodiment, by compounding the resin component (B), which is at least partially hydrogenated and has a difference in SP value with the isoprene-based rubber of not more than 1.40 (cal/cm³)^{1/2}, in an amount of not less than 1 part by mass and less than 50 parts by mass per 100 parts by mass of the rubber component (A), it is possible to improve both the wet gripping performance and high fuel efficiency of a tire to which the rubber composition is applied.

Furthermore, in the rubber composition for tread of the present embodiment, by setting the mass ratio of the resin component (B) to the isoprene-based rubber to not less than 0.5, the wet gripping performance of a tire to which the rubber composition is applied can be further improved.

Moreover, the rubber composition for tread of the present embodiment, by including as the antioxidant (D) a compound represented by any of the above formula (1) to (10), can sufficiently ensure ozone resistance and suppress the occurrence of cracks.

Accordingly, the rubber composition for tread of the present embodiment, when applied to the tread portion of a tire, can achieve a high-level balance between wet gripping performance and high fuel efficiency of the tire, and can also suppress cracks in the tread portion of the tire.

### (Rubber Component (A))

The rubber composition of the present embodiment contains a rubber component (A), and the rubber component (A) imparts rubber elasticity to the composition. The rubber component (A) preferably has a sustainable ratio of not less than 30 mass%, more preferably not less than 40 mass%, even more preferably not less than 50 mass%, still more preferably not less than 60 mass%, yet more preferably not less than 70 mass%, further preferably not less than 80 mass%, even more preferably not less than 90 mass%, and particularly preferably 100 mass%.

Here, the "sustainable ratio" of the rubber component refers to the total mass ratio of components derived from biological resources (biomass resources) and components derived from recycled resources in the rubber component.

As the rubber component (A), rubber derived from biological resources and rubber derived from recycled resources are preferred.

Here, the proportion of monomer components derived from biological resources in 100 mol% of the monomer components constituting the rubber derived from biological resources is preferably not less than 50 mol%, more preferably not less than 70 mol%, even more preferably not less than 80 mol%, still more preferably not less than 90 mol%, particularly preferably not less than 95 mol%, and may be 100 mol%.

Also, the proportion of monomer components derived from recycled resources in 100 mol% of the monomer components constituting the rubber derived from recycled resources is preferably not less than 50 mol%, more preferably not less than 70 mol%, even more preferably not less than 80 mol%, still more preferably not less than 90 mol%, particularly preferably not less than 95 mol%, and may be 100 mol%.

The rubber component (A) is a component contributing to crosslinking, and usually has a weight-average molecular weight (Mw) of not less than 10,000, preferably not less than 50,000, more preferably not less than 150,000, still more preferably not less than 200,000, and preferably not more than 5,000,000, more preferably not more than 2,000,000, even more preferably not more than 1,500,000, and still more preferably not more than 1,300,000.

Note that, in the present specification, the weight-average molecular weight (Mw) of the rubber component (A) can be determined, for example, by gel permeation chromatography (GPC) (GPC-8000 series manufactured by Tosoh Corporation, detector: differential refractometer, column: TSKGEL SUPERMULTIPORE HZ-M manufactured by Tosoh Corporation) based on the measured value and calculated as polystyrene equivalent.

In the rubber composition of the present embodiment, the rubber component (A) includes isoprene-based rubber. Isoprene-based rubber refers to rubber containing units derived from isoprene as monomer units and is a type of diene rubber. By including isoprene-based rubber in the rubber component (A), the breaking strength of the rubber composition can be increased. As a result, the rolling resistance of a tire to which the rubber composition is applied can be reduced to improve high fuel efficiency, and the wear resistance performance of the tire can also be improved.

Examples of the isoprene-based rubber include natural rubber (NR), synthetic isoprene rubber (IR), upgraded natural rubber (upgraded NR), modified natural rubber (modified NR), and modified synthetic isoprene rubber (modified IR). As the natural rubber (NR), for example, generally used types in the tire industry such as RSS#3, TSR20 (for example, SIR20 or STR20), etc., can be used. The origin of the natural rubber (NR) is not particularly limited, and examples include those derived from the Para rubber tree, guayule, Russian dandelion, and the like. As the synthetic isoprene rubber (IR), it is not particularly limited, and generally used types in the tire industry such as IR2200 can be used. Examples of upgraded NR include deproteinized natural rubber (DPNR), high-purity natural rubber (UPNR), and the like. Examples of modified NR include epoxidized natural rubber (ENR), hydrogenated natural rubber (HNR), grafted natural rubber, and the like. Examples of modified IR include epoxidized synthetic isoprene rubber, hydrogenated synthetic isoprene rubber, grafted synthetic isoprene rubber, and the like. These isoprene-based rubbers may be used alone or in combination of two or more. Among these, NR is preferred as the isoprene-based rubber.

The isoprene-based rubber preferably has a sustainable ratio of not less than 30 mass%, more preferably not less than 40 mass%, even more preferably not less than 50 mass%, still more preferably not less than 60 mass%, yet more preferably not less than 70 mass%, further preferably not less than 80 mass%, even more preferably not less than 90 mass%, and particularly preferably 100 mass%.

To set the sustainable ratio of the isoprene-based rubber within the above range, it is preferable to use natural rubber (NR), or to use a polymer synthesized using isoprene derived from biological resources or recycled resources as the monomer component. In this case, the synthesized polymer may be a homopolymer of a monomer derived from biological resources, a homopolymer of a monomer derived from recycled resources, a copolymer of a monomer derived from biological resources and a monomer derived from recycled resources, or a copolymer of a monomer derived from biological resources and/or a monomer derived from recycled resources and a monomer derived from fossil resources (such as petroleum).

The content of the isoprene-based rubber is preferably 1 to 80 parts by mass, more preferably 1 to 40 parts by mass, per 100 parts by mass of the rubber component (A). When the content of isoprene-based rubber is 1 to 80 parts by mass per 100 parts by mass of the rubber component (A), both the high fuel efficiency and wet gripping performance of a tire to which the rubber composition is applied can be further improved. When the content of isoprene-based rubber is 1 to 40 parts by mass per 100 parts by mass of the rubber component (A), the high fuel efficiency and wet gripping performance of a tire to which the rubber composition is applied can be further enhanced. From the viewpoint of further increasing the effect of compounding isoprene-based rubber, the content of isoprene-based rubber is still more preferably not less than 10 parts by mass per 100 parts by mass of the rubber component (A).

In addition, in the rubber composition of the present embodiment, the rubber component (A) may further include butadiene-based rubber. Butadiene-based rubber refers to rubber containing units derived from butadiene as monomer units and is a type of diene-based rubber. Examples of the butadiene-based rubber include butadiene rubber (BR), aromatic vinyl compound-butadiene copolymer rubber (for example, styrene-butadiene copolymer rubber (SBR)), and the like. Here, the butadiene used as a raw material for the butadiene-based rubber is preferably derived from biological resources or recycled resources.

Examples of the butadiene rubber (BR) include high-cis butadiene rubber, low-cis butadiene rubber, butadiene rubber containing syndiotactic polybutadiene crystals, and the like. The high-cis butadiene rubber preferably has a cis-1,4 bond content of not less than 90 mass%. When the rubber component (A) contains butadiene rubber, the content of the butadiene rubber is preferably in the range of 1 to 35 parts by mass per 100 parts by mass of the rubber component.

As the butadiene rubber (BR), commercially available products can be used, and examples of such commercially available butadiene rubber products include those manufactured by UBE Elastomer Co., Ltd., ENEOS Materials Corporation, Asahi Kasei Corporation, Zeon Corporation, and the like. These butadiene rubbers may be used alone or in combination of two or more.

Examples of the aromatic vinyl compound-butadiene copolymer rubber (for example, SBR) include emulsion-polymerized aromatic vinyl compound-butadiene copolymer rubber (for example, emulsion-polymerized styrene-butadiene copolymer rubber (E-SBR)), solution-polymerized aromatic vinyl compound-butadiene copolymer rubber (for example, solution-polymerized styrene-butadiene copolymer rubber (S-SBR)), and the like. In the aromatic vinyl compound-butadiene copolymer rubber, examples of the aromatic vinyl compound (aromatic vinyl monomer) include styrene, vinyl naphthalene, divinyl naphthalene, and the like. These aromatic vinyl compounds may be used alone or in combination of two or more. Among these, styrene is preferred, and styrene derived from biological resources and styrene derived from recycled resources are particularly preferred. That is, SBR is preferred as the aromatic vinyl compound-butadiene copolymer rubber. The styrene may have a substituent. As the aromatic vinyl compound-butadiene copolymer rubber, commercially available products can be used, and examples of such commercially available products include those manufactured by Asahi Kasei Corporation, ENEOS Materials Corporation, Zeon Corporation, Sumitomo Chemical Co., Ltd., and the like. These aromatic vinyl compound-butadiene copolymer rubbers may be used alone or in combination of two or more.

It is preferable that the butadiene-based rubber has a sustainable content of 30 mass% or more, more preferably 40 mass% or more, even more preferably 50 mass% or more, still more preferably 60 mass% or more, yet more preferably 70 mass% or more, further preferably 80 mass% or more, even more preferably 90 mass% or more, and particularly preferably 100 mass%.

In order to set the sustainable content of the butadiene-based rubber within the above range, for example, it is sufficient to use a polymer synthesized using butadiene derived from biological resources, butadiene derived from recycled resources, aromatic vinyl compounds derived from biological resources (for example, styrene derived from biological resources), or aromatic vinyl compounds derived from recycled resources (for example, styrene derived from recycled resources) as monomer components. In this case, the synthesized polymer may be a homopolymer of a monomer derived from biological resources, a homopolymer of a monomer derived from recycled resources, a copolymer of a monomer derived from biological resources and a monomer derived from recycled resources, or a copolymer of a monomer derived from biological resources and/or a monomer derived from recycled resources and a monomer derived from fossil resources (such as petroleum). It should be noted that butadiene rubber (B-BR) derived from biological resources (biomass resources), and aromatic vinyl compound-butadiene copolymer rubber derived from biological resources (for example, styrene-butadiene rubber (B-SBR) derived from biological resources (biomass resources)), include not only rubber obtained by polymerizing butadiene or the like according to conventional methods, but also rubber obtained by reactions or enzymatic reactions using microorganisms, plants, animals, and tissue cultures thereof (hereinafter also referred to as "microorganisms, etc.").

In addition, in order to set the sustainable content of the entire rubber component (A) within the above range, it is preferable to use, as the rubber component (A), natural rubber (NR) as described above, or a polymer synthesized using monomer components derived from biological resources or monomer components derived from recycled resources as monomer components.

Generally, materials (rubber and its monomers, fillers, resins, etc.) for rubber compositions for tires require large-scale manufacturing equipment for their production, and are usually produced at large factories in specific regions, requiring a great deal of energy for storage and transportation of raw materials and products. In contrast, materials derived from biological resources (biomass resources) originate from agricultural products, forests, etc. in each region, and can also be produced on a small scale by fermentation of microorganisms or catalytic reactions, so by utilizing local products or waste, it is possible to reduce the energy required for transportation and storage of raw materials, and furthermore, to reduce the energy required for transportation and storage of the manufactured materials to tire factories, thereby being environmentally friendly. In addition, materials derived from recycled resources can be obtained, for example, by dismantling and pyrolyzing used tires to extract materials constituting the tire such as rubber, filler, steel cord, etc. Furthermore, sulfur can be obtained from biological resources or processed products thereof by a method including a desulfurization step for removing sulfur-containing substances from the biological resource or processed product thereof, a recovery step for recovering sulfur from the desulfurization treatment residue generated in the desulfurization step, and a processing step for processing the recovered sulfur into sulfur for vulcanization (for example, the method described in Japanese Patent Application No. 2022-140390), and thus materials for rubber compositions for tires can be obtained from various wastes or used articles. In this way, by using sustainable materials (materials derived from biological resources or materials derived from recycled resources), it is possible to comprehensively reduce environmental impact in tire manufacturing, such as reduction of carbon dioxide emissions over the entire life cycle (LCCO2), reduction of energy consumption over the entire life cycle (LCE), reduction of costs generated over the entire life cycle (LCC), and reduction of fossil resource usage.

Furthermore, when manufacturing the rubber composition, it is possible to appropriately select the ratio of monomer components derived from biological resources, monomer components derived from recycled resources, and monomer components derived from fossil resources according to the supply situation of biological resources, recycled resources, and fossil resources (for example, monomer components derived from fossil resources) and/or market demands (for example, demand for biological resources as food), and by polymerizing monomer components derived from biological resources, monomer components derived from recycled resources, and monomer components derived from fossil resources, it is possible to obtain rubber derived from sustainable materials (materials derived from biological resources or materials derived from recycled resources) having performance equivalent to that when conventional synthetic rubber is used. It should be noted that when using monomer components derived from recycled resources, it may be difficult to separate them from monomer components derived from fossil resources due to reasons in the manufacturing process of the monomer. In such cases, the environmental impact can be evaluated by adopting the concept of mass balance.

The ratio of each monomer unit (for example, units derived from isoprene, units derived from butadiene, units derived from aromatic vinyl compounds) in the entire rubber component (A) can be appropriately adjusted. The ratio of each monomer unit in the entire rubber component (A) can be adjusted, for example, by appropriately combining the above-described isoprene-based rubber and butadiene-based rubber. In addition, the ratio of cis-bond units among the units derived from butadiene can also be appropriately adjusted.

It should be noted that, in the present specification, "monomer unit" means a structural unit of a polymer, "unit derived from isoprene" means a structural unit in a polymer constructed based on isoprene as a monomer (including isoprene units in natural rubber), "unit derived from butadiene" means a structural unit in a polymer constructed based on butadiene as a monomer, and "unit derived from aromatic vinyl compound" means a structural unit in a polymer constructed based on an aromatic vinyl compound as a monomer.

In addition, in the present specification, the ratio of each monomer unit is measured by NMR.

The rubber component (A) may include, in addition to the above-described isoprene-based rubber, butadiene rubber (BR), and aromatic vinyl compound-butadiene copolymer rubber (for example, SBR), diene-based rubbers such as acrylonitrile-butadiene rubber (NBR), chloroprene rubber (CR), butyl rubber (IIR), and styreneisoprene-butadiene copolymer rubber (SIBR). The rubber component (A) may also include halogenated butyl rubber, ethylene-propylene rubber (EPR, EPDM), fluororubber, silicone rubber, urethane rubber, and the like. These rubber components may be used alone or in combination of two or more kinds. Among these, diene-based rubbers such as butadiene rubber (BR) and chloroprene rubber (CR) are preferable, and butadiene rubber (BR) is more preferable.

The rubber component (A) may be modified to introduce functional groups that interact with fillers such as carbon black and silica. Examples of such functional groups include an amino group, amide group, isocyanate group, imino group, imidazole group, urea group, ammonium group, imide group, hydrazo group, azo group, diazo group, carboxyl group, nitrile group, pyridyl group, alkoxy group, hydroxyl group, oxy group, epoxy group, ether group, carbonyl group, oxycarbonyl group, silyl group, alkoxy silyl group, mercapto group, sulfide group, disulfide group, sulfonyl group, sulfinyl group, thiocarbonyl group, and the like, and these functional groups may have substituents. These functional groups may be introduced into the rubber component alone or in combination of two or more kinds. Among these, an amino group, alkoxy group, and alkoxy silyl group are preferable, and a substituted amino group in which a hydrogen atom of the amino group is substituted with an alkyl group having 1 to 6 carbon atoms, alkoxy group having 1 to 6 carbon atoms, or alkoxy silyl group having 1 to 6 carbon atoms is more preferable.

The functional group can be introduced, for example, by reacting a compound (modifier) having the functional group with the rubber component. The functional group is a modifying functional group having interaction with fillers such as silica and carbon black, and examples include nitrogen-containing functional groups, siliconcontaining functional groups, oxygen-containing functional groups, and the like. Examples of compounds (modifiers) having nitrogen-containing functional groups include amino group-containing compounds, examples of compounds (modifiers) having siliconcontaining functional groups include silicon halides, hydrocarbyloxy silane compounds, and the like, and examples of compounds (modifiers) having oxygen-containing functional groups include alkoxy group-containing compounds, alkylene oxide group-containing compounds, trialkylsilyloxy group-containing compounds, and the like. More specifically, compounds described in International Publication No. 2016/194316 and International Publication No. 2019/117256 can be mentioned. These modifiers may be used alone or in combination of two or more kinds.

The rubber derived from sustainable materials (materials derived from biological resources or materials derived from recycled resources) can be produced, for example, by using monomer components derived from biological resources or monomer components derived from recycled resources, and, if necessary, monomer components derived from fossil resources, in the same manner as the conventional method for producing synthetic rubber derived from fossil resources. In addition, the rubber derived from sustainable materials (particularly, rubber derived from biological resources) can also be obtained by reactions or enzymatic reactions using microorganisms, etc.

As a method for preparing rubber derived from biological resources from the above-described biological resources, for example, the method described in JP 2022-179158 A can be used. For example, by using butadiene obtained from biological resources as a monomer component, butadiene rubber (B-BR) derived from biological resources (biomass resources) can be obtained, and by using styrene obtained from biological resources and butadiene obtained from biological resources as monomer components, styrene-butadiene rubber (B-SBR) derived from biological resources (biomass resources) can be obtained. Here, as methods for obtaining B-BR and B-SBR from biological resources, in addition to artificial polymerization methods, methods of polymerization in vivo, methods of polymerization using bio-derived enzymes, and the like can be mentioned. The molecular weight, branching, microstructure, etc., of the obtained B-BR and B-SBR can be appropriately adjusted by changing the polymerization conditions according to known methods in accordance with the desired tire performance.

As butadiene obtained from biological resources, butadiene derived from alkyl alcohols (preferably ethanol and butanol, more preferably butanol), butadiene derived from alkenes (preferably ethylene), and butadiene derived from unsaturated carboxylic acids (preferably tiglic acid) can be suitably used. These butadienes may be used in combination of two or more kinds.

In addition, as styrene obtained from biological resources, styrene obtained from plants (preferably plants belonging to the Hamamelidaceae, Styracaceae, or Apocynaceae families, more preferably plants belonging to the Liquidambar, Styrax, or Catharanthus genera, and even more preferably Liquidambar styraciflua, Styrax japonicus, or Catharanthus roseus), and styrene obtained from microorganisms (preferably microorganisms belonging to the genus Penicillium or Escherichia, more preferably P. citrinum or transformed E. coli) can be suitably used. These styrenes may also be used in combination of two or more kinds.

Recently, biomass complexes centered on bioethanol and bioethylene are being planned, but bioethanol and bioethylene are produced mainly using saccharides and/or cellulose as biological resources, and cannot effectively utilize other biological resources such as proteins, lipids, amino acids, etc. Furthermore, saccharides compete with food, and excessive use of cellulose leads to deforestation. Therefore, in addition to the supply situation of various biological resources, the supply situation of recycled resources, the supply situation of fossil resources, and market demands (for example, demand for biomass resources as food), it is preferable to use a plurality of kinds of monomer components derived from biological resources as the monomer components derived from biological resources, or to use monomer components derived from biological resources, monomer components derived from recycled resources, and monomer components derived from fossil resources in combination, and further to appropriately adjust the ratio of these monomer components for use. In this way, it is possible to effectively utilize a wide range of biological resources such as sugars, proteins, lipids, etc., and recycled resources without relying on a single biological resource, to stably supply rubber derived from sustainable materials, and furthermore, to take environmental considerations according to the situation at the time of production.

It should be noted that when using a plurality of kinds of monomer components derived from biological resources, it is preferable to use monomer components derived from different biological resources, that is, monomer components obtained from different biological resources. Specifically, as butadiene derived from biological resources, it is preferable to use a mixture of a plurality of kinds of butadiene derived from different biological resources, and/or as styrene derived from biological resources, it is preferable to use a mixture of a plurality of kinds of styrene derived from different biological resources. In this way, it is possible to effectively utilize a plurality of kinds of biological resources.

In the rubber composition of the present embodiment, it is preferable that the rubber component (A) further includes styrene-butadiene rubber (SBR), which is one kind of butadiene-based rubber. By including styrene-butadiene rubber (SBR) in addition to the above-described isoprene-based rubber as the rubber component (A), it is possible to improve the wear resistance performance of a tire to which the rubber composition is applied.

It is preferable that the styrene-butadiene rubber has a glass transition temperature of lower than -40°C. By including, as the rubber component (A), styrene-butadiene rubber having a glass transition temperature of lower than -40°C in addition to the above-described isoprene-based rubber, the dispersibility of the filler (C) is improved, and it is possible to further improve the high fuel efficiency and wear resistance performance of a tire to which the rubber composition is applied. From the viewpoint of further improving the high fuel efficiency of the tire, the glass transition temperature of the styrene-butadiene rubber is more preferably -45°C or lower, and even more preferably -50°C or lower.

In addition, it is preferable that the styrene-butadiene rubber has a glass transition temperature higher than -90°C. Styrene-butadiene rubber having a glass transition temperature higher than -90°C is easy to synthesize.

The content of the styrene-butadiene rubber is preferably 20 to 99 parts by mass, more preferably 30 to 99 parts by mass, even more preferably 40 to 99 parts by mass, still more preferably 50 to 99 parts by mass, and further preferably 60 to 99 parts by mass, per 100 parts by mass of the rubber component (A). When the content of the styrene-butadiene rubber is 60 to 99 parts by mass per 100 parts by mass of the rubber component (A), it is possible to further improve the high fuel efficiency and wet gripping performance of a tire to which the rubber composition is applied.

It is preferable that the difference in SP value between the styrene-butadiene rubber and the isoprene-based rubber is 0.3 (cal/cm³)^{1/2} or more, and more preferably 0.35 (cal/cm³)^{1/2} or more. When the difference in SP value between the styrene-butadiene rubber and the isoprene-based rubber is 0.3 (cal/cm³)^{1/2} or more, the styrene-butadiene rubber and the isoprene-based rubber tend to be incompatible.

It is preferable that the bound styrene content of the styrene-butadiene rubber is less than 15 mass%. The bound styrene content of the styrene-butadiene rubber means the proportion of styrene units contained in the styrene-butadiene rubber. When the bound styrene content of the styrene-butadiene rubber is less than 15 mass%, the glass transition temperature tends to be lower. The bound styrene content of the styrene-butadiene rubber is more preferably 14 mass% or less, even more preferably 13 mass% or less, and further preferably 12 mass% or less. From the viewpoint of wear resistance performance of a tire to which the rubber composition is applied, the bound styrene content of the styrene-butadiene rubber is preferably 5 mass% or more, more preferably 7 mass% or more, and further preferably 8 mass% or more.

The bound styrene content of the styrene-butadiene rubber can be adjusted by the amounts of monomers used for polymerization of the styrene-butadiene rubber, the degree of polymerization, and the like.

It is preferable that the styrene-butadiene rubber is modified with a modifier having a functional group containing a nitrogen atom and an alkoxy group. When the styrene-butadiene rubber is modified with a modifier having a functional group containing a nitrogen atom and an alkoxy group, the balance among wet gripping performance, high fuel efficiency, and wear resistance performance of a tire to which the rubber composition is applied is further improved, and in particular, high fuel efficiency and wear resistance performance can be further improved.

The modifier having a functional group containing a nitrogen atom and an alkoxy group is a generic term for modifiers having at least one functional group containing a nitrogen atom and at least one alkoxy group.

The functional group containing a nitrogen atom is preferably selected from the following:
straight chain, branched chain, alicyclic, and aromatic ring-containing monovalent hydrocarbon groups having 1 to 30 carbon atoms, and also straight chain, branched chain, alicyclic, and aromatic ring-containing monovalent hydrocarbon groups having 1 to 30 carbon atoms and optionally having at least one hetero atom selected from an oxygen atom, a sulfur atom, and a phosphorus atom, that include a functional group selected from the group consisting of a primary amino group, primary amino group protected by a hydrolyzable protecting group, onium salt residual group of a primary amine, isocyanate group, thioisocyanate group, imino group, imine, amide group, secondary amino group protected by a hydrolyzable protecting group, cyclic secondary amino group, onium salt residual group of a cyclic secondary amine, non-cyclic secondary amino group, onium salt residual group of a non-cyclic secondary amine, isocyanuric acid triester residual group, cyclic tertiary amino group, non-cyclic tertiary amino group, nitrile group, pyridyl group, onium salt residual group of a cyclic tertiary amine, and onium salt residual group of a non-cyclic tertiary amine.

### - Modified Styrene-Butadiene Rubber of the First Preferred Embodiment -

The styrene-butadiene rubber (SBR) is preferably modified with an aminoalkoxysilane compound, and from the viewpoint of having high affinity for the filler (C), it is more preferable that the terminal is modified with an aminoalkoxysilane compound.

When the terminal of the styrene-butadiene rubber is modified with an aminoalkoxysilane compound, the interaction between the modified styrene-butadiene rubber and the filler (C) (particularly, silica) becomes especially strong.

The modified site of the styrene-butadiene rubber may be the molecular terminal as described above, or may be the main chain.

The styrene-butadiene rubber whose molecular terminal is modified can be produced, for example, by reacting various modifiers with the terminal of a styrene-butadiene copolymer having an active terminal, according to the method described in International Publication No. 2003/046020 and JP 2007-217562 A.

In one preferred embodiment, the styrene-butadiene rubber whose molecular terminal is modified can be produced by reacting an aminoalkoxysilane compound with the terminal of a styrene-butadiene copolymer having an active terminal with a cis-1,4 bond content of 75% or more, according to the method described in International Publication No. 2003/046020 and JP 2007-217562 A, and then stabilizing by reacting with a carboxylic acid partial ester of a polyhydric alcohol.

The carboxylic acid partial ester of a polyhydric alcohol refers to an ester of a polyhydric alcohol and a carboxylic acid, and means a partial ester having at least one hydroxyl group.

Specifically, esters of sugars or modified sugars having 4 or more carbon atoms and fatty acids are preferably used.

More preferably, these esters are: (1) partial esters of polyhydric alcohols and fatty acids, particularly partial esters (monoesters, diesters, or triesters) of saturated or unsaturated higher fatty acids having 10 to 20 carbon atoms and polyhydric alcohols; and (2) ester compounds in which partial esters of polycarboxylic acids and higher alcohols are bonded to 1 to 3 polyhydric alcohols.

As the polyhydric alcohol used as a raw material for the partial ester, preferably, sugars having 5 or 6 carbon atoms and at least three hydroxyl groups (which may or may not be hydrogenated), glycols, or polyhydroxy compounds are used.

As the raw material fatty acid, preferably, saturated or unsaturated fatty acids having 10 to 20 carbon atoms are used, for example, stearic acid, lauric acid, and palmitic acid.

Among the fatty acid partial esters of polyhydric alcohols, sorbitan fatty acid esters are preferred, and specifically, sorbitan monolaurate, sorbitan monopalmitate, sorbitan monostearate, sorbitan tristearate, sorbitan monooleate, and sorbitan trioleate can be mentioned.

The aminoalkoxysilane compound is not particularly limited, but an aminoalkoxysilane compound represented by the following general formula (i) is preferred.

R¹¹ₐ-Si-(OR¹²)₄₋ₐ ··· (i)

In general formula (i), R¹¹ and R¹² each independently represent a monovalent aliphatic hydrocarbon group having 1 to 20 carbon atoms or a monovalent aromatic hydrocarbon group having 6 to 18 carbon atoms, at least one of R¹¹ and R¹² is substituted with an amino group, a is an integer of 0 to 2, and when there are multiple OR¹² groups, each OR¹² may be the same or different, and the molecule does not contain an active proton.

As the aminoalkoxysilane compound, an aminoalkoxysilane compound represented by the following general formula (ii) is also preferred.

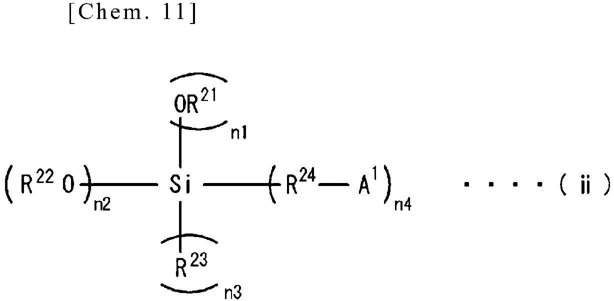

In general formula (ii), n1 + n2 + n3 + n4 = 4 (where n2 is an integer of 1 to 4, and n1, n3, and n4 are integers of 0 to 3).

A¹ is at least one functional group selected from the group consisting of a saturated cyclic tertiary amine compound residual group, unsaturated cyclic tertiary amine compound residual group, ketimine residual group, nitrile group, (thio)isocyanate group, isocyanuric acid trihydrocarbyl ester group, nitrile group, pyridyl group, (thio)ketone group, amide group, and primary or secondary amino group having a hydrolyzable group. When n4 is 2 or more, A¹ may be the same or different, and A¹ may be a divalent group forming a cyclic structure with Si.

R²¹ is a monovalent aliphatic or alicyclic hydrocarbon group having 1 to 20 carbon atoms or a monovalent aromatic hydrocarbon group having 6 to 18 carbon atoms, and when n1 is 2 or more, they may be the same or different.

R²² is a monovalent aliphatic or alicyclic hydrocarbon group having 1 to 20 carbon atoms or a monovalent aromatic hydrocarbon group having 6 to 18 carbon atoms, and may contain a nitrogen atom and/or a silicon atom. When n2 is 2 or more, R²² may be the same or different, or may together form a ring.

R²³ is a monovalent aliphatic or alicyclic hydrocarbon group having 1 to 20 carbon atoms, a monovalent aromatic hydrocarbon group having 6 to 18 carbon atoms, or a halogen atom, and when n3 is 2 or more, they may be the same or different.

R²⁴ is a divalent aliphatic or alicyclic hydrocarbon group having 1 to 20 carbon atoms or a divalent aromatic hydrocarbon group having 6 to 18 carbon atoms, and when n4 is 2 or more, they may be the same or different.

As the hydrolyzable group in the primary or secondary amino group having a hydrolyzable group, a trimethylsilyl group or tert-butyldimethylsilyl group is preferred, and a trimethylsilyl group is particularly preferred.

The aminoalkoxysilane compound represented by the above general formula (ii) is preferably an aminoalkoxysilane compound represented by the following general formula (iii).

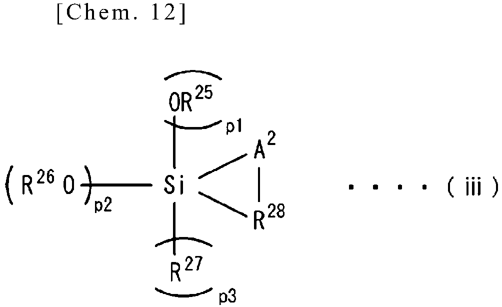

**In** general formula (iii), p1 + p2 + p3 = 2 (where p2 is an integer of 1 to 2, and p1 and p3 are integers of 0 to 1).

A² is NR^{a} (where R^{a} is a monovalent hydrocarbon group, hydrolyzable group, or nitrogen-containing organic group).

R²⁵ is a monovalent aliphatic or alicyclic hydrocarbon group having 1 to 20 carbon atoms or a monovalent aromatic hydrocarbon group having 6 to 18 carbon atoms.

R²⁶ is a monovalent aliphatic or alicyclic hydrocarbon group having 1 to 20 carbon atoms, a monovalent aromatic hydrocarbon group having 6 to 18 carbon atoms, or a nitrogen-containing organic group, and may contain a nitrogen atom and/or a silicon atom. When p2 is 2, R²⁶ may be the same or different, or may together form a ring.

R²⁷ is a monovalent aliphatic or alicyclic hydrocarbon group having 1 to 20 carbon atoms, a monovalent aromatic hydrocarbon group having 6 to 18 carbon atoms, or a halogen atom.

R²⁸ is a divalent aliphatic or alicyclic hydrocarbon group having 1 to 20 carbon atoms or a divalent aromatic hydrocarbon group having 6 to 18 carbon atoms.

As the hydrolyzable group, a trimethylsilyl group or tert-butyldimethylsilyl group is preferred, and a trimethylsilyl group is particularly preferred.

The aminoalkoxysilane compound represented by the above general formula (ii) is also preferably an aminoalkoxysilane compound represented by the following general formula (iv) or the following general formula (v).

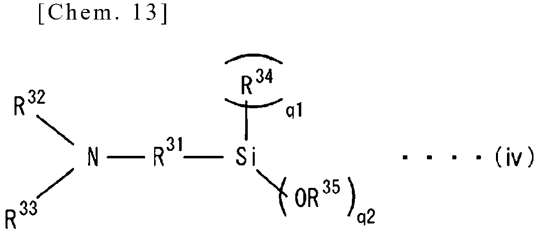

In general formula (iv), q1 + q2 = 3 (where q1 is an integer of 0 to 2, and q2 is an integer of 1 to 3).

R³¹ is a divalent aliphatic or alicyclic hydrocarbon group having 1 to 20 carbon atoms or a divalent aromatic hydrocarbon group having 6 to 18 carbon atoms.

R³² and R³³ each independently represent a hydrolyzable group, a monovalent aliphatic or alicyclic hydrocarbon group having 1 to 20 carbon atoms, or a monovalent aromatic hydrocarbon group having 6 to 18 carbon atoms.

R³⁴ is a monovalent aliphatic or alicyclic hydrocarbon group having 1 to 20 carbon atoms or a monovalent aromatic hydrocarbon group having 6 to 18 carbon atoms, and when q1 is 2, they may be the same or different.

R³⁵ is a monovalent aliphatic or alicyclic hydrocarbon group having 1 to 20 carbon atoms or a monovalent aromatic hydrocarbon group having 6 to 18 carbon atoms, and when q2 is 2 or more, they may be the same or different.

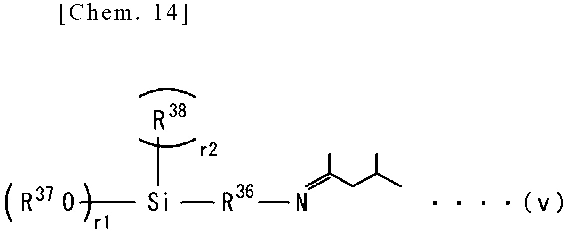

In general formula (v), r1 + r2 = 3 (where r1 is an integer of 1 to 3, and r2 is an integer of 0 to 2).

R³⁶ is a divalent aliphatic or alicyclic hydrocarbon group having 1 to 20 carbon atoms or a divalent aromatic hydrocarbon group having 6 to 18 carbon atoms.

R³⁷ is a dimethylaminomethyl group, dimethylaminoethyl group, diethylaminomethyl group, diethylaminoethyl group, methylsilyl(methyl)aminomethyl group, methylsilyl(methyl)aminoethyl group, methylsilyl(ethyl)aminomethyl group, methylsilyl(ethyl)aminoethyl group, dimethylsilylaminomethyl group, dimethylsilylaminoethyl group, a monovalent aliphatic or alicyclic hydrocarbon group having 1 to 20 carbon atoms, or a monovalent aromatic hydrocarbon group having 6 to 18 carbon atoms, and when r1 is 2 or more, they may be the same or different.

R³⁸ is a hydrocarbyloxy group having 1 to 20 carbon atoms, a monovalent aliphatic or alicyclic hydrocarbon group having 1 to 20 carbon atoms, or a monovalent aromatic hydrocarbon group having 6 to 18 carbon atoms, and when r2 is 2, they may be the same or different.

Specific examples of the aminoalkoxysilane compound represented by general formula (v) include N-(1,3-dimethylbutylidene)-3-triethoxysilyl-1-propanamine.

The aminoalkoxysilane compound represented by the above general formula (ii) is also preferably an aminoalkoxysilane compound represented by the following general formula (vi) or the following general formula (vii).

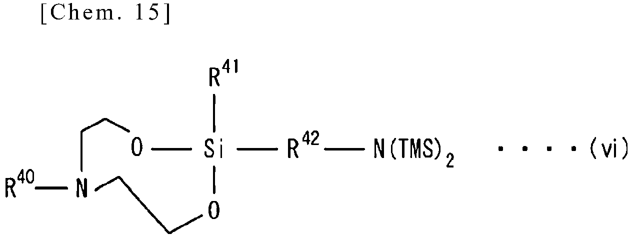

In general formula (vi), R⁴⁰ is a trimethylsilyl group, a monovalent aliphatic or alicyclic hydrocarbon group having 1 to 20 carbon atoms, or a monovalent aromatic hydrocarbon group having 6 to 18 carbon atoms.

R⁴¹ is a hydrocarbyloxy group having 1 to 20 carbon atoms, a monovalent aliphatic or alicyclic hydrocarbon group having 1 to 20 carbon atoms, or a monovalent aromatic hydrocarbon group having 6 to 18 carbon atoms.

R⁴¹ is a divalent aliphatic or alicyclic hydrocarbon group having 1 to 20 carbon atoms or a divalent aromatic hydrocarbon group having 6 to 18 carbon atoms.

Here, TMS denotes a trimethylsilyl group (the same applies hereinafter).

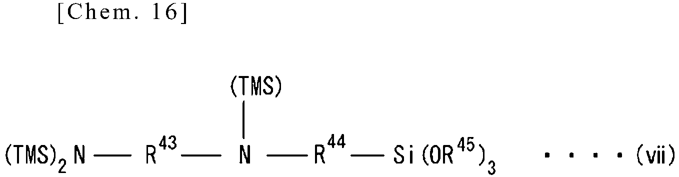

In general formula (vii), R⁴³ and R⁴⁴ each independently represent a divalent aliphatic or alicyclic hydrocarbon group having 1 to 20 carbon atoms or a divalent aromatic hydrocarbon group having 6 to 18 carbon atoms.

R⁴⁵ is a monovalent aliphatic or alicyclic hydrocarbon group having 1 to 20 carbon atoms or a monovalent aromatic hydrocarbon group having 6 to 18 carbon atoms, and each R⁴⁵ may be the same or different.

The aminoalkoxysilane compound represented by the above general formula (ii) is also preferably an aminoalkoxysilane compound represented by the following general formula (viii) or the following general formula (ix).

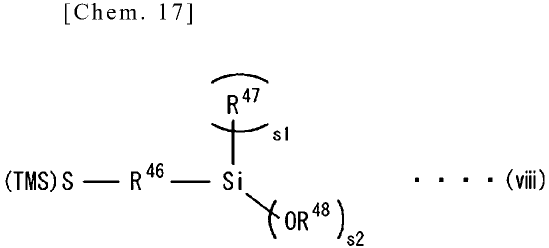

In general formula (viii), s1 + s2 = 3 (where s1 is an integer of 0 to 2, and s2 is an integer of 1 to 3).

R⁴⁶ is a divalent aliphatic or alicyclic hydrocarbon group having 1 to 20 carbon atoms or a divalent aromatic hydrocarbon group having 6 to 18 carbon atoms.

R⁴⁷ and R⁴⁸ each independently represent a monovalent aliphatic or alicyclic hydrocarbon group having 1 to 20 carbon atoms or a monovalent aromatic hydrocarbon group having 6 to 18 carbon atoms. A plurality of R⁴⁷ or R⁴⁸ may be the same or different.

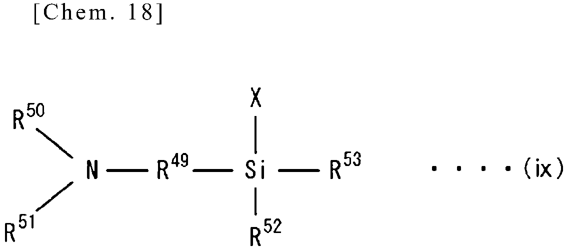

In general formula (ix), X is a halogen atom.

R⁴⁹ is a divalent aliphatic or alicyclic hydrocarbon group having 1 to 20 carbon atoms or a divalent aromatic hydrocarbon group having 6 to 18 carbon atoms.

R⁵⁰ and R⁵¹ each independently represent a hydrolyzable group, a monovalent aliphatic or alicyclic hydrocarbon group having 1 to 20 carbon atoms, or a monovalent aromatic hydrocarbon group having 6 to 18 carbon atoms, or R⁵⁰ and R⁵¹ are bonded together to form a divalent organic group.

R⁵² and R⁵³ each independently represent a halogen atom, a hydrocarbyloxy group, a monovalent aliphatic or alicyclic hydrocarbon group having 1 to 20 carbon atoms, or a monovalent aromatic hydrocarbon group having 6 to 18 carbon atoms.

As R⁵⁰ and R⁵¹, a hydrolyzable group is preferred, and as the hydrolyzable group, a trimethylsilyl group or tert-butyldimethylsilyl group is preferred, with a trimethylsilyl group being particularly preferred.

The aminoalkoxysilane compound represented by the above general formula (ii) is also preferably an aminoalkoxysilane compound represented by the following general formula (x), the following general formula (xi), the following general formula (xii), or the following general formula (xiii).

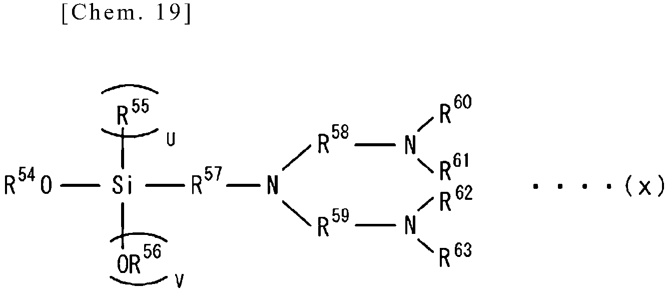

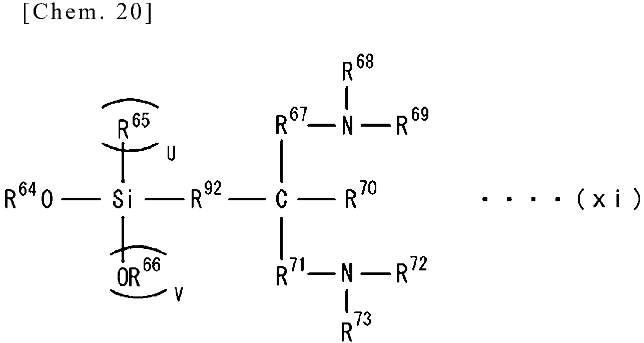

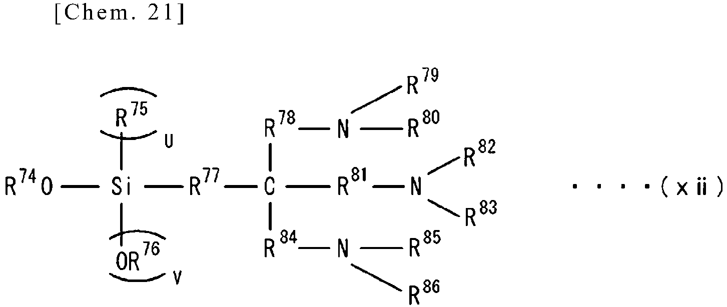

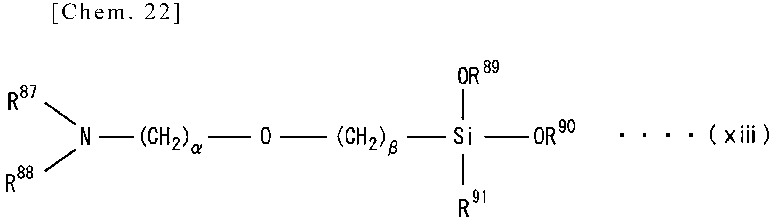

In general formulas (x) to (xiii), the symbols U and V are each integers of 0 to 2 satisfying U + V = 2.

R⁵⁴ to R⁹² in general formulas (x) to (xiii) may be the same or different, and are a monovalent or divalent aliphatic or alicyclic hydrocarbon group having 1 to 20 carbon atoms, or a monovalent or divalent aromatic hydrocarbon group having 6 to 18 carbon atoms.

In general formula (xiii), α and β are integers of 0 to 5.

Among the compounds satisfying general formulas (x), (xi), and (xii), particularly preferred are N1,N1,N7,N7-tetramethyl-4-((trimethoxysilyl)methyl)heptane-1,7-diamine; 2-((hexyldimethoxysilyl)methyl)-N1,N1,N3,N3-2-pentamethylpropane-1,3-diamine; N1-(3-(dimethylamino)propyl)-N3,N3-dimethyl-N1-(3-(trimethoxysilyl)propyl)propane-1,3-diamine; and 4-(3-(dimethylamino)propyl)-N1,N1,N7,N7-tetramethyl-4-((trimethoxysilyl)methyl)heptane-1,7-diamine.

Among the compounds satisfying general formula (xiii), particularly preferred are N,N-dimethyl-2-(3-(dimethoxymethylsilyl)propoxy)ethanamine; N,N-bis(trimethylsilyl)-2-(3-(trimethoxysilyl)propoxy)ethanamine; N,N-dimethyl-2-(3-(trimethoxysilyl)propoxy)ethanamine; and N,N-dimethyl-3-(3-(trimethoxysilyl)propoxy)propan-1-amine.

### - Modified Styrene-Butadiene Rubber of the Second Preferred Embodiment -

The styrene-butadiene rubber (SBR) is also preferably modified with a coupling agent represented by the following general formula (I). In this case, the high fuel efficiency and wear resistance performance of a tire to which the rubber composition is applied can be further improved.

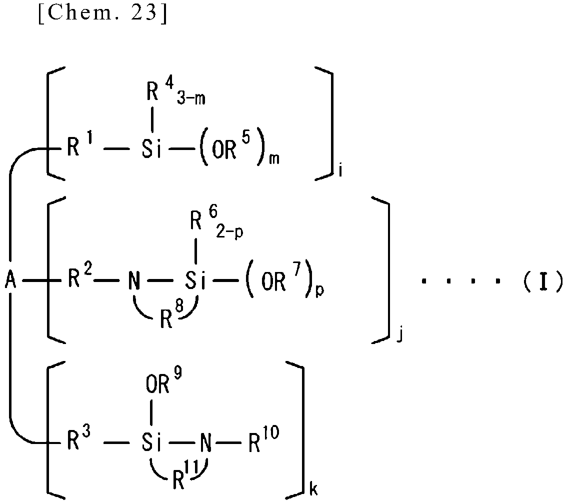

In general formula (I), R¹, R², and R³ each independently represent a single bond or an alkylene group having 1 to 20 carbon atoms.

R⁴, R⁵, R⁶, R⁷, and R⁹ each independently represent an alkyl group having 1 to 20 carbon atoms.

R⁸ and R¹¹ each independently represent an alkylene group having 1 to 20 carbon atoms.

R¹⁰ represents an alkyl group or trialkylsilyl group having 1 to 20 carbon atoms.

m is an integer of 1 to 3, and p is 1 or 2.

When there are multiple R¹ to R¹¹, m, and p, each is independent.

i, j, and k each independently represent an integer of 0 to 6, provided that (i + j + k) is an integer of 3 to 10.

"A" represents an organic group having at least one atom selected from the group consisting of hydrocarbon group having 1 to 20 carbon atoms, oxygen atom, nitrogen atom, silicon atom, sulfur atom, and phosphorus atom, and not having active hydrogen.

Here, the hydrocarbon group represented by A in general formula (I) includes saturated, unsaturated, aliphatic, and aromatic hydrocarbon groups. Examples of the organic group not having active hydrogen include organic groups not having functional groups with active hydrogen such as a hydroxyl group (-OH), secondary amino group (>NH), primary amino group (-NH₂), and sulfhydryl group (-SH).

The styrene-butadiene rubber modified with the coupling agent represented by the above general formula (I) preferably has a weight-average molecular weight (Mw) of 20×10⁴ to 300×10⁴, contains, relative to the total amount of the modified styrene-butadiene rubber, 0.25 to 30 mass% of modified styrene-butadiene rubber having a molecular weight of 200×10⁴ to 500×10⁴, and has a contracting factor (g') of less than 0.64.

In general, when a polymer has branching, its molecular size tends to be smaller compared to a linear polymer of the same absolute molecular weight, and the above contracting factor (g') is an index indicating the ratio of the molecular size relative to a hypothetical linear polymer of the same absolute molecular weight. That is, as the degree of branching of the polymer increases, the contracting factor (g') tends to decrease. In the present embodiment, intrinsic viscosity is used as an index of molecular size, and the linear polymer is used as one that follows the relationship of intrinsic viscosity [η] = -3.883M^{0.771}. The contracting factor (g') at each absolute molecular weight of the modified styrene-butadiene rubber is calculated, and the average value of the contracting factor (g') at an absolute molecular weight of 100×10⁴ to 200×10⁴ is defined as the contracting factor (g') of the modified styrene-butadiene rubber. Here, "branching" refers to a structure formed by direct or indirect bonding of another polymer to one polymer. Further, "degree of branching" refers to the number of polymers that are directly or indirectly bonded to each other per one branch. For example, in the case where five styrene-butadiene copolymer chains, described later, are indirectly bonded to each other via a coupling residual group described later, the degree of branching is 5. The coupling residual group is a constituent unit of the modified styrene-butadiene rubber that is bonded to the styrene-butadiene copolymer chain, and is, for example, a structural unit derived from the coupling agent generated by reacting the styrene-butadiene copolymer described later with the coupling agent described later. The styrene-butadiene copolymer chain is a constituent unit of the modified styrene-butadiene rubber, and is, for example, a structural unit derived from the styrene-butadiene copolymer generated by reacting the styrene-butadiene copolymer described later with the coupling agent described later.

The contracting factor (g') is preferably less than 0.64, more preferably 0.63 or less, even more preferably 0.60 or less, still more preferably 0.59 or less, and most preferably 0.57 or less. The lower limit of the contracting factor (g') is not particularly limited and may be below the detection limit, but is preferably 0.30 or more, more preferably 0.33 or more, even more preferably 0.35 or more, and most preferably 0.45 or more. By using modified styrene-butadiene rubber having a contracting factor (g') within this range, the processability of the rubber composition is improved.

Since the contracting factor (g') tends to depend on the degree of branching, for example, the contracting factor (g') can be controlled using the degree of branching as an index. Specifically, when the modified styrene-butadiene rubber has a degree of branching of 6, the contracting factor (g') tends to be 0.59 or more and 0.63 or less, and when the degree of branching is 8, the contracting factor (g') tends to be 0.45 or more and 0.59 or less.

The styrene-butadiene rubber modified with the coupling agent represented by the above general formula (I) preferably has branching and a degree of branching of 5 or more. Further, the modified styrene-butadiene rubber preferably has one or more coupling residual groups and styrene-butadiene copolymer chains bonded to the coupling residual group, and more preferably includes branching in which 5 or more of the styrene-butadiene copolymer chains are bonded to one coupling residual group. By specifying the structure of the modified styrene-butadiene rubber so that the degree of branching is 5 or more and the branching includes branching in which 5 or more styrene-butadiene copolymer chains are bonded to one coupling residual group, the contracting factor (g') can be more reliably set to less than 0.64. The number of styrene-butadiene copolymer chains bonded to one coupling residual group can be confirmed from the value of the contracting factor (g').

Further, the modified styrene-butadiene rubber more preferably has branching and a degree of branching of 6 or more. The modified styrene-butadiene rubber preferably has one or more coupling residual groups and styrene-butadiene copolymer chains bonded to the coupling residual group, and more preferably includes branching in which 6 or more of the styrene-butadiene copolymer chains are bonded to one coupling residual group. By specifying the structure of the modified styrene-butadiene rubber so that the degree of branching is 6 or more and the branching includes branching in which 6 or more styrene-butadiene copolymer chains are bonded to one coupling residual group, the contracting factor (g') can be set to 0.63 or less.

Furthermore, the modified styrene-butadiene rubber even more preferably has branching and a degree of branching of 7 or more, and most preferably a degree of branching of 8 or more. The upper limit of the degree of branching is not particularly limited, but is preferably 18 or less. The modified styrene-butadiene rubber preferably has one or more coupling residual groups and styrene-butadiene copolymer chains bonded to the coupling residual group, and even more preferably includes branching in which 7 or more of the styrene-butadiene copolymer chains are bonded to one coupling residual group, and most preferably includes branching in which 8 or more of the styrene-butadiene copolymer chains are bonded to one coupling residual group. By specifying the structure of the modified styrene-butadiene rubber so that the degree of branching is 8 or more and the branching includes branching in which 8 or more styrene-butadiene copolymer chains are bonded to one coupling residual group, the contracting factor (g') can be set to 0.59 or less.

It is preferable that at least one terminal of the styrene-butadiene copolymer chain is bonded to a silicon atom possessed by the coupling residual group. In this case, the terminals of a plurality of styrene-butadiene copolymer chains may be bonded to one silicon atom. Further, the terminal of the styrene-butadiene copolymer chain and an alkoxy group having 1 to 20 carbon atoms or a hydroxyl group may be bonded to one silicon atom, and as a result, the one silicon atom may constitute an alkoxy silyl group having 1 to 20 carbon atoms or a silanol group.

The modified styrene-butadiene rubber may be an oil-extended rubber to which extender oil has been added. The modified styrene-butadiene rubber may be either non-oil-extended or oil-extended, but from the viewpoint of wear resistance, it is preferable that the Mooney viscosity measured at 100°C is 20 or more and 100 or less, and more preferably 30 or more and 80 or less.

The weight-average molecular weight (Mw) of the modified styrene-butadiene rubber is preferably 20×10⁴ or more and 300×10⁴ or less, more preferably 50×10⁴ or more, even more preferably 64×10⁴ or more, and still more preferably 80×10⁴ or more. The weight-average molecular weight is preferably 250×10⁴ or less, even more preferably 180×10⁴ or less, and most preferably 150×10⁴ or less. When the weight-average molecular weight is 20×10⁴ or more, the low loss property and wear resistance of the rubber composition can be sufficiently improved. When the weight-average molecular weight is 300×10⁴ or less, the processability of the rubber composition is improved.

The modified styrene-butadiene rubber preferably contains, relative to the total amount (100 mass%) of the modified styrene-butadiene rubber, 0.25 mass% or more and 30 mass% or less of modified styrene-butadiene rubber having a molecular weight of 200×10⁴ or more and 500×10⁴ or less (hereinafter also referred to as "specific high molecular weight component"). When the content of the specific high molecular weight component is 0.25 mass% or more and 30 mass% or less, the low loss property and wear resistance of the rubber composition can be sufficiently improved. The modified styrene-butadiene rubber preferably contains 1.0 mass% or more, more preferably 1.4 mass% or more, even more preferably 1.75 mass% or more, still more preferably 2.0 mass% or more, particularly preferably 2.15 mass% or more, and most preferably 2.5 mass% or more of the specific high molecular weight component. The modified styrene-butadiene rubber preferably contains 28 mass% or less, more preferably 25 mass% or less, even more preferably 20 mass% or less, and most preferably 18 mass% or less of the specific high molecular weight component.

Note that in the present specification, "molecular weight" of the rubber component refers to the polystyrene-equivalent molecular weight obtained by GPC (gel permeation chromatography). In order to obtain modified styrene-butadiene rubber having a content of the specific high molecular weight component within such a range, it is preferable to control the reaction conditions in the polymerization step and the reaction step described later. For example, in the polymerization step, the amount of the organic monolithium compound used as a polymerization initiator described later may be adjusted. In the polymerization step, regardless of whether the polymerization mode is continuous or batch, it is preferable to use a method having a residence time distribution, that is, to broaden the time distribution of the growth reaction.

In the modified styrene-butadiene rubber, the molecular weight distribution (Mw/Mn) expressed as the ratio of the weight-average molecular weight (Mw) to the number-average molecular weight (Mn) is preferably 1.6 or more and 3.0 or less. When the molecular weight distribution of the modified styrene-butadiene rubber is within this range, the processability of the rubber composition becomes favorable.

The method for producing the modified styrene-butadiene rubber is not particularly limited, but it is preferable to include a polymerization step in which butadiene and styrene are copolymerized using an organic monolithium compound as a polymerization initiator to obtain a styrene-butadiene copolymer, and a reaction step in which a reactive compound having 5 or more functionalities (hereinafter also referred to as "coupling agent") is reacted with the active terminal of the styrene-butadiene copolymer.

The polymerization step is preferably a polymerization by a growth reaction via living anionic polymerization, whereby a styrene-butadiene copolymer having an active terminal can be obtained, and a modified styrene-butadiene rubber with a high modification rate can be obtained.

The styrene-butadiene copolymer is obtained by copolymerizing 1,3-butadiene and styrene.

The amount of the organic monolithium compound used as the polymerization initiator is preferably determined according to the molecular weight of the target styrene-butadiene copolymer or modified styrene-butadiene rubber. The amount of monomer such as 1,3-butadiene or styrene relative to the amount of polymerization initiator is related to the degree of polymerization, that is, to the number-average molecular weight and/or weight-average molecular weight. Therefore, to increase the molecular weight, the amount of polymerization initiator may be adjusted in the direction of reduction, and to decrease the molecular weight, the amount of polymerization initiator may be adjusted in the direction of increase.

The organic monolithium compound is preferably an alkyl lithium compound from the viewpoint of industrial availability and ease of control of the polymerization reaction. In this case, a styrene-butadiene copolymer having an alkyl group at the polymerization initiation terminal can be obtained. Examples of the alkyl lithium compound include n-butyl lithium, sec-butyl lithium, tert-butyl lithium, n-hexyl lithium, benzyl lithium, phenyl lithium, and stilbene lithium. Among alkyl lithium compounds, n-butyl lithium and sec-butyl lithium are preferable from the viewpoint of industrial availability and ease of control of the polymerization reaction. These organic monolithium compounds may be used alone or in combination of two or more.

In the polymerization step, examples of the polymerization reaction mode include batch mode and continuous mode. In the continuous mode, one or two or more connected reactors can be used. As the continuous reactor, for example, a tank type with a stirrer or a tubular type can be used. In the continuous mode, it is preferable that monomer, inert solvent, and polymerization initiator are continuously fed into the reactor, a polymer solution containing the polymer is obtained in the reactor, and the polymer solution is continuously discharged. As the batch reactor, for example, a tank type with a stirrer can be used. In the batch mode, it is preferable that monomer, inert solvent, and polymerization initiator are fed, monomer is added continuously or intermittently during polymerization as necessary, a polymer solution containing the polymer is obtained in the reactor, and the polymer solution is discharged after completion of polymerization. In the present embodiment, in order to obtain a styrene-butadiene copolymer having a high proportion of active terminals, the continuous mode, which enables continuous discharge of the polymer and supply to the next reaction in a short time, is preferable.

The polymerization step is preferably carried out in an inert solvent. Examples of the solvent include hydrocarbon solvents such as saturated hydrocarbons and aromatic hydrocarbons. Specific examples of hydrocarbon solvents include, but are not limited to, aliphatic hydrocarbons such as butane, pentane, hexane, and heptane; alicyclic hydrocarbons such as cyclopentane, cyclohexane, methylcyclopentane, and methylcyclohexane; and aromatic hydrocarbons such as benzene, toluene, and xylene, and mixtures thereof. By treating impurities such as allenes and acetylenes with an organometallic compound before use in the polymerization reaction, a styrene-butadiene copolymer having a high concentration of active terminals tends to be obtained, and a modified styrene-butadiene rubber with a high modification rate tends to be obtained, which is preferable.

In the polymerization step, a polar compound may be added. By adding a polar compound, styrene can be randomly copolymerized with 1,3-butadiene, and the polar compound also tends to be usable as a vinylizing agent for controlling the microstructure of the 1,3-butadiene unit.

Examples of the polar compound include, but are not limited to, ethers such as tetrahydrofuran, diethyl ether, dioxane, ethylene glycol dimethyl ether, ethylene glycol dibutyl ether, diethylene glycol dimethyl ether, diethylene glycol dibutyl ether, dimethoxybenzene, and 2,2-bis(2-oxolanyl)propane; tertiary amine compounds such as tetramethylethylenediamine, dipiperidinoethane, trimethylamine, triethylamine, pyridine, and quinuclidine; alkali metal alkoxide compounds such as potassium tert-amylate, potassium tert-butylate, sodium tert-butylate, and sodium amylate; and phosphine compounds such as triphenylphosphine. These polar compounds may be used alone or in combination of two or more.

In the polymerization step, the polymerization temperature is preferably 0°C or higher from the viewpoint of productivity, more preferably 120°C or lower, and particularly preferably 50°C or higher and 100°C or lower. Within such a range, the amount of reaction of the coupling agent with the active terminal after completion of polymerization can be sufficiently ensured.

The content of bound butadiene in the styrene-butadiene copolymer or modified styrene-butadiene rubber is not particularly limited, but is preferably 40 mass% or more and 100 mass% or less, and more preferably 55 mass% or more and 80 mass% or less.

Further, the content of bound styrene in the styrene-butadiene copolymer or modified styrene-butadiene rubber is not particularly limited, but is preferably more than 0 mass% and 60 mass% or less, and more preferably 20 mass% or more and 45 mass% or less.

When the content of bound butadiene and bound styrene is within the above range, the low loss property and wear resistance performance of the rubber composition can be further improved.

Note that the content of bound styrene can be measured by ultraviolet absorption of the phenyl group, and from this, the content of bound butadiene can also be determined.

In the styrene-butadiene copolymer or modified styrene-butadiene rubber, the vinyl bond content in the butadiene bonded unit is not particularly limited, but is preferably 10 mol% or more and 75 mol% or less, and more preferably 20 mol% or more and 65 mol% or less. When the vinyl bond content is within the above range, the low loss property and wear resistance of the rubber composition can be further improved.

Note that for the modified styrene-butadiene rubber, the vinyl bond content (1,2-bond content) in the butadiene bonded unit can be determined by the method of Hampton [R. R. Hampton, Analytical Chemistry, 21, 923 (1949)].

The alkoxy silyl group possessed by the coupling agent represented by the above general formula (I) tends to react with the active terminal possessed by the styrene-butadiene copolymer, causing the alkoxy lithium to dissociate and forming a bond between the terminal of the styrene-butadiene copolymer chain and the silicon of the coupling residual group. The number of alkoxy silyl groups possessed by the coupling residual group is the value obtained by subtracting the number of SiOR groups reduced by the reaction from the total number of SiOR groups possessed by one molecule of the coupling agent. Further, the azasilacycle group possessed by the coupling agent forms a >N-Li bond and a bond between the terminal of the styrene-butadiene copolymer and the silicon of the coupling residual group. The >N-Li bond tends to readily become >NH and LiOH by water or the like during finishing. In addition, the unreacted alkoxy silyl group remaining in the coupling agent tends to readily become silanol (Si-OH group) by water or the like during finishing.

The reaction temperature in the aforementioned reaction step is preferably the same as the polymerization temperature of the styrene-butadiene copolymer, more preferably 0°C or higher and 120°C or lower, and even more preferably 50°C or higher and 100°C or lower. Further, the temperature change from the end of the polymerization step until the coupling agent is added is preferably 10°C or less, and more preferably 5°C or less.

The reaction time in the aforementioned reaction step is preferably 10 seconds or more, and more preferably 30 seconds or more. The time from the end of the polymerization step to the start of the reaction step is preferably as short as possible from the viewpoint of coupling ratio, and more preferably within 5 minutes.

Mixing in the reaction step may be performed by any method, such as mechanical stirring or stirring using a static mixer. When the polymerization step is continuous, it is preferable that the reaction step is also continuous. As the reactor in the reaction step, for example, a tank type with a stirrer or a tubular type can be used. The coupling agent may be diluted with an inert solvent and continuously supplied to the reactor. When the polymerization step is batch mode, the coupling agent may be added to the polymerization reactor, or the reaction step may be performed by transferring to another reactor.

In the aforementioned general formula (I), A is preferably represented by any of the following general formulas (II) to (V). By having A represented by any of the general formulas (II) to (V), it is possible to obtain a modified styrene-butadiene rubber with more excellent performance.

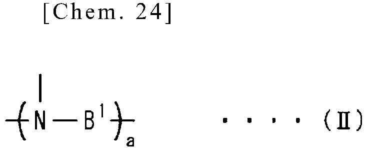

In the aforementioned general formula (II), B¹ represents a single bond or a hydrocarbon group having 1 to 20 carbon atoms, and a represents an integer of 1 to 10. When a plurality are present, B¹ are each independently selected.

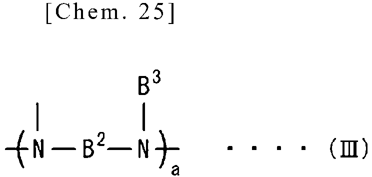

In the aforementioned general formula (III), B² represents a single bond or a hydrocarbon group having 1 to 20 carbon atoms, B³ represents an alkyl group having 1 to 20 carbon atoms, and a represents an integer of 1 to 10. When a plurality are present, B² and B³ are each independently selected.

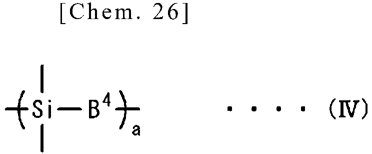

In the aforementioned general formula (IV), B⁴ represents a single bond or a hydrocarbon group having 1 to 20 carbon atoms, and a represents an integer of 1 to 10. When a plurality are present, B⁴ are each independently selected.

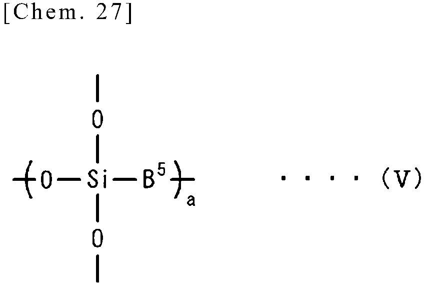

In the aforementioned general formula (V), B⁵ represents a single bond or a hydrocarbon group having 1 to 20 carbon atoms, and a represents an integer of 1 to 10. When a plurality are present, B⁵ are each independently selected.

Regarding B¹, B², B⁴, and B⁵ in the aforementioned general formulas (II) to (V), examples of the hydrocarbon group having 1 to 20 carbon atoms include alkylene groups having 1 to 20 carbon atoms.

Preferably, in the aforementioned general formula (I), A is represented by the aforementioned general formula (II) or (III), and k represents 0.

More preferably, in the aforementioned general formula (I), A is represented by the aforementioned general formula (II) or (III), k represents 0, and in the aforementioned general formula (II) or (III), a represents an integer of 2 to 10.

Even more preferably, in the aforementioned general formula (I), A is represented by the aforementioned general formula (II), k represents 0, and in the aforementioned general formula (II), a represents an integer of 2 to 10.

Examples of such coupling agents include bis(3-trimethoxysilylpropyl)-[3-(2,2-dimethoxy-1-aza-2-silacyclopentane)propyl]amine, tris(3-trimethoxysilylpropyl)amine, tris(3-triethoxysilylpropyl)amine, tris(3-trimethoxysilylpropyl)-[3-(2,2-dimethoxy-1-aza-2-silacyclopentane)propyl]-1,3-propanediamine, tetrakis[3-(2,2-dimethoxy-1-aza-2-silacyclopentane)propyl]-1,3-propanediamine, tetrakis(3-trimethoxysilylpropyl)-1,3-propanediamine, tetrakis(3-trimethoxysilylpropyl)-1,3-bisaminomethylcyclohexane, tris(3-trimethoxysilylpropyl)-methyl-1,3-propanediamine, bis[3-(2,2-dimethoxy-1-aza-2-silacyclopentane)propyl]-(3-trimethoxysilylpropyl)-methyl-1,3-propanediamine, and the like. Among these, tetrakis(3-trimethoxysilylpropyl)-1,3-propanediamine and tetrakis(3-trimethoxysilylpropyl)-1,3-bisaminomethylcyclohexane are particularly preferred.

The amount of the compound represented by the general formula (I) as the coupling agent can be adjusted so that the molar ratio of the styrene-butadiene copolymer to the coupling agent is reacted at a desired stoichiometric ratio, thereby tending to achieve a desired degree of branching. Specifically, the molar amount of the polymerization initiator is preferably 5.0 times molar or more, more preferably 6.0 times molar or more, relative to the molar amount of the coupling agent. In this case, in the general formula (I), the number of functional groups of the coupling agent ((m-1)×i + p×j + k) is preferably an integer of 5 to 10, and more preferably an integer of 6 to 10.

In order to obtain a modified styrene-butadiene rubber having the specific polymer component described above, the molecular weight distribution (Mw/Mn) of the styrene-butadiene copolymer is preferably 1.5 or more and 2.5 or less, and more preferably 1.8 or more and 2.2 or less. Further, it is preferable that the molecular weight curve by GPC of the obtained modified styrene-butadiene rubber detects a single peak.

When the peak molecular weight of the modified styrene-butadiene rubber by GPC is Mp₁ and the peak molecular weight of the styrene-butadiene copolymer is Mp₂, it is preferable that the following formula is satisfied. $\left({Mp}_{1}/{Mp}_{2}\right) < 1.8 \times {10}^{- 12} \times {\left({Mp}_{2}-120\times {10}^{4}\right)}^{2} + 2$

Mp₂ is more preferably 20×10⁴ or more and 80×10⁴ or less, and Mp₁ is more preferably 30×10⁴ or more and 150×10⁴ or less. Mp₁ and Mp₂ are determined by the method described in the examples below.

The modification ratio of the aforementioned modified styrene-butadiene rubber is preferably 30 mass% or more, more preferably 50 mass% or more, and even more preferably 70 mass% or more. By having a modification ratio of 30 mass% or more, the low loss property and wear resistance performance of the rubber composition can be further improved.

After the aforementioned reaction step, a deactivator, neutralizer, or the like may be added to the copolymer solution as necessary. The deactivator is not limited to the following, but examples include water; alcohols such as methanol, ethanol, isopropanol, and the like. The neutralizer is not limited to the following, but examples include carboxylic acids such as stearic acid, oleic acid, versatic acid (a highly branched carboxylic acid mixture having 9 to 11 carbon atoms, centered on 10 carbon atoms); aqueous solutions of inorganic acids, carbon dioxide gas, and the like.

Further, from the viewpoint of preventing gel formation after polymerization and improving stability during processing, it is preferable to add an antioxidant such as 2,6-di-tert-butyl-4-hydroxytoluene (BHT), n-octadecyl-3-(4'-hydroxy-3',5'-di-tert-butylphenyl)propionate, 2-methyl-4,6-bis[(octylthio)methyl]phenol, or the like to the modified styrene-butadiene rubber.

As a method for obtaining the aforementioned modified styrene-butadiene rubber from the polymer solution, a known method can be used. As such a method, for example, a method in which the solvent is separated by steam stripping or the like, the polymer is filtered, and further dehydrated and dried to obtain the polymer; a method in which the solution is concentrated in a flashing tank and further devolatilized with a vented extruder or the like; or a method in which devolatilization is performed directly with a drum dryer or the like can be mentioned.

The modified styrene-butadiene rubber obtained by reacting the coupling agent represented by the above general formula (I) with the styrene-butadiene copolymer is, for example, represented by the following general formula (VI).

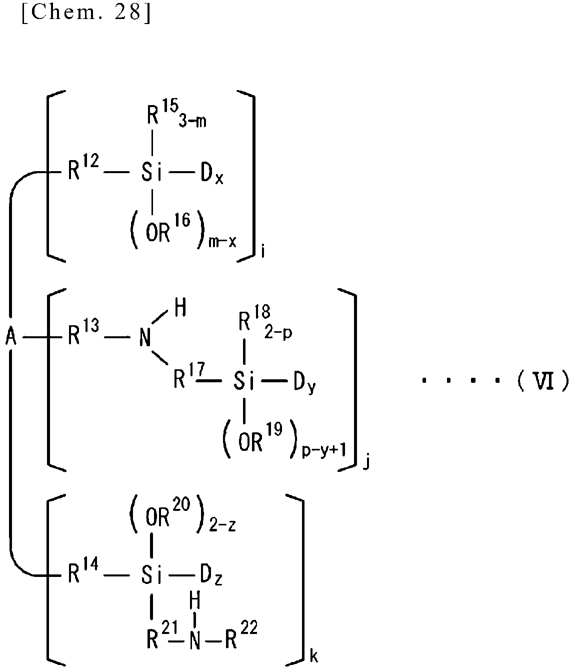

In the general formula (VI), D represents a styrene-butadiene copolymer chain, and the weight-average molecular weight of the styrene-butadiene copolymer chain is preferably 10×10⁴ to 100×10⁴. The styrene-butadiene copolymer chain is a constituent unit of the modified styrene-butadiene rubber, and is, for example, a structural unit derived from the styrene-butadiene copolymer generated by reacting the styrene-butadiene copolymer with the coupling agent.

R¹², R¹³, and R¹⁴ each independently represent a single bond or an alkylene group having 1 to 20 carbon atoms.

R¹⁵ and R¹⁸ each independently represent an alkyl group having 1 to 20 carbon atoms.

R¹⁶, R¹⁹, and R²⁰ each independently represent a hydrogen atom or an alkyl group having 1 to 20 carbon atoms.

R¹⁷ and R²¹ each independently represent an alkylene group having 1 to 20 carbon atoms.

R²² represents a hydrogen atom or an alkyl group having 1 to 20 carbon atoms.

m and x each represent an integer of 1 to 3, x≤m, p represents 1 or 2, y represents an integer of 1 to 3, y≤(p+1), and z represents an integer of 1 or 2.

When a plurality of D, R¹² to R²², m, p, x, y, and z are present, they are each independently selected and may be the same or different.

Further, i represents an integer of 0 to 6, j represents an integer of 0 to 6, k represents an integer of 0 to 6, (i + j + k) is an integer of 3 to 10, and ((x×i) + (y×j) + (z×k)) is an integer of 5 to 30.

"A" represents a hydrocarbon group having 1 to 20 carbon atoms or an organic group having at least one atom selected from the group consisting of an oxygen atom, a nitrogen atom, a silicon atom, a sulfur atom, and a phosphorus atom and having no active hydrogen. The hydrocarbon group represented by A includes saturated, unsaturated, aliphatic, and aromatic hydrocarbon groups. Examples of the organic group having no active hydrogen include organic groups not having functional groups with active hydrogen, such as a hydroxyl group (-OH), secondary amino group (>NH), primary amino group (-NH₂), and sulfhydryl group (-SH).

In the above general formula (VI), it is preferable that A is represented by any of the above general formulas (II) to (V). By having A represented by any of the general formulas (II) to (V), the low loss property and wear resistance performance of the rubber composition can be further improved.

### - Modified Styrene-Butadiene Rubber of the Third Preferred Embodiment -

The aforementioned styrene-butadiene rubber (SBR) is also preferably modified with a modifier containing a compound (alkoxysilane) represented by the following general formula (VII) at at least one terminal.

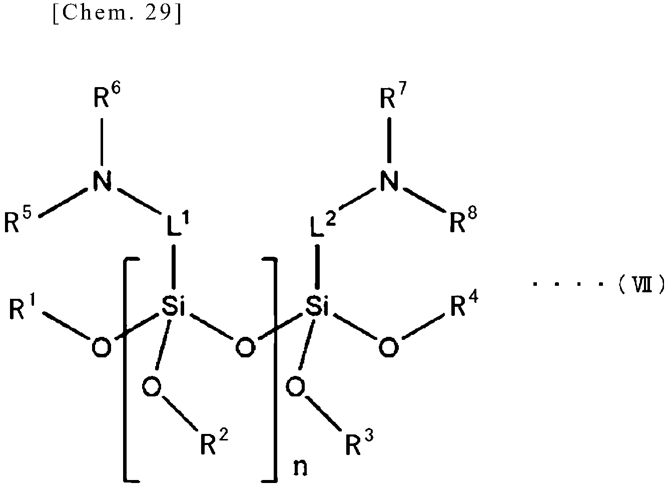

By using, as the rubber component (A), a styrene-butadiene rubber modified with a modifier containing a compound represented by the above general formula (VII) including an oligosiloxane and a tertiary amino group, which are filler-affinity functional groups, the dispersibility of the filler (C) such as silica can be enhanced. As a result, since the dispersibility of the filler (C) in the rubber composition of the present embodiment is improved, the low loss property is greatly improved, the rolling resistance of a tire to which the rubber composition is applied can be reduced, and the high fuel efficiency can be improved.

In the above general formula (VII), R¹ to R⁸ each independently represent an alkyl group having 1 to 20 carbon atoms; L¹ and L² each independently represent an alkylene group having 1 to 20 carbon atoms; and n represents an integer of 2 to 4.

Specifically, in formula (VII), R¹ to R⁴ each independently may be a substituted or unsubstituted alkyl group having 1 to 20 carbon atoms, and when R¹ to R⁴ are substituted, they may each independently be substituted with one or more substituents selected from the group consisting of an alkyl group having 1 to 10 carbon atoms, a cycloalkyl group having 3 to 10 carbon atoms, an alkoxy group having 1 to 10 carbon atoms, a cycloalkoxy group having 4 to 10 carbon atoms, an aryl group having 6 to 12 carbon atoms, an aryloxy group having 6 to 12 carbon atoms, an alkanoyloxy group (Ra-COO-, where Ra is an alkyl group having 1 to 9 carbon atoms) having 2 to 12 carbon atoms, an aralkyloxy group having 7 to 13 carbon atoms, an arylalkyl group having 7 to 13 carbon atoms, and an alkylaryl group having 7 to 13 carbon atoms.

More specifically, R¹ to R⁴ may be a substituted or unsubstituted alkyl group having 1 to 10 carbon atoms, and even more specifically, R¹ to R⁴ may each independently be a substituted or unsubstituted alkyl group having 1 to 6 carbon atoms.

Further, in formula (VII), R⁵ to R⁸ each independently represent a substituted or unsubstituted alkyl group having 1 to 20 carbon atoms, specifically, a substituted or unsubstituted alkyl group having 1 to 10 carbon atoms, and even more specifically, a substituted or unsubstituted alkyl group having 1 to 6 carbon atoms, and when substituted, may be substituted with a substituent as described above for R¹ to R⁴.

Note that, when R⁵ to R⁸ are not alkyl groups but hydrolyzable substituents, the N-R⁵R⁶ and N-R⁷R⁸ bonds may be hydrolyzed to N-H in the presence of moisture, which may adversely affect the processability of the polymer.

More specifically, in the compound represented by formula (VII), R¹ to R⁴ may be methyl or ethyl groups, and R⁵ to R⁸ may be alkyl groups having 1 to 10 carbon atoms.

The amino groups in the compound represented by formula (VII), that is, N-R⁵R⁶ and N-R⁷R⁸, are preferably tertiary amino groups. The tertiary amino group allows the compound represented by formula (VII), when used as a modifier, to have even better processability.

Note that, when a protecting group for protecting the amino group is bonded to R⁵ to R⁸, or when hydrogen is bonded, it may be difficult to realize the effect of the compound represented by formula (VII). When hydrogen is bonded, the anion reacts with the hydrogen during the modification process and loses reactivity, making the modification reaction itself impossible, and when a protecting group is bonded, the modification reaction proceeds, but after being bonded to the polymer terminal, the protecting group is removed by hydrolysis during post-processing to become a primary or secondary amino group, and the deprotected primary or secondary amino group may cause an increase in viscosity of the compound during subsequent compounding, leading to a decrease in processability.

Further, L¹ and L² in the compound represented by formula (VII) are each independently a substituted or unsubstituted alkylene group having 1 to 20 carbon atoms.

More specifically, L¹ and L² may each independently be an alkylene group having 1 to 10 carbon atoms, and even more specifically, an alkylene group having 1 to 6 carbon atoms such as methylene, ethylene, or propylene groups.

Regarding L¹ and L² in the compound represented by formula (VII), the closer the distance between the Si atom and the N atom in the molecule, the more excellent the effect. However, when Si is directly bonded to N, the bond between Si and N may be cleaved during subsequent processing steps, and the secondary amino group generated at this time is highly likely to be washed away by water during post-processing, making it difficult for the amino group to promote bonding with the filler (C) such as silica in the produced modified styrene-butadiene rubber, and as a result, the effect of improving the dispersibility of the filler (C) may be reduced. Considering the improvement effect due to the bond length between Si and N as described above, it is even more preferable that L¹ and L² are each independently an alkylene group having 1 to 3 carbon atoms such as methylene, ethylene, or propylene groups, and more specifically, may be propylene groups. Further, L¹ and L² may be substituted with substituents as described above for R¹ to R⁴.

Further, the compound represented by formula (VII) is preferably any one of the compounds represented by the following structural formulas (VII-1) to (VII-5). This is because even better low loss property can be achieved.

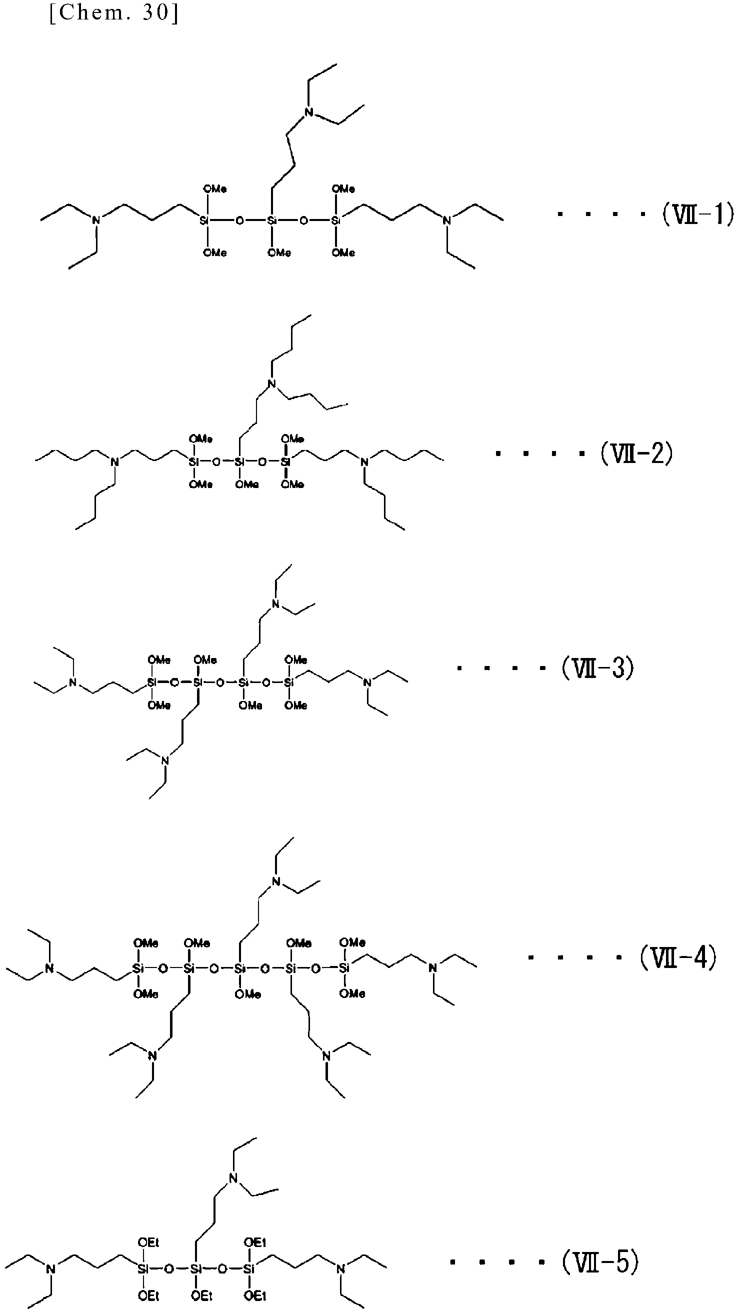

The compound represented by formula (VII) has an alkoxysilane structure that bonds to the active terminal of the styrene-butadiene copolymer, while the Si-O-Si structure and three or more amino groups bonded to the terminal exhibit affinity for the filler (C) such as silica, thereby promoting bonding between the filler (C) and the modified styrene-butadiene rubber compared to conventional modifiers containing a single amino group in the molecule. Further, the degree of bonding of the active terminal of the styrene-butadiene copolymer is uniform, and when observing the change in molecular weight distribution before and after coupling, the molecular weight distribution remains constant without increasing after coupling. Therefore, there is no deterioration in the physical properties of the modified styrene-butadiene rubber itself, aggregation of the filler (C) in the rubber composition is prevented, and the dispersibility of the filler (C) can be enhanced, thereby improving the processability of the rubber composition. These effects make it possible, in particular, to improve both the high fuel efficiency and wet gripping performance in a well-balanced manner when the rubber composition is applied to a tire.

The compound represented by formula (VII) can be produced through a condensation reaction represented by the following reaction scheme.

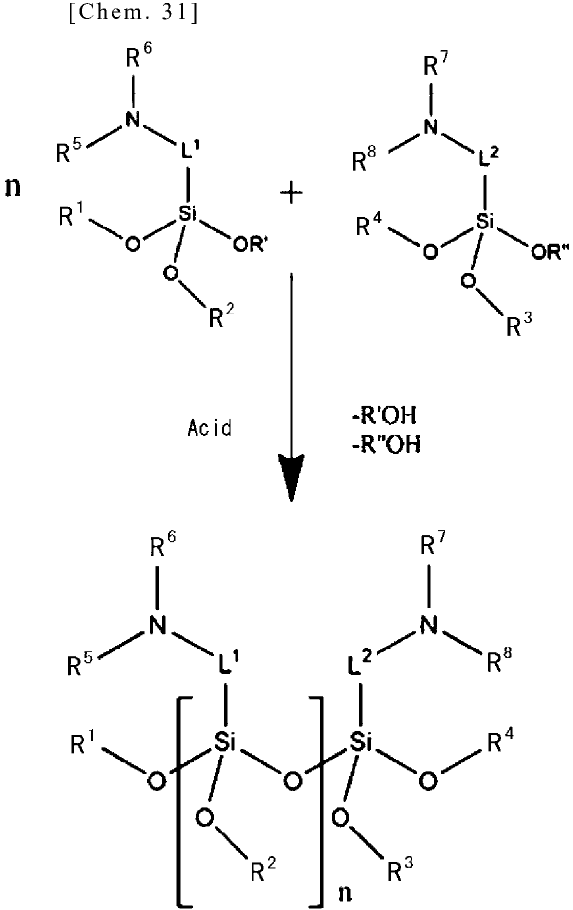

In the above reaction scheme, R¹ to R⁸, L¹ and L², and n are as defined in the above formula (VII), and R' and R" are arbitrary substituents that do not affect the condensation reaction. For example, R' and R" may each independently be the same as any one of R¹ to R⁴.

The reaction in the above reaction scheme proceeds in the presence of an acid, and the acid can be used without limitation as long as it is generally used in condensation reactions. Those skilled in the art can select the optimal acid according to various process variables such as the type of reactor in which the reaction is carried out, starting materials, reaction temperature, and the like.

Incidentally, the modified styrene-butadiene rubber modified with a modifier containing a compound represented by the above formula (VII) can have a narrow molecular weight distribution (Mw/Mn, also referred to as "polydispersity index (PDI)") of 1.1 to 3.0. If the molecular weight distribution of the modified styrene-butadiene rubber exceeds 3.0 or is less than 1.1, there is a risk that the tensile properties and viscoelasticity may decrease when applied to a rubber composition. Considering the remarkable effect of improving tensile properties and viscoelasticity by controlling the molecular weight distribution of the modified styrene-butadiene rubber, the molecular weight distribution of the modified styrene-butadiene rubber is preferably in the range of 1.3 to 2.0. Furthermore, by using the above modifier, the modified styrene-butadiene rubber can have a molecular weight distribution similar to that of the styrene-butadiene copolymer before modification.

The molecular weight distribution of the modified styrene-butadiene rubber can be calculated from the ratio (Mw/Mn) of the weight-average molecular weight (Mw) to the number-average molecular weight (Mn). Here, the number-average molecular weight (Mn) is the common average of individual polymer molecular weights, calculated by measuring the molecular weights of n polymer molecules, summing these molecular weights, and dividing by n, and the weight-average molecular weight (Mw) represents the molecular weight distribution of the polymer composition. The average of the overall molecular weight can be expressed in grams per mole (g/mol).

In addition, the weight-average molecular weight and number-average molecular weight are each polystyrene-equivalent molecular weights analyzed by gel permeation chromatography (GPC).

Furthermore, the modified styrene-butadiene rubber, while satisfying the above molecular weight distribution conditions, has a number-average molecular weight (Mn) of 50,000 g/mol to 2,000,000 g/mol, and more specifically, can be 200,000 g/mol to 800,000 g/mol. The modified styrene-butadiene rubber can have a weight-average molecular weight (Mw) of 100,000 g/mol to 4,000,000 g/mol, and more specifically, can be 300,000 g/mol to 1,500,000 g/mol.

If the weight-average molecular weight (Mw) of the modified styrene-butadiene rubber is less than 100,000 g/mol or the number-average molecular weight (Mn) is less than 50,000 g/mol, there is a risk of decreased tensile properties when applied to a rubber composition. On the other hand, if the weight-average molecular weight (Mw) exceeds 4,000,000 g/mol or the number-average molecular weight (Mn) exceeds 2,000,000 g/mol, the processability of the modified styrene-butadiene rubber may decrease, resulting in deteriorated operability of the rubber composition, making kneading difficult, and it may also become difficult to sufficiently improve the physical properties of the rubber composition.

More specifically, when the modified styrene-butadiene rubber simultaneously satisfies the conditions for the molecular weight distribution as well as the weight-average molecular weight (Mw) and number-average molecular weight (Mn), the viscoelasticity and processability of the rubber composition can be improved in a well-balanced manner when applied to a rubber composition.

The modified styrene-butadiene rubber preferably has a vinyl bond content in the butadiene portion of 5% or more, more preferably 10% or more, and preferably 60% or less. By setting the vinyl bond content in the butadiene portion within the above range, the glass transition temperature can be adjusted to an appropriate range.

The modified styrene-butadiene rubber may have a Mooney viscosity (MV) at 100°C of 40 to 140, specifically 60 to 100. When the Mooney viscosity is within the above range, more excellent processability can be exhibited.

The Mooney viscosity can be measured using a Mooney viscometer, for example, the MV2000E by Monsanto, at 100°C, with a rotor speed of 2 ± 0.02 rpm, using a large rotor. The sample used in this measurement is left at room temperature (23 ± 3°C) for at least 30 minutes, then 27 ± 3 g is taken and filled into the die cavity, and the platen is operated to perform the measurement.

As described above, it is preferable that one terminal of the modified styrene-butadiene rubber is modified with a modifier containing a compound represented by the above general formula (VII), and it is further preferable that the other terminal is further modified with a modifier containing a compound represented by the following general formula (VIII). By modifying both terminals of the modified styrene-butadiene rubber, the dispersibility of the filler (C) in the rubber composition can be further improved, and both the high fuel efficiency and wet gripping performance of a tire using the rubber composition can be achieved at a higher level.

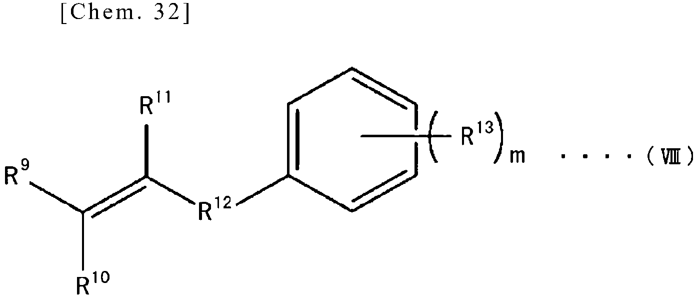

In the above general formula (VIII), R⁹ to R¹¹ are each independently a hydrogen atom; an alkyl group having 1 to 30 carbon atoms; an alkenyl group having 2 to 30 carbon atoms; an alkynyl group having 2 to 30 carbon atoms; a heteroalkyl group having 1 to 30 carbon atoms; a heteroalkenyl group having 2 to 30 carbon atoms; a heteroalkynyl group having 2 to 30 carbon atoms; a cycloalkyl group having 5 to 30 carbon atoms; an aryl group having 6 to 30 carbon atoms; or a heterocyclic group having 3 to 30 carbon atoms.

In formula (VIII), R¹² is a single bond; a substituted or unsubstituted alkylene group having 1 to 20 carbon atoms; a substituted or unsubstituted cycloalkylene group having 5 to 20 carbon atoms; or a substituted or unsubstituted arylene group having 5 to 20 carbon atoms, where the substituent is an alkyl group having 1 to 10 carbon atoms, a cycloalkyl group having 5 to 10 carbon atoms, or an aryl group having 6 to 20 carbon atoms.

In formula (VIII), R¹³ is an alkyl group having 1 to 30 carbon atoms; an alkenyl group having 2 to 30 carbon atoms; an alkynyl group having 2 to 30 carbon atoms; a heteroalkyl group having 1 to 30 carbon atoms; a heteroalkenyl group having 2 to 30 carbon atoms; a heteroalkynyl group having 2 to 30 carbon atoms; a cycloalkyl group having 5 to 30 carbon atoms; an aryl group having 6 to 30 carbon atoms; a heterocyclic group having 3 to 30 carbon atoms; or a functional group represented by the following general formula (VIIIa) or general formula (VIIIb), where m is an integer of 1 to 5, and at least one of the R¹³ is a functional group represented by general formula (VIIIa) or general formula (VIIIb). When m is an integer of 2 to 5, a plurality of R¹³ may be the same or different from each other.

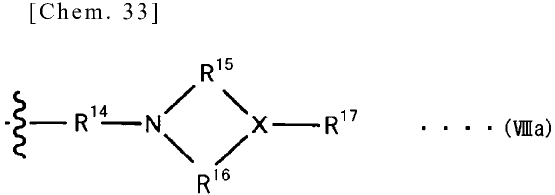

In the above general formula (VIIIa), R¹⁴ is a substituted or unsubstituted alkylene group having 1 to 20 carbon atoms; a substituted or unsubstituted cycloalkylene group having 5 to 20 carbon atoms; or a substituted or unsubstituted arylene group having 6 to 20 carbon atoms, where the substituent is an alkyl group having 1 to 10 carbon atoms, a cycloalkyl group having 5 to 10 carbon atoms, or an aryl group having 6 to 20 carbon atoms.

In formula (VIIIa), R¹⁵ and R¹⁶ are each independently a substituted or unsubstituted alkylene group having 1 to 20 carbon atoms, where the substituent is an alkyl group having 1 to 10 carbon atoms, a cycloalkyl group having 5 to 10 carbon atoms, or an aryl group having 6 to 20 carbon atoms.

In formula (VIIIa), R¹⁷ is a hydrogen atom; an alkyl group having 1 to 30 carbon atoms; an alkenyl group having 2 to 30 carbon atoms; an alkynyl group having 2 to 30 carbon atoms; a heteroalkyl group having 1 to 30 carbon atoms; a heteroalkenyl group having 2 to 30 carbon atoms; a heteroalkynyl group having 2 to 30 carbon atoms; a cycloalkyl group having 5 to 30 carbon atoms; an aryl group having 6 to 30 carbon atoms; or a heterocyclic group having 3 to 30 carbon atoms, and X is an N, O, or S atom, provided that when X is O or S, R¹⁷ is absent.

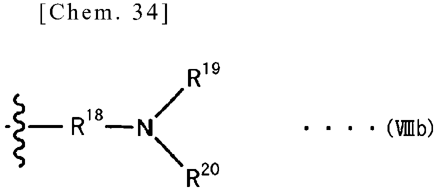

In the above general formula (VIIIb), R¹⁸ is a substituted or unsubstituted alkylene group having 1 to 20 carbon atoms; a substituted or unsubstituted cycloalkylene group having 5 to 20 carbon atoms; or a substituted or unsubstituted arylene group having 6 to 20 carbon atoms, where the substituent is an alkyl group having 1 to 10 carbon atoms, a cycloalkyl group having 5 to 10 carbon atoms, or an aryl group having 6 to 20 carbon atoms.

In formula (VIIIb), R¹⁹ and R²⁰ are each independently an alkyl group having 1 to 30 carbon atoms; an alkenyl group having 2 to 30 carbon atoms; an alkynyl group having 2 to 30 carbon atoms; a heteroalkyl group having 1 to 30 carbon atoms; a heteroalkenyl group having 2 to 30 carbon atoms; a heteroalkynyl group having 2 to 30 carbon atoms; a cycloalkyl group having 5 to 30 carbon atoms; an aryl group having 6 to 30 carbon atoms; or a heterocyclic group having 3 to 30 carbon atoms.

Furthermore, in the compound represented by the above general formula (VIII), R⁹ to R¹¹ are each independently a hydrogen atom; an alkyl group having 1 to 10 carbon atoms; an alkenyl group having 2 to 10 carbon atoms; or an alkynyl group having 2 to 10 carbon atoms, R¹² is a single bond or an unsubstituted alkylene group having 1 to 10 carbon atoms, and R¹³ is an alkyl group having 1 to 10 carbon atoms; an alkenyl group having 2 to 10 carbon atoms; an alkynyl group having 2 to 10 carbon atoms; or a functional group represented by the above general formula (VIIIa) or general formula (VIIIb). In the above general formula (VIIIa), R¹⁴ is an unsubstituted alkylene group having 1 to 10 carbon atoms, R¹⁵ and R¹⁶ are each independently an unsubstituted alkylene group having 1 to 10 carbon atoms, R¹⁷ is an alkyl group having 1 to 10 carbon atoms; a cycloalkyl group having 5 to 20 carbon atoms; an aryl group having 6 to 20 carbon atoms; or a heterocyclic group having 3 to 20 carbon atoms. In the above general formula (VIIIb), R¹⁸ is an unsubstituted alkylene group having 1 to 10 carbon atoms, and R¹⁹ and R²⁰ are each independently an alkyl group having 1 to 10 carbon atoms; a cycloalkyl group having 5 to 20 carbon atoms; an aryl group having 6 to 20 carbon atoms; or a heterocyclic group having 3 to 20 carbon atoms.

More specifically, the compound represented by the above general formula (VIII) can be a compound represented by the following structural formulas (VIII-1) to (VIII-3).

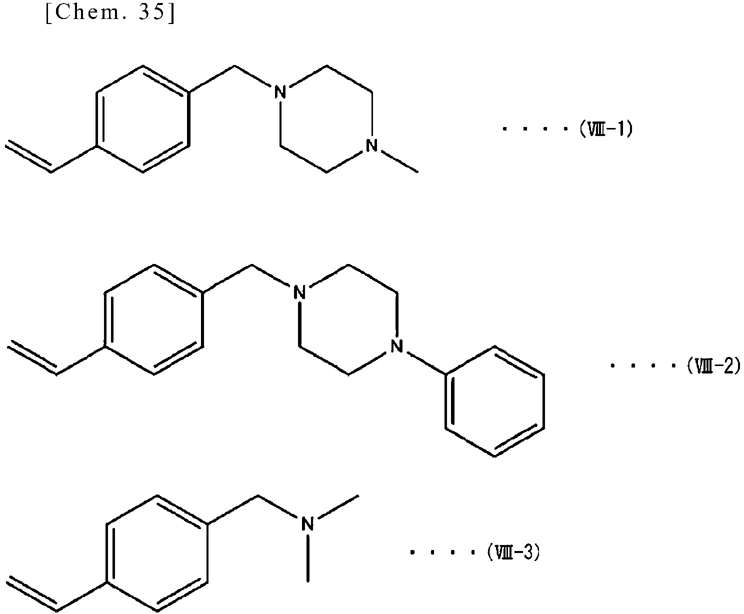

When the styrene-butadiene copolymer is modified with a modifier containing a compound represented by the above general formula (VIII), the modifier containing a compound represented by formula (VIII) is used as a modification initiator.

Specifically, for example, by polymerizing butadiene monomer and styrene monomer in a hydrocarbon solvent in the presence of a modifier containing a compound represented by formula (VIII), a modification group derived from the compound represented by formula (VIII) can be introduced into the styrene-butadiene copolymer.

### (Resin Component (B))

The rubber composition of the present embodiment contains a resin component (B). The resin component (B) is at least partially hydrogenated, the difference in SP value between the resin component (B) and the isoprene-based rubber is not more than 1.40 (cal/cm³)^{1/2}, and the following formula is satisfied:$mass ratio of resin component \left(B\right) / isoprene - based rubber \geq 0.5$

By having the resin component (B) at least partially hydrogenated and the difference in SP value between the resin component (B) and the isoprene-based rubber being not more than 1.40 (cal/cm³)^{1/2}, compatibility with the isoprene-based rubber is increased, the mobility of the rubber component is controlled, and the hysteresis loss (tan δ) in the low temperature region can be improved, thereby improving the wet gripping performance of a tire using the rubber composition. From the viewpoint of further improving compatibility, the difference in SP value between the resin component (B) and the isoprene-based rubber is preferably not more than 1.35 (cal/cm³)^{1/2}, more preferably not more than 0.50 (cal/cm³)^{1/2}, still more preferably not more than 0.45 (cal/cm³)^{1/2}, even more preferably not more than 0.30 (cal/cm³)^{1/2}, and most preferably not more than 0.25 (cal/cm³)^{1/2}. When the difference in SP value between the resin component (B) and the isoprene-based rubber is not more than 0.50 (cal/cm³)^{1/2}, compatibility between the resin component (B) and the isoprene-based rubber is further improved, and the wet gripping performance of a tire using the rubber composition is further improved.

Furthermore, when the mass ratio of the resin component (B) to the isoprene-based rubber [mass ratio of resin component (B)/isoprene-based rubber] is 0.5 or more, the wet gripping performance of a tire using the rubber composition can be further improved. The mass ratio of the resin component (B) to the isoprene-based rubber [mass ratio of resin component (B)/isoprene-based rubber] is preferably 0.65 or more, more preferably 0.7 or more, and still more preferably 0.8 or more, and preferably 2.0 or less, more preferably 1.9 or less, and most preferably 1.8 or less.

The content of the resin component (B) is not less than 1 part by mass and less than 50 parts by mass per 100 parts by mass of the rubber component (A). When the content of the resin component (B) in the rubber composition is not less than 1 part by mass per 100 parts by mass of the rubber component (A), the effect of the resin component (B) is sufficiently exhibited, and when it is less than 50 parts by mass, it is difficult for the resin component (B) to precipitate from the tire, and the effect of the resin component (B) can be sufficiently exhibited. On the other hand, if the content of the resin component (B) is 50 parts by mass or more per 100 parts by mass of the rubber component (A), the high fuel efficiency and wear resistance performance of a tire using the rubber composition deteriorate. From the viewpoint of further enhancing the effect of the resin component (B), the content of the resin component (B) in the rubber composition is preferably not less than 5 parts by mass, more preferably not less than 7 parts by mass, still more preferably not less than 9 parts by mass, even more preferably not less than 15 parts by mass, and most preferably not less than 17 parts by mass per 100 parts by mass of the rubber component (A). Furthermore, from the viewpoint of suppressing precipitation of the resin component (B) from the tire and suppressing deterioration of the tire appearance, the content of the resin component (B) in the rubber composition is more preferably not more than 45 parts by mass, and even more preferably not more than 40 parts by mass per 100 parts by mass of the rubber component (A).

The resin component (B) preferably has a softening point higher than 110°C and a polystyrene-equivalent weight-average molecular weight of 200 to 1600 g/mol. By applying a rubber composition containing such a resin component (B) to a tire, the wear resistance performance of the tire can be improved.

In the present specification, the softening point of the resin component is measured using a ring-and-ball softening point measuring device as specified in JIS K 6220-1:2015 (ISO 28641:2010), and is the temperature at which the ball drops.

The weight-average molecular weight of the resin component is measured by gel permeation chromatography (GPC), and the polystyrene-equivalent value is calculated.

When the softening point of the resin component (B) is higher than 110°C, the tire to which the rubber composition is applied can be sufficiently reinforced, and the wear resistance performance can be improved. From the viewpoint of wear resistance performance of the tire, the softening point of the resin component (B) is more preferably 116°C or higher, still more preferably 120°C or higher, even more preferably 123°C or higher, and most preferably 127°C or higher. From the viewpoint of processability, the softening point of the resin component (B) is preferably 160°C or lower, more preferably 150°C or lower, still more preferably 145°C or lower, even more preferably 141°C or lower, and most preferably 136°C or lower.

When the polystyrene-equivalent weight-average molecular weight of the resin component (B) is 200 g/mol or more, precipitation of the resin component (B) from the tire is suppressed, and the effect of the resin component (B) can be sufficiently exhibited. When it is 1600 g/mol or less, the resin component (B) is easily compatible with the rubber component (A).

From the viewpoint of suppressing precipitation of the resin component (B) from the tire and suppressing deterioration of the tire appearance, the polystyrene-equivalent weight-average molecular weight of the resin component (B) is preferably 500 g/mol or more, more preferably 550 g/mol or more, still more preferably 600 g/mol or more, even more preferably 650 g/mol or more, and most preferably 700 g/mol or more. From the viewpoint of further enhancing the compatibility of the resin component (B) with the rubber component (A) and further enhancing the effect of the resin component (B), the polystyrene-equivalent weight-average molecular weight of the resin component (B) is more preferably 1570 g/mol or less, still more preferably 1530 g/mol or less, even more preferably 1500 g/mol or less, still more preferably 1470 g/mol or less, even more preferably 1430 g/mol or less, still more preferably 1400 g/mol or less, even more preferably 1370 g/mol or less, still more preferably 1330 g/mol or less, even more preferably 1300 g/mol or less, still more preferably 1200 g/mol or less, even more preferably 1100 g/mol or less, still more preferably 1000 g/mol or less, and most preferably 950 g/mol or less.

The ratio (Ts_{HR}/Mw_{HR}) of the softening point (Ts_{HR}) (unit: °C) of the resin component (B) to the polystyrene-equivalent weight-average molecular weight (Mw_{HR}) (unit: g/mol) of the resin component (B) is preferably 0.07 or more, more preferably 0.083 or more, still more preferably 0.095 or more, even more preferably 0.104 or more, still more preferably 0.125 or more, even more preferably 0.135 or more, still more preferably 0.14 or more, and most preferably 0.141 or more. The ratio (Ts_{HR}/Mw_{HR}) is preferably 0.25 or less, more preferably 0.24 or less, still more preferably 0.23 or less, even more preferably 0.19 or less, still more preferably 0.18 or less, and most preferably 0.17 or less.

The softening point and polystyrene-equivalent weight-average molecular weight of the resin component (B) can be determined by the methods described in the examples below.

The above-mentioned resin component that is at least partially hydrogenated refers to a resin obtained by reductive hydrogenation of a resin.

As the resin serving as a raw material for the hydrogenated resin component (B), examples include terpene resin, rosin-based resin, C₅ resin, C₅-C₉ resin, C₉ resin, cyclopentadiene resin, aromatic resin, coumarone resin, indene resin, coumarone-indene resin, olefin resin, polyurethane resin, acrylic resin, and the like; these resins may be used alone or in combination of two or more. It should be noted that terpene resin and rosin-based resin are sustainable resins of natural origin, and therefore can further reduce environmental impact and further improve tire performance such as gripping performance on various road surface conditions including dry road surfaces, wet road surfaces, snow-covered road surfaces, and icy road surfaces. Further, C₅ resin, C₉ resin, C₅-C₉ resin, and cyclopentadiene resin can improve wear resistance performance and high fuel efficiency in a well-balanced manner. Moreover, aromatic resin can improve gripping performance, wear resistance performance, and rubber strength in a well-balanced manner.

The above-mentioned terpene resin is a solid resin obtained by compounding turpentine oil, which is obtained simultaneously with rosin from pine trees, or a polymerized component separated therefrom, and polymerizing it using a Friedel-Crafts type catalyst, and includes, for example, β-pinene resin and α-pinene resin. The terpene resin also encompasses terpene-aromatic compound resins, and representative examples of such terpene-aromatic compound resins include terpene-phenol resin and styrene-terpene resin. The terpene-phenol resin can be obtained by reacting terpenes and various phenols using a Friedel-Crafts type catalyst, or further by condensation with formalin. The styrene-terpene resin can be obtained by reacting styrene and terpenes using a Friedel-Crafts type catalyst. There is no particular limitation on the terpenes as raw materials, but monoterpene hydrocarbons such as α-pinene and limonene are preferred, those containing α-pinene are more preferred, and α-pinene is particularly preferred.

As the above-mentioned rosin-based resin, examples of natural resin rosin include gum rosin, tall oil rosin, and wood rosin contained in raw rosin or tall oil; further, as modified rosin, rosin derivatives, or modified rosin derivatives, examples include polymerized rosin and its partially hydrogenated rosin; glycerin ester rosin, its partially hydrogenated rosin or completely hydrogenated rosin; pentaerythritol ester rosin, its partially hydrogenated rosin or polymerized rosin; and the like.

As the above-mentioned C₅ resin, examples include aliphatic petroleum resin obtained by (co)polymerizing a C₅ fraction obtained by thermal cracking of naphtha in the petrochemical industry. The C₅ fraction usually contains olefinic hydrocarbons such as 1-pentene, 2-pentene, 2-methyl-1-butene, 2-methyl-2-butene, and 3-methyl-1-butene, and diolefinic hydrocarbons such as 2-methyl-1,3-butadiene, 1,2-pentadiene, 1,3-pentadiene, and 3-methyl-1,2-butadiene.

The above-mentioned C₅-C₉ resin refers to a C₅-C₉ synthetic petroleum resin, and as the C₅-C₉ resin, for example, a solid polymer obtained by polymerizing a petroleum-derived C₅-C₁₁ fraction using a Friedel-Crafts catalyst such as AlCl₃ or BF₃ can be mentioned; more specifically, copolymers mainly composed of styrene, vinyltoluene, α-methylstyrene, indene, and the like can be mentioned. As the C₅-C₉ resin, a resin with a low content of components of C₉ or higher is preferred from the viewpoint of compatibility with the rubber component (A). Here, "low content of components of C₉ or higher" means that the content of components of C₉ or higher in the total resin is less than 50 mass%, preferably 40 mass% or less.

The above-mentioned C₉ resin refers to a C₉ synthetic petroleum resin, and refers to a solid polymer obtained by polymerizing a C₉ fraction using a Friedel-Crafts type catalyst such as AlCl₃ or BF₃. As the C₉ resin, for example, copolymers mainly composed of indene, α-methylstyrene, vinyltoluene, and the like can be mentioned.

The above-mentioned cyclopentadiene resin refers to a resin containing units derived from cyclopentadiene monomers as monomer unit. Examples of such cyclopentadiene resin include homopolymers of cyclopentadiene monomers, copolymers of two or more cyclopentadiene monomers, and copolymers of cyclopentadiene monomers with other monomers. Here, as cyclopentadiene monomers, cyclopentadiene, dicyclopentadiene, tricyclopentadiene, and the like can be mentioned; among these, dicyclopentadiene is preferred, that is, as the cyclopentadiene resin, dicyclopentadiene resin is preferred. The dicyclopentadiene resin refers, for example, to a resin obtained by polymerizing dicyclopentadiene using a Friedel-Crafts type catalyst such as AlCl₃ or BF₃. Examples of dicyclopentadiene resin include homopolymers of dicyclopentadiene, copolymers of dicyclopentadiene and aromatic monomers, and copolymers of dicyclopentadiene and C₉ fractions (such as vinyltoluene, indene, etc.).

The above-mentioned aromatic resin refers to a resin containing units derived from aromatic monomers as monomer units. Examples of such aromatic resin include homopolymers of aromatic monomers, copolymers of two or more aromatic monomers, and copolymers of aromatic monomers with other monomers. Here, as aromatic monomers, examples include styrene-based monomers such as styrene, o-methylstyrene, m-methylstyrene, p-methylstyrene, α-methylstyrene, p-methoxystyrene, p-tert-butylstyrene, o-chlorostyrene, m-chlorostyrene, p-chlorostyrene, and p-phenylstyrene; phenol-based monomers such as phenol, alkylphenol, and alkoxyphenol; naphthol-based monomers such as naphthol, alkylnaphthol, and alkoxynaphthol; and the like.

Further, the resin serving as a raw material for the hydrogenated resin component (B) may include, for example, a resin obtained by copolymerizing a C₅ fraction and dicyclopentadiene (DCPD) (C₅-DCPD resin).

Here, when the content of dicyclopentadiene-derived components in the total resin is 50 mass% or more, the C₅-DCPD resin is included in the dicyclopentadiene resin. When the content of dicyclopentadiene-derived components in the total resin is less than 50 mass%, the C₅-DCPD resin is included in the C₅ resin. The same applies even when a small amount of a third component or the like is included.

From the viewpoint of further improving the compatibility between the rubber component (A) and the resin component (B), further improving the high fuel efficiency of a tire using the rubber composition, and further improving wet gripping performance, it is preferable that the resin component (B) is at least one selected from the group consisting of hydrogenated C₅ resin, hydrogenated C₅-C₉ resin, hydrogenated dicyclopentadiene resin (hydrogenated DCPD resin), and hydrogenated terpene resin; more preferably, at least one selected from the group consisting of hydrogenated C₅ resin and hydrogenated C₅-C₉ resin; and even more preferably, hydrogenated C₅ resin. Further, it is preferable that the resin component (B) is a resin having at least a hydrogenated DCPD structure or a hydrogenated cyclic structure in the monomer.

In addition, the resin component (B) may be modified to introduce a functional group that interacts with the filler (C) such as carbon black or silica. Examples of such functional groups include an amino group, amide group, isocyanate group, imino group, imidazole group, urea group, ammonium group, imide group, hydrazo group, azo group, diazo group, carboxyl group, nitrile group, pyridyl group, alkoxy group, hydroxyl group, oxy group, epoxy group, ether group, carbonyl group, oxycarbonyl group, silyl group, alkoxy silyl group, mercapto group, sulfide group, disulfide group, sulfonyl group, sulfinyl group, thiocarbonyl group, and the like.

As the resin component (B), commercially available products can be used, and examples of commercially available resin components (B) include products from Eastman, ENEOS Corporation, Arakawa Chemical Industries, Ltd., ExxonMobil, Kraton Corporation, Yasuhara Chemical Co., Ltd., Maruzen Petrochemical Co., Ltd., Sumitomo Bakelite Co., Ltd., Tosoh Corporation, Rutgers Chemicals, BASF, Kraton Polymers LLC, Nitto Chemical Industry Co., Ltd., Nippon Shokubai Co., Ltd., Taoka Chemical Co., Ltd., and the like.

### (Filler (C))

The rubber composition of the present embodiment contains a filler (C). By containing the filler (C), the reinforcing property of the rubber composition is improved. Examples of the filler include carbon black, silica, calcium carbonate, talc, alumina, clay, aluminum hydroxide, mica, and the like.

The content of the filler (C) in the rubber composition is preferably in the range of 40 to 125 parts by mass per 100 parts by mass of the rubber component (A). When the content of the filler (C) in the rubber composition is 40 parts by mass or more per 100 parts by mass of the rubber component (A), reinforcement of a tire using the rubber composition is sufficient, and wear resistance performance can be improved; when it is 125 parts by mass or less, the elastic modulus of the rubber composition does not become excessively high, and wet gripping performance of a tire using the rubber composition is improved. From the viewpoint of further lowering the rolling resistance of a tire (improving high fuel efficiency), the content of the filler (C) in the rubber composition is more preferably 45 parts by mass or more, even more preferably 50 parts by mass or more, and still more preferably 55 parts by mass or more per 100 parts by mass of the rubber component (A). From the viewpoint of improving wet gripping performance of a tire, the content of the filler (C) in the rubber composition is more preferably 105 parts by mass or less, even more preferably 100 parts by mass or less, and still more preferably 95 parts by mass or less per 100 parts by mass of the rubber component (A).

### - Carbon Black -

It is preferable that the filler (C) contains carbon black. The carbon black can reinforce the rubber composition and improve the wear resistance performance of the rubber composition. As the carbon black, plant-derived carbon black and carbon black obtained by recycling (also referred to as "recovered carbon black" or "recycled carbon black") are preferred. Here, as plant-derived carbon black, for example, those derived from castor oil or pine tar oil can be mentioned. Recovered carbon black will be described in detail below.

The content of carbon black (the total of recovered carbon black and carbon black other than recovered carbon black) in the rubber composition is preferably 1 part by mass or more, more preferably 3 parts by mass or more, and even more preferably 5 parts by mass or more per 100 parts by mass of the rubber component (A), from the viewpoint of improving the wear resistance performance of the rubber composition and a tire using the same. From the viewpoint of operability of the rubber composition, the content of carbon black in the rubber composition is preferably 100 parts by mass or less, more preferably 80 parts by mass or less, and even more preferably 70 parts by mass or less per 100 parts by mass of the rubber component (A).

### -- Recovered Carbon Black --

It is preferable that the filler (C) contains recovered carbon black. When the filler (C) contains recovered carbon black, the ratio of sustainable materials in a tire using the rubber composition can be increased. Further, by replacing general unused carbon black with recovered carbon black in the rubber composition, high fuel efficiency of a tire using the rubber composition can be improved.

In the present specification, "recovered carbon black" refers to carbon black obtained by recovering from waste materials subjected to recycling. Examples of the waste materials include waste rubber, used tires, waste oil, and the like. Waste rubber refers to all discarded rubber, not limited to those generated from rubber products, but also including unnecessary scraps generated during production or repair of rubber products. Examples of scraps include buffing dust and peeling rubber. Buffing dust is, for example, fine rubber generated in the buffing process of retreading a tire, in which the tread portion remaining on the base tire is shaved. Peeling rubber is, for example, elongated rubber with a width of about 1 to 2 cm, stripped from the surface of rubber products such as tires. Peeling rubber is generated by shaving the surface of rubber products such as tires using a knife with a U-shaped or V-shaped tip as a peeler. Waste rubber includes not only crosslinked rubber but also unvulcanized rubber. Rubber products include, for example, final products such as tires and rubber hoses, as well as rubber parts or components in the manufacturing stage of final products. Used tires may be those subjected to retreading, or may be waste tires generated by tire replacement, vehicle scrapping, or the like, or ELT (End-of-Life Tire) that has reached the end of its life as a tire, or the like, that has been discarded for any reason. Waste oil is not limited to that generated by decomposing plastics or rubber, but also includes used oils discharged from industry, such as animal and vegetable oils, lubrication oil, insulating oil, cutting oil, and the like. Among these, as waste oil, those not containing compositions other than organic substances, such as those derived from silicone rubber or polyvinyl chloride, are preferred. Further, as waste oil, those in which carbon black or rubber containing carbon black is mixed are preferred.

"Recovered carbon black" is different from carbon black directly produced from hydrocarbons such as petroleum, natural gas, or coal, that is, carbon black that is not a recycled product. It should be noted that "used" here includes not only those actually used and then discarded, but also those manufactured but actually not used and discarded.

The proportion of recovered carbon black in the carbon black is preferably 50 mass% or more. In this case, it can further contribute to increasing the ratio of sustainable materials and can further improve high fuel efficiency. From the same viewpoint, the proportion of recovered carbon black in the carbon black is more preferably 70 mass% or more, even more preferably 90 mass% or more, and particularly preferably 100 mass% (that is, the carbon black consists only of recovered carbon black).

Further, it is preferable that the recovered carbon black is obtained by pyrolysis of a vulcanized rubber product containing carbon black. Recovered carbon black obtained by pyrolysis of a vulcanized rubber product containing carbon black is easily available because vulcanized rubber products containing carbon black exist in large quantities and can be easily obtained by pyrolysis. Furthermore, it is preferable that the recovered carbon black is obtained from the solid residue generated by pyrolysis of the vulcanized rubber product containing carbon black. When a rubber product containing carbon black is pyrolyzed, a solid residue and a volatile component (oil) are obtained, and recovered carbon black can be recovered from either.

When recovering carbon black from the volatile component, it is possible to recover an oil component with a specific gravity suitable for manufacturing carbon black and use it to manufacture carbon black by an existing carbon black manufacturing method (for example, see JP 2015-520259 A). In this case, unlike carbon black recovered from the solid residue, there are advantages such as no impurities and no mixing of different grades. In addition, in the manufacture of low environmental impact carbon black, there are various options such as using, in addition to the oil obtained by recovering the volatile component obtained by the above-mentioned rubber pyrolysis, vegetable oil, oil derived from waste plastics, and the like. However, edible resources such as vegetable oil have issues in securing a sufficient amount due to demand for other uses such as food, and it is also necessary to consider the impact on the environment due to expansion of cultivated land. Further, oil derived from waste plastics and the like is also used for other purposes such as horizontal recycling of plastics, so there are also issues in terms of supply. On the other hand, when using the volatile component (oil) generated by pyrolysis of vulcanized rubber products, especially tires, it is possible to continue using existing materials within the tire industry, thereby enabling continued use of existing materials in new tire manufacturing, reducing the consumption of new materials, and contributing to reduction of environmental impact as an industry. There is no particular limitation on the grade of the carbon black, and examples include N134, N110, N220, N234, N219, N339, N330, N326, N351, N550, N762, and the like.

The solid residue obtained by pyrolyzing waste materials typified by used rubber and used tires contains, in addition to carbon black, ash content. The ash content is derived from non-volatile components contained in the rubber or tire. Therefore, the recovered carbon black obtained from such solid residue has a relatively lower content of carbon black. On the other hand, considering the various physical properties required for tires manufactured using recovered carbon black, it is preferable that the carbon content in the recovered carbon black be as high as possible. In the recovered carbon black, the carbon content is preferably 80 mass% or more, more preferably 85 mass% or more, still more preferably 87 mass% or more, and particularly preferably 89 mass% or more. Furthermore, the carbon content in the recovered carbon black is preferably 97 mass% or less. Note that the carbon content mentioned above is a value excluding adsorbed moisture.

Specifically, the ash content includes zinc oxide, zinc sulfide, silica, iron compounds (iron oxide), calcium oxide, aluminum oxide, magnesium oxide, and the like. In the case of recovered carbon black produced from solid residue obtained by pyrolyzing waste materials, even if various processes for removing ash content are performed, a certain amount of ash content remains. In the present embodiment, the inclusion of ash content in the recovered carbon black is permitted. In one embodiment, the lower limit of the ash content in the recovered carbon black may be 0.5 mass%.

The recovered carbon black can also be obtained from the pyrolysis process of used pneumatic tires. For example, European Patent Application Publication No. 3427975 refers to "Rubber Chemistry and Technology," Vol. 85, No. 3, pp. 408-449 (2012), particularly pp. 438, 440, and 442, and describes that it can be obtained by pyrolysis of organic materials at 550-800°C in the absence of oxygen, or by vacuum pyrolysis at a relatively low temperature (paragraph [0027]). As mentioned in paragraph [0004] of JP 6856781 B2, the carbon black obtained from such a pyrolysis process generally lacks functional groups on its surface (Comparison of surface morphology and chemistry of pyrolytic carbon black and commercial carbon black, Powder Technology 160 (2005) 190-193).

The recovered carbon black may lack functional groups on its surface, or may be treated to include functional groups on its surface. The treatment to include functional groups on the surface of recovered carbon black can be carried out by conventional methods. For example, European Patent Application Publication No. 3173251 describes obtaining carbon black containing hydroxyl groups and/or carboxyl groups on its surface by treating carbon black obtained from a pyrolysis process with potassium permanganate under acidic conditions. Furthermore, JP 6856781 B2 describes obtaining activated carbon black by treating carbon black obtained from a pyrolysis process with an amino acid compound containing at least one thiol group or disulfide group. The recovered carbon black according to the present embodiment also encompasses such carbon black treated to include functional groups on its surface.

As the pyrolysis of crosslinked rubber products (vulcanized rubber products) such as used tires, for example, a pyrolysis method at a temperature of 650°C or higher can be mentioned.

Regarding the crosslinked rubber products used for the decomposition, they may be grouped in advance according to the type of rubber component blended, and the decomposition process may be performed for each group. Alternatively, grouping may be performed in advance according to the type of filler blended (for example, type of carbon black, type of silica, mixing ratio of carbon black and silica, etc.), and the decomposition process may be performed for each group. Furthermore, both grouping by type of rubber component and grouping by type of filler may be performed, and the decomposition process may be performed for each group. When the decomposition process is performed for each group in this manner, recovered carbon black having more uniform physical properties can be obtained, and when it is blended again into a rubber component, a rubber composition with better performance can be obtained.

Furthermore, when the crosslinked rubber product used for the decomposition is derived from a tire, grouping may be performed in advance according to the type of tire (for example, for passenger vehicles, for trucks and buses, for large vehicles such as off-road vehicles, for aircraft, for agricultural vehicles, etc.), and the decomposition process may be performed for each group. Alternatively, grouping may be performed in advance according to the type of tire member (for example, tread rubber, sidewall rubber, bead portion rubber, steel cord coating rubber, organic fiber coating rubber, pad rubber, cushion rubber, etc.), and the decomposition process may be performed for each group. Furthermore, both grouping by type of tire and grouping by type of tire member may be performed, and the decomposition process may be performed for each group. When the decomposition process is performed for each group in this manner, recovered carbon black having more uniform physical properties can be obtained, and when it is blended again into a rubber component, a rubber composition with better performance can be obtained.

The recovered carbon black preferably has a nitrogen adsorption specific surface area by the BET method of 40-100 m²/g, more preferably 50-90 m²/g, and particularly preferably 55-75 m²/g.

Here, in the present specification, the nitrogen adsorption specific surface area of the recovered carbon black by the BET method is the statistical thickness specific surface area (STSA) and is determined in accordance with ASTM D6556.

The recovered carbon black preferably has a pH of 4-12, more preferably 5-11, and particularly preferably 6-10.

Here, in the present specification, the pH of the recovered carbon black is determined in accordance with ASTM D1512.

The recovered carbon black preferably has a toluene discoloration transmittance of 60% or more, more preferably 70% or more, and particularly preferably 80% or more.

Here, in the present specification, the toluene discoloration transmittance of the recovered carbon black is determined in accordance with ASTM D1618.

The recovered carbon black preferably has a heating loss at 125°C of 3 mass% or less, more preferably 2.5 mass% or less, and particularly preferably 2 mass% or less.

Here, in the present specification, the heating loss at 125°C of the recovered carbon black is determined in accordance with ASTM D1509.

The recovered carbon black preferably has a sulfur content of 5 mass% or less, more preferably 3.5 mass% or less, and particularly preferably 3 mass% or less.

The recovered carbon black preferably has a 35 mesh sieve residue of 20 mass ppm or less, more preferably 15 mass ppm or less, and particularly preferably 10 mass ppm or less.

Here, in the present specification, the 35 mesh sieve residue of the recovered carbon black is determined in accordance with ASTM D1514.

The recovered carbon black preferably has a 325 mesh (44 µm) sieve residue of 1000 mass ppm or less, more preferably 700 mass ppm or less, and particularly preferably 300 mass ppm or less.

Here, in the present specification, the 325 mesh (44 µm) sieve residue of the recovered carbon black is determined in accordance with ASTM D1514.

The recovered carbon black preferably has a pellet hardness of 100 cN or less, more preferably 90 cN or less, and particularly preferably 80 cN or less.

Here, in the present specification, the pellet hardness of the recovered carbon black is determined in accordance with ASTM D5230.

The recovered carbon black preferably has a pellet fines content of 10 mass% or less, more preferably 7 mass% or less, and particularly preferably 5 mass% or less.

Here, in the present specification, the pellet fines content of the recovered carbon black is determined in accordance with ASTM D1508.

The recovered carbon black preferably has a particle size (D97) of 25 µm or less, more preferably 15 µm or less, and particularly preferably 10 µm or less.

Here, in the present specification, the particle size (D97) of the recovered carbon black is determined using a laser diffraction particle size distribution analyzer, with a refractive index of 1.33 for water and 1.75 for the filler.

The recovered carbon black preferably has a proportion of particles of 5 µm or less of 50 vol% or more, more preferably 70 vol% or more, and particularly preferably 80 vol% or more.

The recovered carbon black preferably has an ash content of 25 mass% or less, more preferably 20 mass% or less, and particularly preferably 15 mass% or less. When the ash content of the recovered carbon black is 25 mass% or less, the various physical properties of rubber products to which the rubber composition is applied can be improved. Furthermore, when the ash content of the recovered carbon black is 20 mass% or less, the various physical properties of tires to which the rubber composition is applied can be further improved.

Here, in the present specification, the ash content of the recovered carbon black is determined in accordance with ASTM D8474 and D1506.

The recovered carbon black preferably has a dibutyl phthalate (DBP) absorption of 70-120 mL/100 g, more preferably 75-110 mL/100 g, and particularly preferably 80-100 mL/100 g.

Here, in the present specification, the DBP absorption of the recovered carbon black is determined in accordance with ASTM D2414.

The recovered carbon black preferably has a compressed dibutyl phthalate (24M4DBP) absorption of 50-110 mL/100 g, more preferably 60-100 mL/100 g, and particularly preferably 70-90 mL/100 g.

Here, in the present specification, the 24M4DBP absorption of the recovered carbon black is determined in accordance with ASTM D3493.

As the recovered carbon black, commercial products can be used. As such commercial products, for example, the product name "PB365" manufactured by Enrestec Co., Ltd. can be mentioned. PB365 is a recovered carbon black produced through the pyrolysis of used tires, has a nitrogen adsorption specific surface area by the BET method of 73.6 m²/g, and contains about 17 mass% of ash content.

The content of the recovered carbon black is preferably 1-100 parts by mass, more preferably 5-80 parts by mass, still more preferably 5-50 parts by mass, even more preferably 5-30 parts by mass, and particularly preferably 5-20 parts by mass per 100 parts by mass of the rubber component (A). When the content of recovered carbon black is 5 parts by mass or more per 100 parts by mass of the rubber component (A), the effect of increasing the proportion of sustainable materials in rubber products to which the rubber composition is applied is significant, and when it is 50 parts by mass or less, the fracture resistance of the rubber composition can be more reliably maintained.

### -- Carbon Black Other Than Recovered Carbon Black --

The filler (C) may contain carbon black other than recovered carbon black (unused carbon black). As carbon black other than recovered carbon black, plant-derived carbon black can be mentioned, and as plant-derived carbon black, for example, those derived from castor oil or rosin oil can be mentioned. The grade of the carbon black is not particularly limited, and examples include N134, N110, N220, N234, N219, N339, N330, N326, N351, N550, N762, and the like. As the carbon black, commercial products can be used, and as commercial products of such carbon black, products from Asahi Carbon Co., Ltd., Cabot Japan K.K., Tokai Carbon Co., Ltd., Mitsubishi Chemical Corporation, Lion Corporation, Nippon Steel Carbon Co., Ltd., Birla Carbon, and the like can be used. These carbon blacks may be used alone or in combination of two or more kinds.

The nitrogen adsorption specific surface area (N₂SA) of the carbon black is not particularly limited and can be adjusted as appropriate. For example, the nitrogen adsorption specific surface area (N₂SA) of the carbon black is preferably 20 m²/g or more, more preferably 50 m²/g or more, still more preferably 70 m²/g or more, and even more preferably 90 m²/g or more, and preferably 200 m²/g or less, more preferably 150 m²/g or less, and still more preferably 130 m²/g or less.

Note that, in the present specification, the nitrogen adsorption specific surface area (N₂SA) of carbon black is determined in accordance with ASTM D6556.

### - Silica -

The rubber composition of the present embodiment preferably contains silica. As such silica, for example, wet silica (hydrous silicate), dry silica (anhydrous silicate), calcium silicate, aluminum silicate, and the like can be mentioned, and among these, wet silica is preferable due to its high content of silanol groups. These silicas may be used alone or in combination of two or more kinds. As the silica, commercial products can be used, and as commercial products of such silica, products from Tosoh Silica Corporation, Evonik, Solvay, Solvay Japan K.K., Tokuyama Corporation, and the like can be used.

From the viewpoint of reducing environmental impact, silica derived from plant-based silicate is preferable as the silica. Such plant-based silicate is present in, for example, bryophytes, ferns, horsetails, Cucurbitaceae, Urticaceae, Poaceae plants, and the like. Among these plants, Poaceae plants are preferable. As Poaceae plants, rice, bamboo, sugarcane, and the like can be mentioned, and among these, rice is preferable. Since rice is widely cultivated for food, it can be locally procured in a wide area, and since rice husks are generated in large quantities as industrial waste, it is easy to secure the quantity. Therefore, from the viewpoint of ease of procurement, silica derived from rice husks (hereinafter also referred to as "rice husk silica") is particularly preferable as the silica. By using rice husk silica, rice husks, which are industrial waste, can be effectively utilized, and since raw materials can be locally procured near tire manufacturing plants, energy and cost for transportation and storage can be reduced, and from various viewpoints, it is preferable in terms of the environment. The rice husk silica may be a powder of rice husk charcoal obtained by carbonizing rice husks by heating, or may be precipitated silica produced by preparing an alkali silicate aqueous solution by extracting rice husk ash generated when rice husks are burned as fuel in a biomass boiler with alkali, and manufacturing by a wet process using the alkali silicate aqueous solution. The method for producing the rice husk charcoal is not particularly limited, and various known methods can be used; for example, rice husk charcoal can be obtained by pyrolyzing rice husks by steaming in a kiln. The rice husk charcoal thus obtained can be pulverized using a known pulverizer (for example, a ball mill), and by classifying and sorting to a predetermined particle size range, a powder of rice husk charcoal can be obtained. Furthermore, the precipitated silica derived from rice husks can be produced by the method described in JP 2019-38728 A or the like.

In addition, from the viewpoint of reducing environmental impact, it is also preferable to use silica produced by recycling, by extracting silicate components from silicon wafer scraps used as raw materials for semiconductors or from glass bottles and the like, and using them in manufacturing.

The nitrogen adsorption specific surface area (N₂SA) of the silica is preferably 80 m²/g or more and less than 330 m²/g. When the nitrogen adsorption specific surface area (N₂SA) of the silica is 80 m²/g or more, the tire to which the rubber composition is applied can be sufficiently reinforced, and the fuel efficiency of the tire can be further improved. When the nitrogen adsorption specific surface area (N₂SA) of the silica is less than 330 m²/g, the elastic modulus of the rubber composition does not become excessively high, and the wet gripping performance of the tire to which the rubber composition is applied is improved. From the viewpoint of further lowering rolling resistance (further improving fuel efficiency) and further improving the wear resistance performance of the tire, the nitrogen adsorption specific surface area (N₂SA) of the silica is preferably 110 m²/g or more, more preferably 130 m²/g or more, still more preferably 150 m²/g or more, and even more preferably 180 m²/g or more. From the viewpoint of further improving the wet gripping performance of the tire, the nitrogen adsorption specific surface area (N₂SA) of the silica is preferably 300 m²/g or less, more preferably 280 m²/g or less, and still more preferably 270 m²/g or less.

Note that, in the present specification, the nitrogen adsorption specific surface area (N₂SA) of silica is a value measured by the BET method in accordance with ASTM D3037-93.

The content of silica in the rubber composition is preferably 40 parts by mass or more, more preferably 45 parts by mass or more, still more preferably 50 parts by mass or more, and even more preferably 55 parts by mass or more per 100 parts by mass of the rubber component (A), from the viewpoint of improving the mechanical strength and wear resistance of the tire. From the viewpoint of improving the wet gripping performance of the tire, the content of silica in the rubber composition is preferably 125 parts by mass or less, more preferably 105 parts by mass or less, still more preferably 100 parts by mass or less, and even more preferably 95 parts by mass or less per 100 parts by mass of the rubber component (A).

When the filler (C) contains both carbon black and silica, the proportion of silica in the total content of silica and carbon black is not particularly limited and can be adjusted as appropriate. For example, the proportion of silica in the total content of silica and carbon black is preferably 50 mass% or more, more preferably 70 mass% or more, still more preferably 80 mass% or more, even more preferably 90 mass% or more, and particularly preferably 95 mass% or more. Furthermore, the proportion of silica in the total content of silica and carbon black is preferably 98 mass% or less.

Further, when the filler (C) includes carbon black and silica, it is preferable that the proportion of silica in the filler (C) is 70 mass% or more. By setting the proportion of silica in the filler (C) to 70 mass% or more, the mechanical strength of a tire to which the rubber composition is applied is improved, and the rolling resistance can be further reduced (thereby further improving high fuel efficiency). The proportion of silica in the filler (C) is more preferably 80 mass% or more, still more preferably 85 mass% or more, and even more preferably 90 mass% or more and less than 100 mass%.

### (Antioxidant (D))

The rubber composition of the present embodiment includes, as the antioxidant (D), at least one selected from the group consisting of:
a compound represented by the following formula (1): 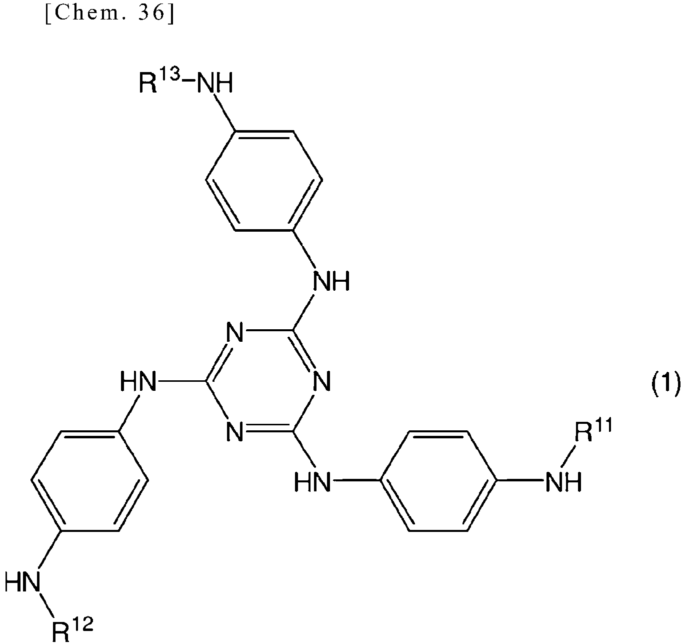 [In the formula, R¹¹, R¹², and R¹³ are each independently an alkyl group having 1 to 20 carbon atoms.]
a compound represented by the following formula (2): 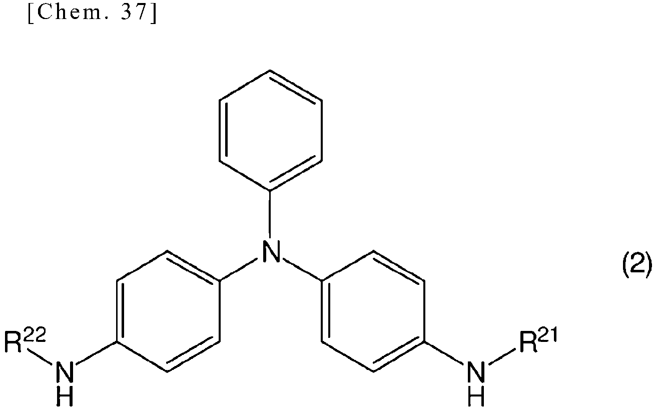 [In the formula, R²¹ and R²² are each independently an alkyl group having 1 to 20 carbon atoms.]
a compound represented by the following formula (3): 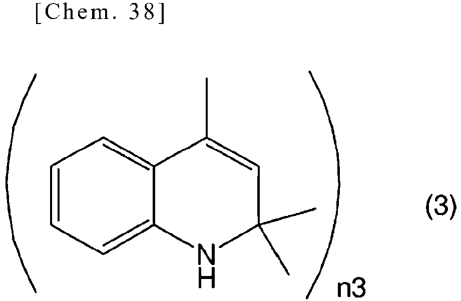 [In the formula, n3 is 2 to 5.]
a compound represented by the following formula (4): 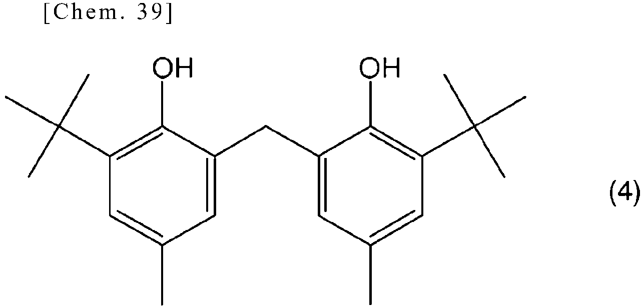
a compound represented by the following formula (5): 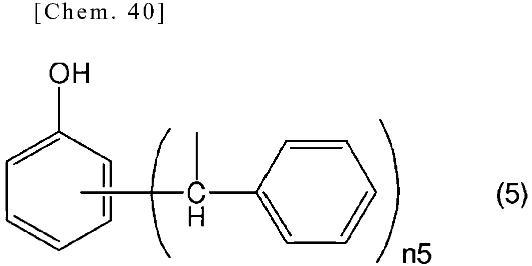 [In the formula, n5 is 2 to 5.]
a compound represented by the following formula (6): 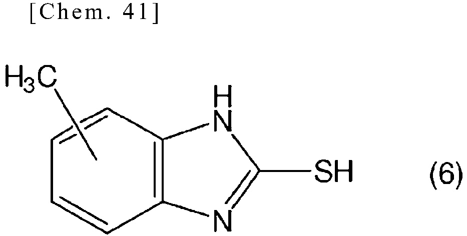
a compound represented by the following formula (7): 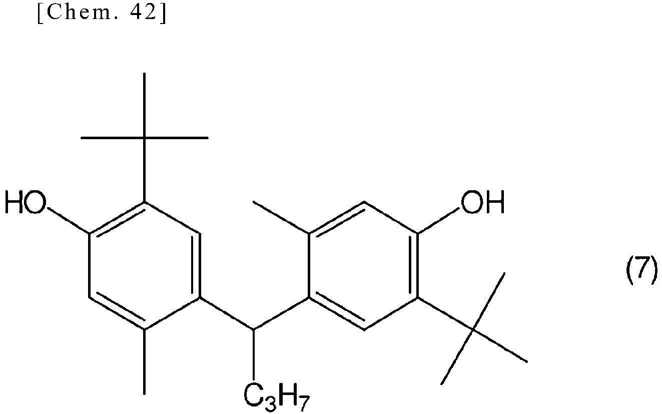
a compound represented by the following formula (8): 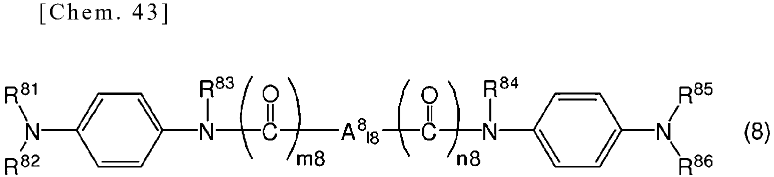 [In the formula, R⁸¹, R⁸², R⁸⁵, and R⁸⁶ each independently represent a hydrogen atom, an alkyl group having 1 to 10 carbon atoms, or a phenyl group, provided that the case where R⁸¹ and R⁸² are simultaneously hydrogen atoms and the case where R⁸⁵ and R⁸⁶ are simultaneously hydrogen atoms are excluded; R⁸³ and R⁸⁴ each independently represent an alkyl group having 1 to 8 carbon atoms or an aralkyl group; A⁸ represents an alkylene group having 1 to 12 carbon atoms; and l8, m8, and n8 each represent an integer of 0 or 1.]
a compound represented by the following formula (9): 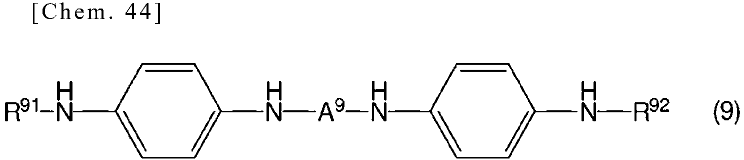 [In the formula, R⁹¹ and R⁹² each independently represent an alkyl group having 1 to 10 carbon atoms, an aralkyl group, or a phenyl group, and A⁹ represents an alkylene group having 6 to 30 carbon atoms and optionally having an interposed phenylene group.]
and a compound represented by the following formula (10): 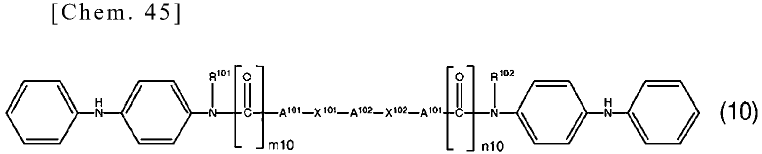 [In the formula, R¹⁰¹ and R¹⁰² each independently represent a hydrogen atom or an alkyl group having 1 to 6 carbon atoms; m10 and n10 each represent an integer of 0 or 1; each A¹⁰¹ independently represents an alkylene group having 1 to 7 carbon atoms; A¹⁰² represents an alkylene group having 1 to 8 carbon atoms; X¹⁰¹ represents an oxygen atom, a sulfur atom, or a -NR¹⁰³- group; X¹⁰² represents an oxygen atom, a sulfur atom, or a -NR¹⁰⁴- group; and R¹⁰³ and R¹⁰⁴ are each independently a hydrogen atom or an alkyl group having 1 to 4 carbon atoms, or R¹⁰³ and R¹⁰⁴ together may form an alkylene group having 1 to 4 carbon atoms.]

Any one or more selected from the group consisting of the above compounds may be included. The compounds represented by any of formulas (1) to (10) have the effect of improving the ozone resistance of the rubber composition and can suppress cracking of tread rubber to which the rubber composition is applied.

The content of the antioxidant (D) is preferably in the range of 0.1 to 11 parts by mass per 100 parts by mass of the rubber component (A). When the content of the antioxidant (D) is 0.1 part by mass or more per 100 parts by mass of the rubber component (A), sufficient ozone resistance of the rubber composition can be ensured. Further, when the content of the antioxidant (D) is 11 parts by mass or less per 100 parts by mass of the rubber component (A), adverse effects on rubber physical properties other than ozone resistance (such as heat buildup) are reduced, making it suitable for use as tread rubber for tires. From the viewpoint of ozone resistance (suppression of cracking), the content of the antioxidant (D) is more preferably 0.5 part by mass or more, still more preferably 1 part by mass or more, per 100 parts by mass of the rubber component (A). From the viewpoint of effects on other rubber physical properties, the content is more preferably 10 parts by mass or less, still more preferably 9 parts by mass or less, per 100 parts by mass of the rubber component (A).

### - Compound of formula (1) -

In the compound represented by the above formula (1), R¹¹, R¹², and R¹³ in formula (1) are each independently an alkyl group having 1 to 20 carbon atoms, and such alkyl group may be linear, branched, or cyclic. Examples of alkyl groups having 1 to 20 carbon atoms include a methyl group, ethyl group, propyl group, butyl group, pentyl group, hexyl group, heptyl group, octyl group, decyl group, dodecyl group, tridecyl group, tetradecyl group, pentadecyl group, hexadecyl group, heptadecyl group, stearyl group, cyclopentyl group, cyclohexyl group, and the like.

Specific examples of the compound represented by the above formula (1) include 2,4,6-tris(N-1,4-dimethylpentyl-p-phenylenediamino)-1,3,5-triazine, 2,4,6-tris(N-isopropyl-p-phenylenediamino)-1,3,5-triazine, 2,4,6-tris(N-cyclohexyl-p-phenylenediamino)-1,3,5-triazine, 2,4,6-tris(N-sec-butyl-p-phenylenediamino)-1,3,5-triazine, 2,4,6-tris(N-1,3-dimethylbutyl-p-phenylenediamino)-1,3,5-triazine, 2,4,6-tris(N-1-methylheptyl-p-phenylenediamino)-1,3,5-triazine, 2,4,6-tris(N-2,4-di-tert-butylcyclohexyl-p-phenylenediamino)-1,3,5-triazine, 2,4,6-tris(N-2-sec-butylcyclohexyl-p-phenylenediamino)-1,3,5-triazine, 2,4,6-tris(N-2-decyl-p-phenylenediamino)-1,3,5-triazine, 2,4,6-tris(N-2-dodecyl-p-phenylenediamino)-1,3,5-triazine, 2,4,6-tris(N-2-tetradecyl-p-phenylenediamino)-1,3,5-triazine, 2,4,6-tris(N-2-pentadecyl-p-phenylenediamino)-1,3,5-triazine, 2,4,6-tris(N-2-hexadecyl-p-phenylenediamino)-1,3,5-triazine, and the like. Among these, the compound represented by the following structural formula (1-1): 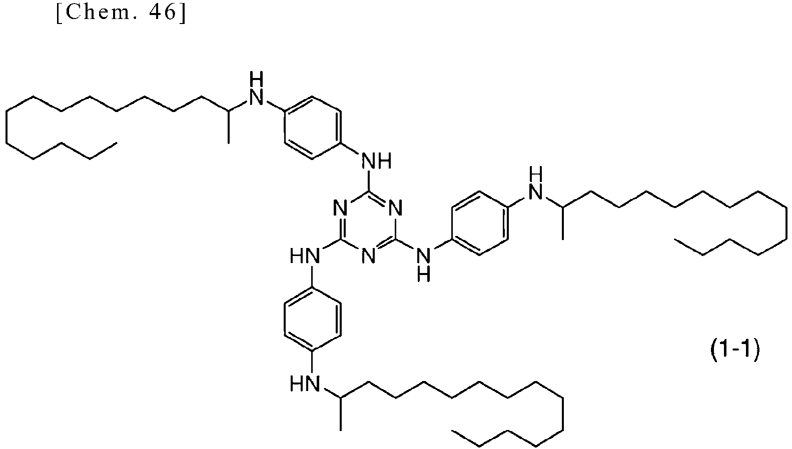 that is, 2,4,6-tris(N-2-pentadecyl-p-phenylenediamino)-1,3,5-triazine, is preferred.

### - Compound of formula (2) -

In the compound represented by the above formula (2), R²¹ and R²² in formula (2) are each independently an alkyl group having 1 to 20 carbon atoms, and such alkyl group may be linear, branched, or cyclic. Examples of alkyl groups having 1 to 20 carbon atoms include a methyl group, ethyl group, propyl group, butyl group, pentyl group, hexyl group, heptyl group, octyl group, decyl group, dodecyl group, tridecyl group, tetradecyl group, pentadecyl group, hexadecyl group, heptadecyl group, stearyl group, cyclopentyl group, cyclohexyl group, and the like.

Specific examples of the compound represented by the above formula (2) include 4,4'-bis(isopropylamino)triphenylamine, 4,4'-bis(1,3-dimethylbutylamino)triphenylamine, 4,4'-bis(1,4-dimethylpentylamino)triphenylamine, and the like.

### - Compound of formula (3) -

In the compound represented by the above formula (3), n3 in formula (3) is 2 to 5.

Specific examples of the compound represented by the above formula (3) include 2,2,4-trimethyl-1,2-dihydroquinoline polymer (TMDQ), and the like.

### - Compound of formula (4) -

The compound represented by the above formula (4) is 2,2'-methylene-bis(4-methyl-6-tert-butylphenol).

### - Compound of formula (5) -

In the compound represented by the above formula (5), n5 in formula (5) is 2 to 5.

Specific examples of the compound represented by the above formula (5) include di(α-methylbenzyl)phenol, tri(α-methylbenzyl)phenol, and the like.

### - Compound of formula (6) -

The compound represented by the above formula (6) is 2-mercaptomethylbenzimidazole.

### - Compound of formula (7) -

The compound represented by the above formula (7) is 4,4'-butylidenebis(3-methyl-6-tert-butylphenol).

### - Compound of formula (8) -

The compound represented by the above formula (8) (hereinafter, sometimes referred to as a "bisphenyl diamine compound") has a higher molecular weight compared to conventional antioxidants, and, as indicated in formula (8), has a unique and relatively long chain-length bridge portion, that is, a portion constituted by the following formula (8A):

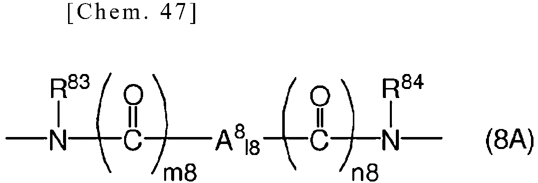

Such a bisphenyl diamine compound, due to its high molecular weight and the presence of the unique bridge portion, is considered to reduce the diffusion rate in the rubber composition and further suppress migration to the rubber surface.

In the bisphenyl diamine compound represented by formula (8), R⁸¹, R⁸², R⁸⁵, and R⁸⁶ are each independently a hydrogen atom, an alkyl group having 1 to 10 carbon atoms, or a phenyl group; however, from the viewpoint of sufficiently improving weather resistance and preventing discoloration, it is preferable that either R⁸¹ or R⁸² is a hydrogen atom and either R⁸⁵ or R⁸⁶ is a hydrogen atom, and it is more preferable that either R⁸¹ or R⁸² is a hydrogen atom and the other is an alkyl group having 1 to 4 carbon atoms, and either R⁸⁵ or R⁸⁶ is a hydrogen atom and the other is an alkyl group having 1 to 4 carbon atoms.

Further, in the bisphenyl diamine compound represented by formula (8), R⁸³ and R⁸⁴ are each independently an alkyl group having 1 to 8 carbon atoms or an aralkyl group; however, from the viewpoint of sufficiently improving weather resistance and preventing discoloration, it is preferable that they are alkyl groups having 1 to 8 carbon atoms, more preferably alkyl groups having 1 to 4 carbon atoms, and particularly preferably alkyl groups having 1 to 3 carbon atoms.

Furthermore, in the bisphenyl diamine compound represented by formula (8), A⁸ is an alkylene group having 1 to 12 carbon atoms; however, from the viewpoint of sufficiently improving weather resistance and preventing discoloration, it is preferable that it is an alkylene group having 1 to 8 carbon atoms, more preferably an alkylene group having 1 to 4 carbon atoms, and particularly preferably an alkylene group having 1 to 2 carbon atoms. The alkylene group may be linear, branched, or cyclic.

Furthermore, in the bisphenyl diamine compound represented by formula (8), l8, m8, and n8 are integers of 0 or 1; however, from the viewpoint of sufficiently improving weather resistance and preventing discoloration, it is preferable that l8 is 1 and m8 and n8 are 0.

Here, examples of the alkyl group having 1 to 4 carbon atoms include linear, branched, or cyclic alkyl groups having 1 to 4 carbon atoms such as a methyl group, ethyl group, n-propyl group, isopropyl group, n-butyl group, isobutyl group, sec-butyl group, tert-butyl group, cyclobutyl group, and the like.

Further, examples of the alkyl group having 1 to 8 carbon atoms include the above-mentioned alkyl groups having 1 to 4 carbon atoms, as well as various pentyl groups such as an n-pentyl group, isopentyl group, neopentyl group, tert-pentyl group, and cyclopentyl group, various hexyl groups such as an n-hexyl group, isohexyl group, 4-methyl-2-pentyl group, and cyclohexyl group, various heptyl groups such as an n-heptyl group and 4-heptyl group, various octyl groups such as an n-octyl group, isooctyl group, and 2-ethylhexyl group, and the like, which are linear, branched, or cyclic alkyl groups having 1 to 8 carbon atoms.

Further, examples of the alkyl group having 1 to 10 carbon atoms include the above-mentioned alkyl groups having 1 to 8 carbon atoms, as well as various nonyl groups such as an n-nonyl group, 3-ethylheptyl group, and 4-methyloctyl group, various decyl groups such as an n-decyl group and 4-ethyloctyl group, and the like, which are linear, branched, or cyclic alkyl groups having 1 to 10 carbon atoms.

Examples of the aralkyl group include a benzyl group, phenethyl group, and the like.

Examples of the alkylene group having 1 to 2 carbon atoms include a methylene group and ethylene group.

Further, examples of the alkylene group having 1 to 4 carbon atoms include the above-mentioned alkylene groups having 1 to 2 carbon atoms, as well as linear or branched alkylene groups having 1 to 4 carbon atoms such as a trimethylene group, propylene group, dimethylmethylene group, 2-methyltrimethylene group, tetramethylene group, and the like.

Further, examples of the alkylene group having 1 to 8 carbon atoms include the above-mentioned alkylene groups having 1 to 4 carbon atoms, as well as linear or branched alkylene groups having 1 to 8 carbon atoms such as a pentamethylene group, hexamethylene group, 1,4-dimethyltetramethylene group, heptamethylene group, octamethylene group, and the like.

Further, examples of the alkylene group having 1 to 10 carbon atoms include the above-mentioned alkylene groups having 1 to 8 carbon atoms, as well as linear or branched alkylene groups having 1 to 10 carbon atoms such as a nonamethylene group, decamethylene group, 1,8-dimethyloctamethylene group, and the like.

Further, examples of the alkylene group having 1 to 12 carbon atoms include the above-mentioned alkylene groups having 1 to 10 carbon atoms, as well as linear or branched alkylene groups having 1 to 12 carbon atoms such as an undecamethylene group, dodecamethylene group, 1,10-dimethyldecamethylene group, and the like.

Examples of the compound of the above formula (8) include N,N'-bis[4-(isopropylamino)phenyl]-N,N'-dimethylethane-1,2-diamine, N,N'-diisopropyl-N,N'-bis[4-(isopropylamino)phenyl]ethane-1,2-diamine, N,N'-diisopropyl-N,N'-bis[4-(pentan-3-ylamino)phenyl]ethane-1,2-diamine, N,N'-dibenzyl-N,N'-bis[4-(pentan-3-ylamino)phenyl]ethane-1,2-diamine, N,N'-bis[4-(diisopropylamino)phenyl]-N,N'-diisopropylethane-1,2-diamine, N,N'-bis(4-anilinophenyl)-N,N'-diisopropyldecane-1,10-diamine, N,N'-bis(4-anilinophenyl)-N,N'-bis(4-methylpentan-2-yl)oxamide, N,N'-bis(4-anilinophenyl)-N,N'-bis(4-methylpentan-2-yl)adipamide, N,N'-diethyl-N,N'-bis[4-(isopropylamino)phenyl]ethane-1,2-diamine, N,N'-diisopropyl-N,N'-bis[4-(isopropylamino)phenyl]hexane-1,6-diamine, N,N'-bis[4-(heptan-4-ylamino)phenyl]-N,N'-diisopropylethane-1,2-diamine, N,N'-bis(4-anilinophenyl)-N,N'-diisopentylpentane-1,5-diamine, N,N'-bis(4-anilinophenyl)-N,N'-bis(4-methylpentan-2-yl)pentane-1,5-diamine, N,N'-bis(4-anilinophenyl)-N,N'-diisopropylhexane-1,6-diamine, and the like.

Among these, N,N'-bis[4-(isopropylamino)phenyl]-N,N'-dimethylethane-1,2-diamine, N,N'-diisopropyl-N,N'-bis[4-(isopropylamino)phenyl]ethane-1,2-diamine, N,N'-diisopropyl-N,N'-bis[4-(pentan-3-ylamino)phenyl]ethane-1,2-diamine, N,N'-bis[4-(diisopropylamino)phenyl]-N,N'-diisopropylethane-1,2-diamine, N,N'-bis(4-anilinophenyl)-N,N'-diisopropyldecane-1,10-diamine, N,N'-diethyl-N,N'-bis[4-(isopropylamino)phenyl]ethane-1,2-diamine, N,N'-diisopropyl-N,N'-bis[4-(isopropylamino)phenyl]hexane-1,6-diamine, N,N'-bis(4-anilinophenyl)-N,N'-diisopentylpentane-1,5-diamine, N,N'-bis(4-anilinophenyl)-N,N'-bis(4-methylpentan-2-yl)pentane-1,5-diamine, and N,N'-bis(4-anilinophenyl)-N,N'-diisopropylhexane-1,6-diamine are preferred.

Among these, compounds represented by any of the following structural formulas (8-1) to (8-5): 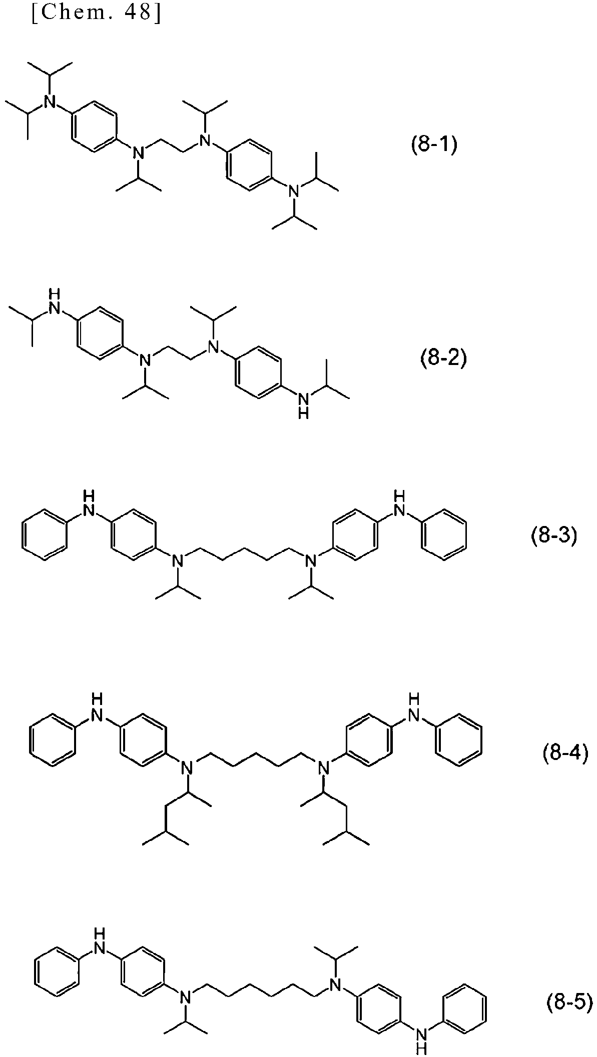 that is, N,N'-bis[4-(diisopropylamino)phenyl]-N,N'-diisopropylethane-1,2-diamine, N,N'-diisopropyl-N,N'-bis[4-(isopropylamino)phenyl]ethane-1,2-diamine, N,N'-bis(4-anilinophenyl)-N,N'-diisopentylpentane-1,5-diamine, N,N'-bis(4-anilinophenyl)-N,N'-bis(4-methylpentan-2-yl)pentane-1,5-diamine, and N,N'-bis(4-anilinophenyl)-N,N'-diisopropylhexane-1,6-diamine are particularly preferred.

### - Compound of formula (9) -

The compound represented by the above formula (9) (hereinafter, sometimes referred to as "amine compound") has a higher molecular weight compared to conventional antioxidants, and, as indicated in formula (9), possesses a unique and relatively long chain-length bridging portion, that is, a portion constituted by "-NH-A⁹-NH-". It is considered that such an amine compound, due to its high molecular weight and the presence of the unique bridging portion, exhibits a reduced diffusion rate in the rubber composition, thereby further suppressing migration to the rubber surface. Furthermore, the amine compound has one hydrogen atom bonded to each of the two nitrogen atoms present at both ends of A⁹ in formula (9) (thus forming so-called secondary amino groups), and the presence of such bonds in the structure represented by formula (9) is considered to contribute to the unique effect of improving weather resistance.

In the amine compound represented by formula (9), R⁹¹ and R⁹² are each independently an alkyl group having 1 to 10 carbon atoms, an aralkyl group, or a phenyl group; however, from the viewpoint of sufficiently improving weather resistance and preventing discoloration, it is preferable that they are branched alkyl groups having 5 to 8 carbon atoms, aralkyl groups, or phenyl groups, and more preferably phenyl groups.

Further, in the amine compound represented by formula (9), A⁹ is an alkylene group having 6 to 30 carbon atoms and optionally having an interposed phenylene group; however, from the viewpoint of sufficiently improving weather resistance and preventing discoloration, it is preferable that A⁹ is a straight-chain or branched alkylene group having 8 to 24 carbon atoms, more preferably a straight-chain or branched alkylene group having 10 to 22 carbon atoms, and even more preferably an alkylene group having 12 to 20 carbon atoms represented by the following formula (9A) (that is, in the formula, m9 is an integer of 8 to 16): 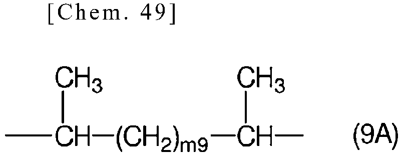 and particularly preferably an alkylene group having 14 to 18 carbon atoms represented by the above formula (9A) (that is, in the formula, m9 is an integer of 10 to 14).

That is, as the amine compound represented by formula (9), the following formula (9B): 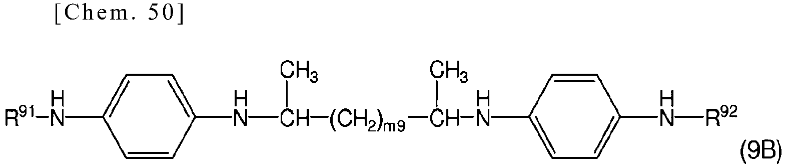 [In the formula, R⁹¹ and R⁹² are as defined above.] is more preferable when m9 is an integer of 8 to 16, and particularly preferable when m9 is an integer of 10 to 14.

Among the compounds represented by formula (9), it is preferable that R⁹¹ and R⁹² are branched alkyl groups having 5 to 8 carbon atoms, aralkyl groups, or phenyl groups, and more preferably phenyl groups.

Here, examples of the alkyl group having 1 to 4 carbon atoms include straight-chain or branched alkyl groups having 1 to 4 carbon atoms such as a methyl group, ethyl group, n-propyl group, isopropyl group, n-butyl group, isobutyl group, sec-butyl group, and tert-butyl group.

Further, examples of the alkyl group having 1 to 10 carbon atoms include, in addition to the groups exemplified as the alkyl group having 1 to 4 carbon atoms, various pentyl groups such as an n-pentyl group, isopentyl group, neopentyl group, and tert-pentyl group; various hexyl groups such as an n-hexyl group, isohexyl group, and 4-methyl-2-pentyl group; various heptyl groups such as an n-heptyl group and 4-heptyl group; various octyl groups such as an n-octyl group, isooctyl group, and 2-ethylhexyl group; various nonyl groups such as an n-nonyl group, 3-ethylheptyl group, and 4-methyloctyl group; various decyl groups such as an n-decyl group and 4-ethyloctyl group; and straight-chain or branched alkyl groups having 1 to 10 carbon atoms.

Examples of the aralkyl group include benzyl group and phenethyl group.

Examples of the alkylene group having 6 to 30 carbon atoms include straight-chain or branched alkylene groups having 6 to 30 carbon atoms such as a hexamethylene group, 1,4-dimethyltetramethylene group, heptamethylene group, octamethylene group, nonamethylene group, decamethylene group, 1,8-dimethyloctamethylene group, dodecamethylene group, 1,10-dimethyldecamethylene group, tetradecamethylene group, 1,12-dimethylundecamethylene group, hexadecamethylene group, 1,14-dimethyltetradecamethylene group, 1,12-diethylundecamethylene group, octadecamethylene group, 1,16-dimethyloctadecamethylene group, icosamethylene group, henicosamethylene group, docosamethylene group, and triacontamethylene group.

Further, the alkylene group having 6 to 30 carbon atoms representing A⁹ in formula (9) may optionally have an interposed phenylene group, and examples of such alkylene groups include: 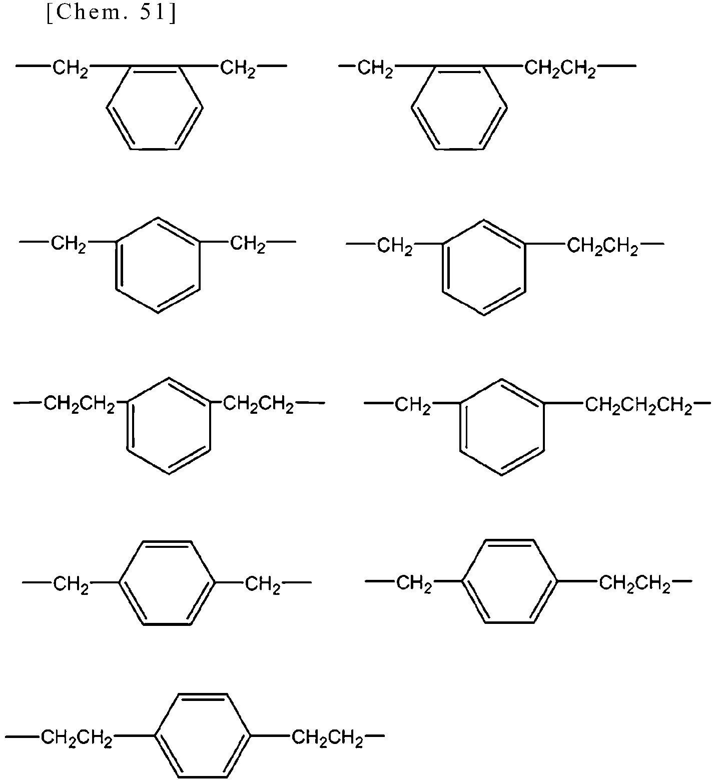 and the like.

Examples of the compound of the above formula (9) include N,N'-bis[4-(isopropylamino)phenyl]hexane-1,6-diamine; N,N'-bis(4-anilinophenyl)hexane-1,6-diamine; N,N'-bis[4-(4-methylpentan-2-ylamino)phenyl]decane-1,10-diamine; N,N'-bis[4-(heptan-4-ylamino)phenyl]decane-1,10-diamine; N,N'-bis(4-benzylaminophenyl)decane-1,10-diamine; N,N'-bis(4-anilinophenyl)decane-1,10-diamine; N,N'-bis(4-anilinophenyl)dodecane-2,11-diamine; N,N'-bis(4-anilinophenyl)hexadecane-2,15-diamine; N,N'-bis(4-anilinophenyl)tetradecane-2,13-diamine; N,N'-bis(4-anilinophenyl)octadecane-2,17-diamine; N,N'-bis(4-anilinophenyl)icosane-1,20-diamine; N,N'-bis[4-(isobutylamino)phenyl]benzene-1,3-dimethanamine; N,N'-bis[4-(sec-butylamino)phenyl]benzene-1,3-dimethanamine; N,N'-bis[4-(isobutylamino)phenyl]benzene-1,4-dimethanamine; and N,N'-bis[4-(sec-butylamino)phenyl]benzene-1,4-dimethanamine.

Among these, N,N'-bis[4-(4-methylpentan-2-ylamino)phenyl]decane-1,10-diamine; N,N'-bis[4-(heptan-4-ylamino)phenyl]decane-1,10-diamine; N,N'-bis(4-anilinophenyl)decane-1,10-diamine; N,N'-bis(4-anilinophenyl)dodecane-2,11-diamine; N,N'-bis(4-anilinophenyl)hexadecane-2,15-diamine; N,N'-bis(4-anilinophenyl)tetradecane-2,13-diamine; N,N'-bis(4-anilinophenyl)octadecane-2,17-diamine; N,N'-bis(4-anilinophenyl)icosane-1,20-diamine; N,N'-bis[4-(isobutylamino)phenyl]benzene-1,3-dimethanamine; N,N'-bis[4-(sec-butylamino)phenyl]benzene-1,3-dimethanamine; N,N'-bis[4-(isobutylamino)phenyl]benzene-1,4-dimethanamine; and N,N'-bis[4-(sec-butylamino)phenyl]benzene-1,4-dimethanamine are preferable.

Among these, compounds represented by any of the following structural formulas (9-1) to (9-9): 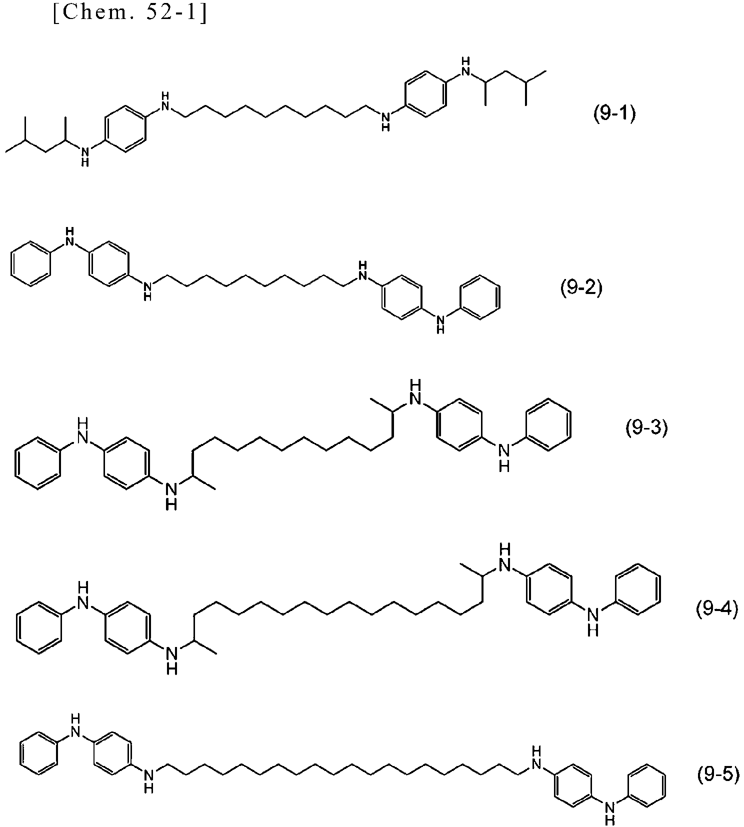 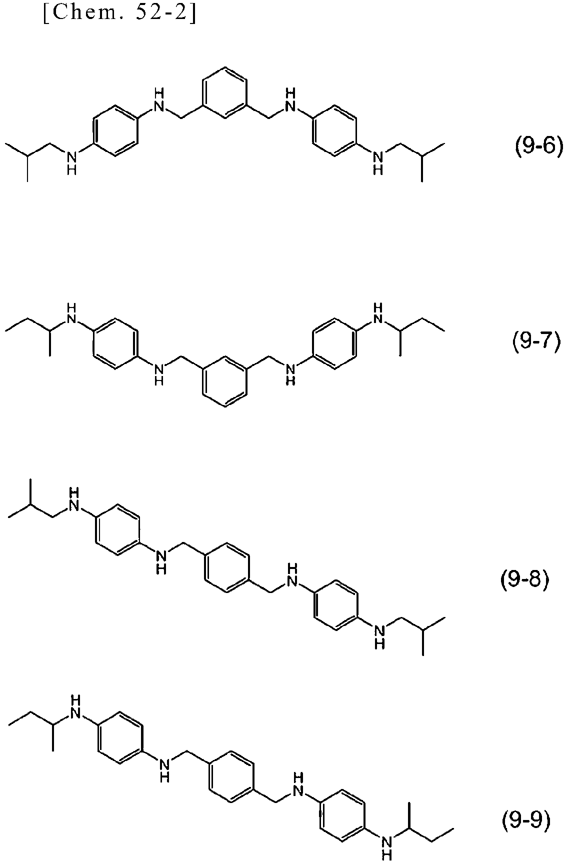 that is, N,N'-bis[4-(4-methylpentan-2-ylamino)phenyl]decane-1,10-diamine; N,N'-bis(4-anilinophenyl)decane-1,10-diamine; N,N'-bis(4-anilinophenyl)tetradecane-2,13-diamine; N,N'-bis(4-anilinophenyl)octadecane-2,17-diamine; N,N'-bis(4-anilinophenyl)icosane-1,20-diamine; N,N'-bis[4-(isobutylamino)phenyl]benzene-1,3-dimethanamine; N,N'-bis[4-(sec-butylamino)phenyl]benzene-1,3-dimethanamine; N,N'-bis[4-(isobutylamino)phenyl]benzene-1,4-dimethanamine; and N,N'-bis[4-(sec-butylamino)phenyl]benzene-1,4-dimethanamine are particularly preferable.

### - Compound of formula (10) -

The compound represented by the above formula (10) (hereinafter, sometimes referred to as "bis-anilino compound") has a higher molecular weight compared to conventional antioxidants, and, as indicated in formula (10), possesses a unique and relatively long chain-length bridging portion, that is, a portion constituted by "-A¹⁰¹-X¹⁰¹-A¹⁰²-X¹⁰²-A¹⁰¹-". It is considered that such a bis-anilino compound, due to its high molecular weight and the presence of the unique bridging portion, exhibits a reduced diffusion rate in the rubber composition, thereby further suppressing migration to the rubber surface.

In the bis-anilino compound represented by formula (10), R¹⁰¹ and R¹⁰² are each independently a hydrogen atom or an alkyl group having 1 to 6 carbon atoms; however, from the viewpoint of sufficiently improving weather resistance and preventing discoloration, it is preferable that they are each independently an alkyl group having 3 to 6 carbon atoms, and more preferably an alkyl group having 3 to 5 carbon atoms.

Further, in the bis-anilino compound represented by formula (10), m10 and n10 are each an integer of 0 or 1; however, from the viewpoint of sufficiently improving weather resistance and preventing discoloration, it is preferable that both are 0.

Further, in the bis-anilino compound represented by formula (10), A¹⁰¹ is an alkylene group having 1 to 7 carbon atoms; however, from the viewpoint of sufficiently improving weather resistance and preventing discoloration, it is preferable that it is an alkylene group having 1 to 4 carbon atoms, more preferably an alkylene group having 1 to 3 carbon atoms, and particularly preferably a methylene group or an ethylene group. Also, A¹⁰² in the bis-anilino compound represented by formula (10) is an alkylene group having 1 to 8 carbon atoms; however, from the viewpoint of sufficiently improving weather resistance and preventing discoloration, it is preferable that it is an alkylene group having 5 to 8 carbon atoms, and more preferably an alkylene group having 6 to 7 carbon atoms.

Furthermore, in the bis-anilino compound represented by formula (10), X¹⁰¹ is an oxygen atom, a sulfur atom, or a -NR¹⁰³-group, and X¹⁰² is an oxygen atom, a sulfur atom, or a -NR¹⁰⁴-group, where R¹⁰³ and R¹⁰⁴ are each independently a hydrogen atom or an alkyl group having 1 to 4 carbon atoms, or R¹⁰³ and R¹⁰⁴ together may form an alkylene group having 1 to 4 carbon atoms. Here, the alkyl group may be straight-chain, branched, or cyclic. When R¹⁰³ and R¹⁰⁴ together form an alkylene group, a cyclic structure is formed by X¹⁰¹, A¹⁰², and X¹⁰². From the viewpoint of sufficiently improving weather resistance and preventing discoloration, it is preferable that X¹⁰¹ is an oxygen atom or a -NR¹⁰³- group, and more preferably an oxygen atom. Also, it is preferable that X¹⁰² is an oxygen atom or a -NR¹⁰⁴- group, and more preferably an oxygen atom.

Here, examples of the alkyl group having 1 to 4 carbon atoms include straight-chain, branched, or cyclic alkyl groups having 1 to 4 carbon atoms such as a methyl group, ethyl group, n-propyl group, isopropyl group, n-butyl group, isobutyl group, sec-butyl group, tert-butyl group, and cyclobutyl group.

Further, examples of the alkyl group having 1 to 6 carbon atoms include, in addition to the groups exemplified as the alkyl group having 1 to 4 carbon atoms, various pentyl groups such as an n-pentyl group, isopentyl group, neopentyl group, tert-pentyl group, and cyclopentyl group; various hexyl groups such as an n-hexyl group, isohexyl group, 4-methyl-2-pentyl group, and cyclohexyl group; and straight-chain, branched, or cyclic alkyl groups having 1 to 6 carbon atoms.

Further, examples of the alkyl group having 3 to 5 carbon atoms include straight-chain, branched, or cyclic alkyl groups having 3 to 5 carbon atoms among the groups exemplified as the alkyl group having 1 to 6 carbon atoms.

Further, examples of the alkyl group having 3 to 6 carbon atoms include straight-chain, branched, or cyclic alkyl groups having 3 to 6 carbon atoms among the groups exemplified as the alkyl group having 1 to 6 carbon atoms.

Examples of the alkylene group having 1 to 3 carbon atoms include straight-chain or branched alkylene groups having 1 to 3 carbon atoms such as a methylene group, ethylene group, trimethylene group, propylene group, and dimethylmethylene group.

Further, examples of the alkylene group having 1 to 4 carbon atoms include, in addition to the groups exemplified as the alkylene group having 1 to 3 carbon atoms, straight-chain or branched alkylene groups having 1 to 4 carbon atoms such as a 2-methyltrimethylene group and tetramethylene group.

Further, examples of the alkylene group having 1 to 7 carbon atoms include, in addition to the groups exemplified as the alkylene group having 1 to 4 carbon atoms, straight-chain or branched alkylene groups having 1 to 7 carbon atoms such as a pentamethylene group, 2,2-dimethyltrimethylene group, hexamethylene group, 1,4-dimethyltetramethylene group, and heptamethylene group.

Further, examples of the alkylene group having 1 to 8 carbon atoms include, in addition to the groups exemplified as the alkylene group having 1 to 7 carbon atoms, straight-chain or branched alkylene groups having 1 to 8 carbon atoms such as various octamethylene groups.

Further, examples of the alkylene group having 5 to 8 carbon atoms include straight-chain or branched alkylene groups having 5 to 8 carbon atoms among the groups exemplified as the alkylene group having 1 to 8 carbon atoms.

Further, examples of the alkylene group having 6 to 7 carbon atoms include straight-chain or branched alkylene groups having 6 to 7 carbon atoms among the groups exemplified as the alkylene group having 1 to 8 carbon atoms.

Examples of the compound represented by the above formula (10) include N,N'-bis(4-anilinophenyl)-3,3'-(hexane-1,6-diyldiimino)dipropanamide, N,N'-bis(4-anilinophenyl)-2,2'-[hexane-1,6-diylbis(sulfandiyl)]bisacetamide, N,N'-bis(4-anilinophenyl)-N,N'-diisopropyl-2,2'-[hexane-1,6-diylbis(sulfandiyl)]bisacetamide, N,N'-bis[2-(4-anilinoanilino)ethyl]-N,N'-dimethylethane-1,2-diamine, N,N'-bis{2-[(4-anilinophenyl)(isopropyl)amino]ethyl}-N,N'-dimethylethane-1,2-diamine, N',N‴-diphenyl-N,N"-[hexane-1,6-diylbis(oxyethylene)]dibenzene-1,4-diamine, N,N"-diisopropyl-N',N‴-diphenyl-N,N"-[hexane-1,6-diylbis(oxyethylene)]dibenzene-1,4-diamine, N',N‴-diphenyl-N,N"-[ethylenebis(oxypentane-5,2-diyl)]dibenzene-1,4-diamine, N,N'-bis(4-anilinophenyl)-N,N'-diisopropyl-2,2'-(butane-1,4-diyldioxy)bisacetamide, N,N'-bis(4-anilinophenyl)-2,2'-[butane-1,4-diylbis(sulfandiyl)]bisacetamide, N,N'-bis(4-anilinophenyl)-N,N'-diisopropyl-2,2'-[butane-1,4-diylbis(sulfandiyl)]bisacetamide, N,N"-diisopropyl-N',N‴-diphenyl-N,N"-(piperazine-1,4-diyldiethylene)dibenzene-1,4-diamine, N',N‴-diphenyl-N,N"-[2-methylpropane-1,3-diylbis(oxyethylene)]dibenzene-1,4-diamine, N',N‴-diphenyl-N,N"-[(2,2-dimethylpropane-1,3-diyl)bis(oxyethylene)]dibenzene-1,4-diamine, and N,N"-diisopropyl-N',N‴-diphenyl-N,N"-[butane-1,4-diylbis(oxyethylene)]dibenzene-1,4-diamine.

Among these, N',N'''-diphenyl-N,N"-[hexane-1,6-diylbis(oxyethylene)]dibenzene-1,4-diamine, N,N"-diisopropyl-N',N'''-diphenyl-N,N"-[hexane-1,6-diylbis(oxyethylene)]dibenzene-1,4-diamine, N',N‴-diphenyl-N,N"-[ethylenebis(oxypentane-5,2-diyl)]dibenzene-1,4-diamine, N,N'-bis(4-anilinophenyl)-N,N'-diisopropyl-2,2'-(butane-1,4-diyldioxy)bisacetamide, N,N'-bis(4-anilinophenyl)-2,2'-[butane-1,4-diylbis(sulfandiyl)]bisacetamide, N,N'-bis(4-anilinophenyl)-N,N'-diisopropyl-2,2'-[butane-1,4-diylbis(sulfandiyl)]bisacetamide, N,N"-diisopropyl-N',N‴-diphenyl-N,N"-(piperazine-1,4-diyldiethylene)dibenzene-1,4-diamine, N',N‴-diphenyl-N,N"-[2-methylpropane-1,3-diylbis(oxyethylene)]dibenzene-1,4-diamine, N',N‴-diphenyl-N,N"-[(2,2-dimethylpropane-1,3-diyl)bis(oxyethylene)]dibenzene-1,4-diamine, and N,N"-diisopropyl-N',N‴-diphenyl-N,N"-[butane-1,4-diylbis(oxyethylene)]dibenzene-1,4-diamine are preferred.

Furthermore, among these, compounds represented by any of the following structural formulas (10-1) to (10-7): 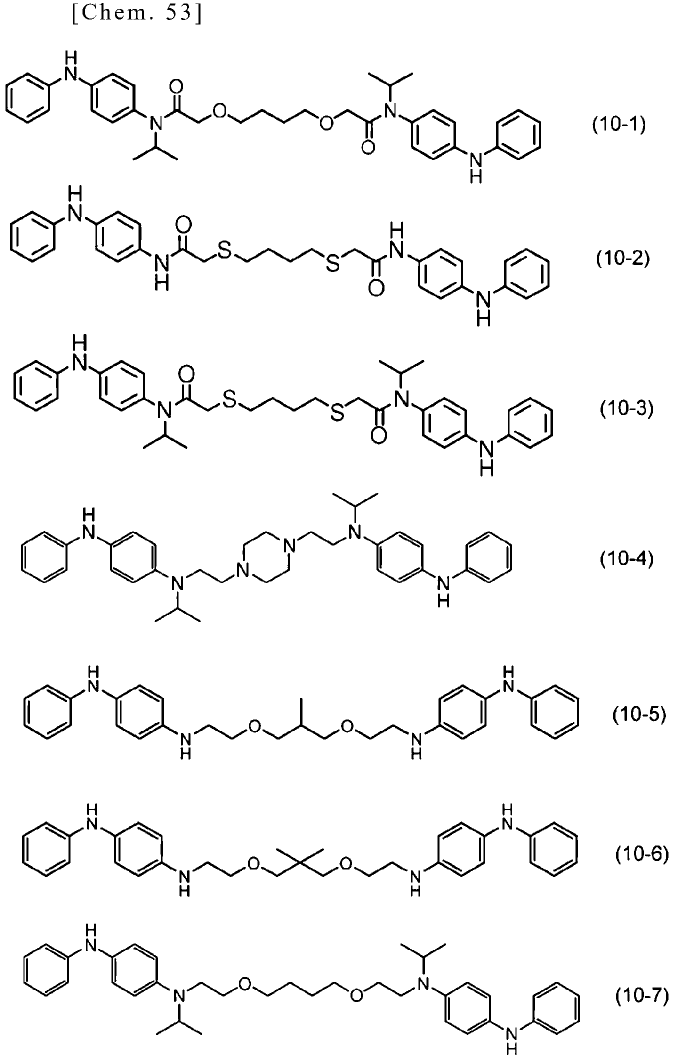 are particularly preferred, namely, N,N'-bis(4-anilinophenyl)-N,N'-diisopropyl-2,2'-(butane-1,4-diyldioxy)bisacetamide, N,N'-bis(4-anilinophenyl)-2,2'-[butane-1,4-diylbis(sulfandiyl)]bisacetamide, N,N'-bis(4-anilinophenyl)-N,N'-diisopropyl-2,2'-[butane-1,4-diylbis(sulfandiyl)]bisacetamide, N,N"-diisopropyl-N',N‴-diphenyl-N,N"-(piperazine-1,4-diyldiethylene)dibenzene-1,4-diamine, N',N'''-diphenyl-N,N"-[2-methylpropane-1,3-diylbis(oxyethylene)]dibenzene-1,4-diamine, N',N‴-diphenyl-N,N"-[(2,2-dimethylpropane-1,3-diyl)bis(oxyethylene)]dibenzene-1,4-diamine, and N,N"-diisopropyl-N',N‴-diphenyl-N,N"-[butane-1,4-diylbis(oxyethylene)]dibenzene-1,4-diamine.

### - Other Antioxidants -

The rubber composition of the present embodiment may contain antioxidants other than the compounds represented by any of the above formulas (1) to (10). Examples of such other antioxidants include N-(1,3-dimethylbutyl)-N'-phenyl-p-phenylenediamine (6PPD), N,N'-bis(1,4-dimethylpentyl)-p-phenylenediamine (77PD), N,N'-diphenyl-p-phenylenediamine (DPPD), N,N'-bis(1-ethyl-3-methylpentyl)-p-phenylenediamine, 6-ethoxy-2,2,4-trimethyl-1,2-dihydroquinoline (AW), and 6-anilino-2,2,4-trimethyl-1,2-dihydroquinoline, among others; however, among these, it is preferable not to include N-(1,3-dimethylbutyl)-N'-phenyl-p-phenylenediamine (6PPD). Commercially available products can be used as the antioxidant, and examples of commercially available antioxidants include products from Ouchi Shinko Chemical Industrial Co., Ltd., Sumitomo Chemical Co., Ltd., Seiko-Chemical Co., Ltd., and Flexsys, among others. These antioxidants may be used alone or in combination of two or more.

The content of the above other antioxidant is not particularly limited and may be appropriately adjusted, for example, according to the target performance of the tire to which it is applied. For example, the content of the antioxidant is preferably not less than 0.1 part by mass, more preferably not less than 1 part by mass, still more preferably not less than 1.5 parts by mass, and even more preferably not less than 2 parts by mass, per 100 parts by mass of the rubber component (A); and preferably not more than 12 parts by mass, more preferably not more than 10 parts by mass, still more preferably not more than 8 parts by mass, even more preferably not more than 5 parts by mass, and most preferably not more than 4 parts by mass.

### (Silane Coupling Agent)

When the rubber composition of the present embodiment contains silica as the filler (C), it is preferable that the rubber composition further contains a silane coupling agent in order to enhance the effect of the silica. Examples of such silane coupling agents include bis(3-triethoxysilylpropyl)tetrasulfide, bis(3-triethoxysilylpropyl)trisulfide, bis(3-triethoxysilylpropyl)disulfide, bis(2-triethoxysilylethyl)tetrasulfide, bis(3-trimethoxysilylpropyl)tetrasulfide, bis(2-trimethoxysilylethyl)tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyltetrasulfide, 3-triethoxysilylpropyl-N,N-dimethylthiocarbamoyltetrasulfide, 2-triethoxysilylethyl-N,N-dimethylthiocarbamoyltetrasulfide, 3-trimethoxysilylpropylbenzothiazolyltetrasulfide, 3-triethoxysilylpropylbenzothiazolyltetrasulfide, 3-triethoxysilylpropyl methacrylate monosulfide, 3-trimethoxysilylpropyl methacrylate monosulfide, bis(3-diethoxymethylsilylpropyl)tetrasulfide, 3-mercaptopropyldimethoxymethylsilane, dimethoxymethylsilylpropyl-N,N-dimethylthiocarbamoyltetrasulfide, and dimethoxymethylsilylpropylbenzothiazolyltetrasulfide, among others. Commercially available products can be used as the silane coupling agent, and examples of commercially available silane coupling agents include products from Evonik, Momentive, Shin-Etsu Chemical Co., Ltd., Dow Corning Toray Co., Ltd., Tokyo Chemical Industry Co., Ltd., and Azumax Co., Ltd., among others. These silane coupling agents may be used alone or in combination of two or more.

The content of the above silane coupling agent may be appropriately adjusted. For example, the content of the silane coupling agent is preferably not less than 1 part by mass, more preferably not less than 2 parts by mass, and still more preferably not less than 5 parts by mass, per 100 parts by mass of the above silica; and preferably not more than 20 parts by mass, more preferably not more than 15 parts by mass, still more preferably not more than 12 parts by mass, and most preferably not more than 10 parts by mass.

It should be noted that bioethanol can also be used as a raw material for the above silane coupling agent. Bioethanol is produced mainly from saccharides and/or cellulose as biological resources, and other biological resources such as proteins, lipids, and amino acids cannot be effectively utilized. Furthermore, saccharides compete with food, and excessive use of cellulose leads to deforestation. Therefore, depending on the supply situation of various biological resources, the supply situation of recycled resources, the supply situation of fossil resources, and market demands (for example, demand for biomass resources as food), it is preferable to use a plurality of types of ethanol derived from biological resources (bioethanol) as raw materials for the above silane coupling agent, or to use a combination of ethanol derived from biological resources (bioethanol), ethanol derived from recycled resources, and ethanol derived from fossil resources. In this way, a wide range of biological resources such as sugars, proteins, and lipids, as well as recycled resources, can be effectively utilized without relying on a single type of biological resource, and environmental considerations can also be addressed according to the situation during manufacturing.

### (Styrenic Thermoplastic Elastomer)

The rubber composition of the present embodiment may contain a styrenic thermoplastic elastomer (TPS). The styrenic thermoplastic elastomer (TPS) has a styrenic polymer block (hard segment) and a conjugated diene-based polymer block (soft segment), wherein the styrenic polymer portion forms physical crosslinks serving as bridging points, while the conjugated diene-based polymer block imparts rubber elasticity. The double bonds in the conjugated diene-based polymer block (soft segment) may be partially or wholly hydrogenated.

It should be noted that, in the present specification, the styrenic thermoplastic elastomer (TPS) is not included in the above rubber component (A). The content of the styrenic thermoplastic elastomer (TPS) is preferably in the range of 1 to 30 parts by mass per 100 parts by mass of the rubber component (A).

Examples of the above styrenic thermoplastic elastomer (TPS) include styrene/butadiene/styrene (SBS) block copolymer, styrene/isoprene/styrene (SIS) block copolymer, styrene/butadiene/isoprene/styrene (SBIS) block copolymer, styrene/butadiene (SB) block copolymer, styrene/isoprene (SI) block copolymer, styrene/butadiene/isoprene (SBI) block copolymer, styrene/ethylene/butylene/styrene (SEBS) block copolymer, styrene/ethylene/propylene/styrene (SEPS) block copolymer, styrene/ethylene/ethylene/propylene/styrene (SEEPS) block copolymer, styrene/ethylene/butylene (SEB) block copolymer, styrene/ethylene/propylene (SEP) block copolymer, and styrene/ethylene/ethylene/propylene (SEEP) block copolymer, among others.

### (Rubber Powder)

The rubber composition of the present embodiment may contain rubber powder. The rubber powder may be obtained by pulverizing used rubber products such as used tires, optionally removing reinforcing members such as steel materials and fibers, dust, glass, sand, stones, etc., or by preparing a newly vulcanized rubber composition for the purpose of producing rubber powder and pulverizing it. For example, rubber powder can be obtained from vulcanized rubber by the method described in "Rubber Chemistry And Technology." In the process of obtaining rubber powder by pulverizing vulcanized rubber, mechanical processing or low-temperature processing may be used. For example, in mechanical processing, various crushing devices such as cracker mills and granulators can be used to mechanically pulverize vulcanized rubber into fine particles. In low-temperature processing, finely chopped vulcanized rubber is frozen at extremely low temperatures and then pulverized into fine particles. For removal of steel materials, magnetic separators can be used, and for removal of fibers, air classifiers can be used. Commercially available products can also be used as the above rubber powder, and examples of commercially available rubber powder include products from Global Corporation or Nantong Huili Rubber Corporation, among others. From the viewpoint of reducing environmental impact, it is preferable to use rubber powder obtained by pulverizing used rubber products such as used tires. The above rubber powder may be used alone or in combination of two or more.

The composition of the above rubber powder is not particularly limited and depends on the composition of the vulcanized rubber of the used rubber product (used tire) serving as the raw material. In one embodiment, the rubber powder contains a rubber component, carbon black, silica, and the like. The rubber component, carbon black, silica, and the like contained in the rubber powder may be the same as or different from the rubber component, carbon black, silica, and the like that can be contained in the rubber composition of the present embodiment described above.

The above rubber powder preferably has a volume-average particle diameter of not more than 1000 µm, more preferably not more than 500 µm, still more preferably not more than 200 µm, and most preferably not more than 100 µm. The smaller the volume-average particle diameter of the rubber powder, the better, and the lower limit is not particularly limited.

It should be noted that, in the present specification, the volume-average particle diameter is measured using a laser diffraction particle size distribution measuring device, for example, "CAPA500" manufactured by HORIBA, Ltd. can be used for measurement.

The above rubber powder preferably has a 60-mesh sieve residue of less than 1 mass%, more preferably not more than 0.5 mass%, still more preferably not more than 0.1 mass%, and the lower limit is not particularly limited. Further, the above rubber powder preferably has an 80-mesh sieve residue of less than 10 mass%, more preferably not more than 1 mass%, still more preferably not more than 0.5 mass%, and the lower limit is not particularly limited.

It should be noted that, in the present specification, the sieve residue is measured in accordance with ASTM D5644-01.

The above rubber powder preferably has an acetone extract content of not more than 12 mass%, more preferably not more than 11 mass%, and still more preferably not more than 10 mass%, and preferably not less than 1 mass%, more preferably not less than 2 mass%, and still more preferably not less than 3 mass%.

It should be noted that, in the present specification, the acetone extract content in the rubber powder refers to the acetone extract content (%) determined by the acetone extraction method in accordance with JIS K6350.

The content of the above rubber powder is not particularly limited and may be appropriately adjusted, for example, according to the target performance of the tire to which it is applied. For example, the content of the rubber powder is preferably not less than 1 part by mass, more preferably not less than 2 parts by mass, and even more preferably not less than 3 parts by mass, per 100 parts by mass of the rubber component (A); and preferably not more than 200 parts by mass, more preferably not more than 150 parts by mass, still more preferably not more than 100 parts by mass, more preferably not more than 50 parts by mass, more preferably not more than 30 parts by mass, still more preferably not more than 15 parts by mass, even more preferably not more than 10 parts by mass, and particularly preferably not more than 5 parts by mass.

### (Liquid Softener)

The rubber composition of the present embodiment may contain a liquid softener. Here, the "liquid softener" refers to a compounding agent that is liquid at 25°C (room temperature) and has the function of softening the rubber composition. The liquid softener is not particularly limited, and examples include oils and liquid polymers, among which oils are preferred. These liquid softeners may be used alone or in combination of two or more.

The term "oil" is a general term for extender oil contained in the rubber component and liquid oil components added as compounding agents in the rubber composition, and examples thereof include vegetable oils, process oils, oils obtained by recycling vegetable oils or process oils, or mixtures thereof. From the viewpoint of reducing environmental impact, vegetable oils and oils obtained by recycling are preferred as the oil. Examples of the vegetable oil include palm oil, castor oil, cottonseed oil, soybean oil, linseed oil, rapeseed oil, Cocos nucifera oil, peanut oil, pine oil, pine tar, tall oil, corn oil, rice bran oil, safflower oil, sesame oil, olive oil, sunflower oil, palm kernel oil, camellia oil, jojoba oil, macadamia nut oil, tung oil, coconut oil, and the like. Examples of the process oil include, for example, paraffin process oil, aromatic process oil, naphthenic process oil, and the like. Commercially available products can be used as the oil, and examples of commercially available oils include products from Idemitsu Kosan Co., Ltd., SANKYO YUKA KOGYO K.K., ENEOS Corporation, Orisoy, H&R, Toyokuni Oil Co., Ltd., Nisshin OilliO Group, Ltd., and the like. These oils may be used alone or in combination of two or more kinds.

As the liquid polymer, a liquid diene-based polymer is preferred. Examples of the liquid diene-based polymer include liquid styrene-butadiene copolymer (liquid SBR), liquid polybutadiene (liquid BR), liquid polyisoprene (liquid IR), liquid styrene-isoprene copolymer (liquid SIR), liquid styrene-butadienestyrene block copolymer (liquid SBS block polymer), liquid styrene-isoprene-styrene block copolymer (liquid SIS block polymer), liquid polyfarnesene, liquid farnesene-butadiene copolymer, and the like. These liquid polymers may be hydrogenated, and may be modified at the terminal or main chain with a functional group (polar group). These liquid polymers may be used alone or in combination of two or more kinds.

The content of the liquid softener is not particularly limited and may be appropriately adjusted according to, for example, the target performance of the tire to which it is applied. For example, the content of the liquid softener is preferably not less than 5 parts by mass, and more preferably not less than 10 parts by mass, and preferably not more than 100 parts by mass, more preferably not more than 70 parts by mass, still more preferably not more than 50 parts by mass, and most preferably not more than 30 parts by mass, per 100 parts by mass of the rubber component (A).

### (Wax)

The rubber composition of the present embodiment may contain wax. Examples of the wax include natural waxes such as plant-based waxes and animal-based waxes; petroleum-based waxes such as paraffin wax and microcrystalline wax; synthetic waxes such as polymers of ethylene and polymers of propylene; and the like. Commercially available products can be used as the wax, and examples of commercially available waxes include products from Seiko-Chemical Co., Ltd., Nippon Seiro Co., Ltd., Ouchi Shinko Chemical Industrial Co., Ltd., and the like. These waxes may be used alone or in combination of two or more kinds.

The content of the wax is not particularly limited and may be appropriately adjusted according to, for example, the target performance of the tire to which it is applied. For example, the content of the wax is preferably not less than 0.5 part by mass, more preferably not less than 1 part by mass, and preferably not more than 10 parts by mass, more preferably not more than 6 parts by mass, and still more preferably not more than 4 parts by mass, per 100 parts by mass of the rubber component (A).

### (Stearic Acid)

The rubber composition of the present embodiment may contain stearic acid. Commercially available products can be used as the stearic acid, and examples of commercially available stearic acid include products from NOF Corporation, Kao Corporation, FUJIFILM Wako Pure Chemical Corporation, Chiba Fatty Acid Co., Ltd., and the like. These commercially available stearic acids may be used alone or in combination of two or more kinds.

The content of the stearic acid is not particularly limited and may be appropriately adjusted according to, for example, the target performance of the tire to which it is applied. For example, the content of the stearic acid is preferably not less than 1 part by mass, more preferably not less than 2 parts by mass, and preferably not more than 10 parts by mass, more preferably not more than 6 parts by mass, per 100 parts by mass of the rubber component (A).

### (Zinc Oxide)

The rubber composition of the present embodiment may contain zinc oxide (zinc white). As the zinc oxide, not only zinc oxide obtained from zinc ingot but also zinc oxide obtained from recycled zinc or zinc dross (i.e., obtained by recycling) is preferred. Commercially available products can be used as the zinc oxide, and examples of commercially available zinc oxide include products from Hakusui Tech Co., Ltd., Seido Chemical Industry Co., Ltd., Sakai Chemical Industry Co., Ltd., Mitsui Mining & Smelting Co., Ltd., Toho Zinc Co., Ltd., and the like. These commercially available zinc oxides may be used alone or in combination of two or more kinds.

The content of the zinc oxide is not particularly limited and may be appropriately adjusted according to, for example, the target performance of the tire to which it is applied. For example, the content of the zinc oxide is preferably not less than 0.1 part by mass, more preferably not less than 1 part by mass, and still more preferably not less than 2 parts by mass, and preferably not more than 10 parts by mass, more preferably not more than 8 parts by mass, and still more preferably not more than 6 parts by mass, per 100 parts by mass of the rubber component (A).

### (Sulfur)

It is preferable that the rubber composition of the present embodiment contains sulfur. As the sulfur, those derived from fossil resources, those derived from recycled resources, and those obtained by processing biological resource-derived materials can be used, and from the viewpoint of reducing environmental impact, it is particularly preferable to use sulfur obtained from waste derived from biological resources. As a method for obtaining sulfur from waste derived from biological resources, for example, the method described in the above-mentioned Japanese Patent Application No. 2022-140390 can be cited. Further, as the sulfur, powdered sulfur, precipitated sulfur, colloidal sulfur, insoluble sulfur, highly dispersible sulfur, soluble sulfur, and the like, which are generally used as crosslinking agents in the rubber industry, may be used. Commercially available products can be used as the sulfur, and examples of commercially available sulfur include products from Tsurumi Chemical Industry Co., Ltd., Hosoi Chemical Industry Co., Ltd., Karuizawa Sulfur Co., Ltd., Shikoku Chemicals Corp., Flexsys, and the like. These sulfurs may be used alone or in combination of two or more kinds.

The content of the sulfur is not particularly limited and may be appropriately adjusted according to, for example, the target performance of the tire to which it is applied. For example, the content of the sulfur is preferably not less than 0.1 part by mass, more preferably not less than 0.3 part by mass, still more preferably not less than 0.5 part by mass, even more preferably not less than 0.8 part by mass, and most preferably not less than 1 part by mass, and preferably not more than 8 parts by mass, more preferably not more than 5 parts by mass, and still more preferably not more than 4 parts by mass, per 100 parts by mass of the rubber component (A).

### (Vulcanization Accelerator)

It is preferable that the rubber composition of the present embodiment contains a vulcanization accelerator. The vulcanization accelerator can be used regardless of whether it is derived from fossil resources, recycled resources, or biological resources, but from the viewpoint of reducing environmental impact, it is preferable that it is derived from biological resources. The vulcanization accelerator derived from biological resources can be obtained, for example, by the method disclosed in JP 2005-139239 A and the like.

Examples of the vulcanization accelerator include sulfenamide vulcanization accelerators such as N-cyclohexyl-2-benzothiazolylsulfenamide (CBS), N,N-dicyclohexyl-2-benzothiazolylsulfenamide, N-tert-butyl-2-benzothiazolylsulfenamide (TBBS), N-oxyethylene-2-benzothiazolesulfenamide, N,N'-diisopropyl-2-benzothiazolesulfenamide; guanidine vulcanization accelerators such as 1,3-diphenylguanidine (DPG), 1,3-di-o-tolylguanidine, o-tolylbiguanidine; thiazole vulcanization accelerators such as 2-mercaptobenzothiazole (M), di-2-benzothiazolyl disulfide (MBTS, DM); thiuram vulcanization accelerators such as tetramethylthiuram disulfide (TMTD), tetrastearylthiuram disulfide, tetrabenzylthiuram disulfide (TBzTD), tetrakis(2-ethylhexyl)thiuram disulfide (TOT-N); and the like. Commercially available products can be used as the vulcanization accelerator, and examples of commercially available vulcanization accelerators include products from Ouchi Shinko Chemical Industrial Co., Ltd., Sumitomo Chemical Co., Ltd., and the like. These vulcanization accelerators may be used alone or in combination of two or more kinds.

The content of the vulcanization accelerator is not particularly limited and may be appropriately adjusted according to, for example, the target performance of the tire to which it is applied. For example, the content of the vulcanization accelerator is preferably not less than 0.1 part by mass, more preferably not less than 0.2 part by mass, still more preferably not less than 1 part by mass, even more preferably not less than 2 parts by mass, and most preferably not less than 3 parts by mass, and preferably not more than 8 parts by mass, more preferably not more than 6 parts by mass, still more preferably not more than 5.5 parts by mass, and even more preferably not more than 4 parts by mass, per 100 parts by mass of the rubber component (A).

### (Cellulose Nanofiber)

The rubber composition of the present embodiment may contain cellulose nanofiber (CNF). By compounding cellulose nanofiber in the rubber composition, the rubber composition can be reinforced. As the cellulose nanofiber, a modified cellulose nanofiber is preferred, and the modified cellulose nanofiber is a fine fiber made from modified cellulose as a raw material. The fiber diameter of the cellulose nanofiber is not particularly limited, but is about 3 to 500 nm. The average fiber diameter and average fiber length of the cellulose nanofiber can be obtained by averaging the fiber diameter and fiber length obtained by observing each fiber using a scanning electron microscope (SEM), atomic force microscope (AFM), or transmission electron microscope (TEM). The cellulose nanofiber can be obtained by fibrillating cellulose. Further, the average fiber length and average fiber diameter of the fine fibers can be adjusted by oxidation treatment and fibrillation treatment.

The raw material for the cellulose nanofiber only needs to contain cellulose and is not particularly limited, but examples include plants (for example, wood, bamboo, hemp, jute, kenaf, agricultural residue, cloth, pulp (unbleached softwood kraft pulp (NUKP), bleached softwood kraft pulp (NBKP), unbleached hardwood kraft pulp (LUKP), bleached hardwood kraft pulp (LBKP), bleached kraft pulp (BKP), unbleached softwood sulfite pulp (NUSP), bleached softwood sulfite pulp (NBSP), thermomechanical pulp (TMP), recycled pulp, waste paper, etc.), animals (for example, tunicates), algae, microorganisms (for example, acetic acid bacteria (Acetobacter)), microbial products, and the like. These cellulose raw materials may be used alone or in combination of two or more kinds.

The content of the cellulose nanofiber is not particularly limited and may be appropriately adjusted according to, for example, the target performance of the tire to which it is applied. For example, the content of the cellulose nanofiber is preferably in the range of 1 to 100 parts by mass, more preferably in the range of 5 to 70 parts by mass, and still more preferably in the range of 10 to 40 parts by mass, per 100 parts by mass of the rubber component (A).

### (Porous Cellulose Particles)

The rubber composition of the present embodiment may contain porous cellulose particles. The porous cellulose particles preferably have a porous structure with a porosity of 75 to 95%, and by compounding them in the rubber composition, on-ice performance can be improved. When the porosity of the porous cellulose particles is 75% or more, the effect of improving on-ice performance is excellent, and when the porosity is 95% or less, the strength of the particles can be increased. The porosity is more preferably 80 to 90%. The porosity of the porous cellulose particles can be determined by measuring the volume of a certain mass of sample (i.e., porous cellulose particles) with a graduated cylinder, determining the bulk specific gravity, and calculating from the following formula: 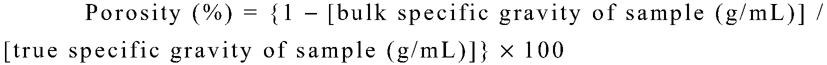 Porosity (%) = {1 - [bulk specific gravity of sample (g/mL)] / [true specific gravity of sample (g/mL)]} × 100

Here, the true specific gravity of cellulose is 1.5.

The particle size of the porous cellulose particles is not particularly limited, but from the viewpoint of wear resistance, those having an average particle size of 1000 µm or less are preferred. The lower limit of the average particle size is not particularly limited, but is preferably 5 µm or more. The average particle size is more preferably 100 to 800 µm, and still more preferably 200 to 800 µm.

As the porous cellulose particles, spherical particles having a long diameter/short diameter ratio of 1 to 2 are preferred. By using such spherical particles, dispersibility in the rubber composition is improved, which can contribute to improvement in on-ice performance and maintenance of wear resistance and the like. The long diameter/short diameter ratio is more preferably 1.0 to 1.5.

The average particle size and long diameter/short diameter ratio of the porous cellulose particles are determined as follows. That is, images are obtained by observing the porous cellulose particles with a microscope, and using these images, the long diameter and short diameter (when the long diameter and short diameter are the same, the length in one axial direction and the length in the direction orthogonal to this axis) of 100 particles are measured, and the average value is calculated to obtain the average particle size, and the average value of the ratio of the long diameter to the short diameter is calculated to obtain the long diameter/short diameter ratio.

As the porous cellulose particles, those commercially available from Rengo Co., Ltd. under the trade name "Viscopearl," and those described in JP 2001-323095 A, JP 2004-115284 A, and the like, can be suitably used.

The content of the porous cellulose particles is not particularly limited and may be appropriately adjusted according to, for example, the target performance of the tire to which it is applied. For example, the content of the porous cellulose particles is preferably in the range of 0.3 to 20 parts by mass, more preferably in the range of 1 to 15 parts by mass, and still more preferably in the range of 3 to 15 parts by mass, per 100 parts by mass of the rubber component (A).

### (Solid Fine Particles)

The rubber composition of the present embodiment may contain solid fine particles. By compounding the solid fine particles in the rubber composition, on-ice performance can be improved. The solid fine particles preferably have an average particle diameter of 1 µm or more, more preferably 1000 µm or less, and still more preferably 300 µm or less. Examples of the solid fine particles include plant-derived powders obtained from plants such as rice husks, walnut powder or walnut shells; animal-derived powders obtained from animals such as eggshells (eggshell powder), bone powder; natural mineral-derived powders such as shirasu; inorganic fine particles such as graphite, zinc oxide whiskers; water-soluble metal salt fine particles such as magnesium sulfate, metal salts of lignin sulfonic acid; non-metallic fibers such as glass fiber; and the like. Among these, rice husks, walnut shells, eggshells, and shirasu are preferred.

The content of the solid fine particles is not particularly limited and may be appropriately adjusted according to, for example, the target performance of the tire to which it is applied. For example, the content of the solid fine particles is preferably in the range of 0.3 to 20 parts by mass, more preferably in the range of 1 to 15 parts by mass, and still more preferably in the range of 3 to 15 parts by mass, per 100 parts by mass of the rubber component (A).

### (Others)

The rubber composition of the present embodiment may further contain, in addition to the above components, various additives generally used in the tire industry, such as organic peroxides. The content of these additives is not particularly limited and may be appropriately adjusted according to, for example, the target performance of the tire to which it is applied, and for example, is preferably in the range of 0.1 to 200 parts by mass per 100 parts by mass of the rubber component (A).

### (Method for Producing Rubber Composition)

The method for producing the rubber composition of the present embodiment is not particularly limited, but for example, it can be produced by compounding the above-mentioned rubber component (A), resin component (B), filler (C), antioxidant (D), and various components appropriately selected as necessary, followed by kneading, warming, extrusion, and the like. Further, by vulcanizing the obtained rubber composition, a vulcanized rubber can be obtained.

The kneading conditions are not particularly limited, and various conditions such as the input volume of the kneading apparatus, the rotational velocity of the rotor, ram pressure, kneading temperature, kneading time, and type of kneading apparatus can be appropriately selected according to the purpose. Examples of the kneading apparatus include Banbury mixers, Intermix, kneaders, rolls, and the like, which are usually used for kneading rubber compositions.

The conditions for warming are also not particularly limited, and various conditions such as warming temperature, warming time, and warming apparatus can be appropriately selected according to the purpose. Examples of the warming apparatus include warming roll machines and the like, which are usually used for warming rubber compositions.

There are no particular limitations on the conditions for the extrusion, and various conditions such as extrusion time, extrusion speed, extrusion apparatus, and extrusion temperature can be appropriately selected according to the intended purpose. As the extrusion apparatus, an extruder or the like commonly used for extruding rubber compositions may be employed. The extrusion temperature can be appropriately determined.

There are also no particular limitations on the apparatus, method, or conditions for vulcanization, and these can be appropriately selected according to the intended purpose. As the apparatus for vulcanization, a molding vulcanizer using a mold, which is commonly used for vulcanizing rubber compositions, may be employed. As for the vulcanization conditions, the temperature is, for example, about 100°C to 190°C.

### <Tread Rubber>

The tread rubber of the present embodiment is characterized by being composed of the above-described rubber composition for tread.

Since the tread rubber of the present embodiment is composed of the above-described rubber composition for tread, when applied to a tire, it is possible to achieve a high-level balance between the wet gripping performance and high fuel efficiency of the tire, and further, it is possible to suppress cracks in the tread portion of the tire.

It should be noted that the tread rubber of the present embodiment may be applied to new tires or to retreaded tires.

Further, the tread rubber of the present embodiment may be applied to pneumatic tires or to non-pneumatic tires.

### <Tire>

The tire of the present embodiment is characterized by comprising the above-described tread rubber.

Since the tire of the present embodiment comprises the above-described tread rubber, not only are the wet gripping performance and high fuel efficiency highly balanced, but also cracks in the tread portion are suppressed.

The tire of the present embodiment can be produced by a conventional method using the above-described rubber composition as the tread rubber. For example, the tire of the present embodiment may be obtained by molding and then vulcanizing an unvulcanized rubber composition according to the type of tire to be applied, or by molding using a semi-vulcanized rubber that has undergone a preliminary vulcanization step and then further subjecting it to main vulcanization. It should be noted that the tire of the present embodiment is preferably a pneumatic tire, and as the gas to be filled in the pneumatic tire, in addition to ordinary air or air with adjusted oxygen partial pressure, inert gases such as nitrogen, argon, or helium may be used.

### EXAMPLES

The present disclosure will be further described in detail below by way of examples, but the present disclosure is not limited in any way to the following examples.

### <Analysis Method for Rubber Component>

The glass transition temperature (Tg) and bound styrene content of the styrene-butadiene rubber were measured by the following methods. In addition, the SP values (solubility parameters) of natural rubber (isoprene-based rubber) and styrene-butadiene rubber were calculated according to the Fedors method.

### (1) Glass Transition Temperature (Tg)

Using styrene-butadiene rubber as a sample, a DSC250 manufactured by TA Instruments was used, and under a helium flow of 50 mL/min, the temperature was raised from -100°C at a rate of 20°C/min while recording the DSC curve, and the peak top (inflection point) of the DSC differential curve was taken as the glass transition temperature.

### (2) Bound Styrene Content

Using styrene-butadiene rubber as a sample, 100 mg of the sample was made up to 100 mL with chloroform, dissolved, and used as a measurement sample. The bound styrene content (mass%) per 100 mass% of the sample was measured based on the absorbance at the ultraviolet absorption wavelength (around 254 nm) due to the phenyl group of styrene. As the measurement device, a spectrophotometer "UV-2450" manufactured by Shimadzu Corporation was used.

### <Analysis Method for Resin Component>

The softening point and weight-average molecular weight of the resin component were measured by the following methods. In addition, the SP value (solubility parameter) of the resin component was calculated according to the Fedors method.

### (3) Softening Point

The softening point of the resin component was measured in accordance with JIS-K2207-1996 (ring and ball method).

### (4) Weight-Average Molecular Weight

The average molecular weight of the resin component was measured by gel permeation chromatography (GPC) under the following conditions, and the weight-average molecular weight in terms of polystyrene was calculated.
- Column temperature: 40°C
- Injection volume: 50 µL
- Carrier and flow rate: tetrahydrofuran 0.6 mL/min
- Sample preparation: about 2.5 mg of resin component dissolved in 10 mL of tetrahydrofuran

### <Preparation and Evaluation of Rubber Composition>

Each component was blended and kneaded according to the formulation shown in Table 1 to prepare the rubber compositions of the examples and comparative example.

The obtained rubber composition samples were evaluated for ozone resistance, wet gripping performance, and high fuel efficiency by the following methods. The results are presented in Table 1.

### (5) Ozone Resistance

A dynamic ozone degradation test (test with repeated strain) was conducted in accordance with ISO 1431 (JIS K 6259), and then the sample was observed at ×20 magnification using a microscope.

The evaluation is performed by ranking the observed samples according to the size and depth of cracks, classified by the following criteria (1 to 5), with a smaller value indicating a better result.

### (Rank by size and depth of cracks)

1: Not visible to the naked eye but can be confirmed with a ×10 magnifying glass.
2: Visible to the naked eye.
3: Cracks that are deep and relatively large (less than 1 mm).
4: Cracks that are deep and large (1 mm or more and less than 3 mm).
5: Cracks of 3 mm or more or those likely to cause breakage.

### (6) Wet Gripping Performance

The loss tangent (tan δ) of the test piece was measured using a viscoelasticity meter (manufactured by GABO) under the conditions of temperature 0°C, strain 1%, and frequency 15 Hz. The evaluation results are presented as an index, with the tan δ of Comparative Example 1 set to 100, as indicated in Table 1. The larger the index value, the greater the tan δ, indicating superior wet gripping performance.

### (7) High Fuel Efficiency

The loss tangent (tan δ) of the test piece was measured using a viscoelasticity meter (manufactured by GABO) under the conditions of temperature 60°C, strain 1%, and frequency 15 Hz. The evaluation results are presented as an index, with the tan δ of Comparative Example 1 set to 100, as indicated in Table 1. The smaller the index value, the smaller the tan δ, indicating superior high fuel efficiency.

**[Table 1]**

| | | | | Comparative Example 1 | Example 1 | Example 2 | Example 3 | Example 4 | Example 5 | Example 6 |
|---|---|---|---|---|---|---|---|---|---|---|
| Formulation | Component (A) | NR *1 | Parts by mass | 25 | 25 | 25 | 25 | 25 | 25 | 25 |
| | | SBR *2 | | 75 | 75 | 75 | 75 | 75 | 75 | 75 |
| | Component (B) | Resin *3 | | 30 | 30 | 30 | 30 | 30 | 30 | 30 |
| | Component (C) | Carbon black *4 | | 5 | 5 | 5 | 5 | 5 | 5 | 5 |
| | | Silica *5 | | 65 | 65 | 65 | 65 | 65 | 65 | 65 |
| | Wax *6 | | | 2 | 2 | 2 | 2 | 2 | 2 | 2 |
| | Silane coupling agent *7 | | | 6.5 | 6.5 | 6.5 | 6.5 | 6.5 | 6.5 | 6.5 |
| | Sulfur *8 | | | 2 | 2 | 2 | 2 | 2 | 2 | 2 |
| | Component (D) | Antioxidant 1 *9 | | - | 3 | - | - | - | - | - |
| | | Antioxidant 2 *10 | | - | - | 3 | - | - | - | - |
| | | Antioxidant 3 *11 | | - | - | - | 3 | - | - | - |
| | | Antioxidant 4 *12 | | - | - | - | - | 3 | - | - |
| | | Antioxidant 5 *13 | | - | - | - | - | - | 3 | - |
| | | Antioxidant 6 *14 | | - | - | - | - | - | - | 3 |
| | Other chemicals *15 | | | 10.7 | 10.7 | 10.7 | 10.7 | 10.7 | 10.7 | 10.7 |
| Mass ratio of resin component/isoprene-based rubber | | | - | 1.2 | 1.2 | 1.2 | 1.2 | 1.2 | 1.2 | 1.2 |
| Evaluation | Ozone resistance (visual evaluation result) | | - | 4 | 1 | 3 | 3 | 3 | 1 | 1 |
| | Wet gripping performance | | Index | 100 | 105 | 107 | 109 | 102 | 108 | 106 |
| | High fuel efficiency | | Index | 100 | 90 | 95 | 94 | 89 | 98 | 92 |

| | | | | | | | | | | |
|---|---|---|---|---|---|---|---|---|---|---|
| *1 NR: natural rubber, SP value = 8.20 (cal/cm³)^{1/2} *2 SBR: styrene-butadiene rubber, Tg = -65°C, bound styrene content = 10 mass%, SP value = 8.65 (cal/cm³)^{1/2}, synthesized by the following method | | | | | | | | | | |

### <Synthesis Method of SBR (*2)>

In an 800 mL pressure-resistant glass vessel that had been dried and purged with nitrogen, a cyclohexane solution of 1,3-butadiene and a cyclohexane solution of styrene were added so as to provide 67.5 g of 1,3-butadiene and 7.5 g of styrene, then 0.6 mmol of 2,2-di-tetrahydrofurylpropane was added, followed by 0.8 mmol of n-butyllithium, and polymerization was carried out at 50°C for 1.5 hours. To the polymerization reaction system, in which the polymerization conversion rate was nearly 100%, 0.72 mmol of N,N-bis(trimethylsilyl)-3-[diethoxy(methyl)silyl]propylamine was added as a modifier, and a modification reaction was conducted at 50°C for 30 minutes. Thereafter, 2 mL of a 5 mass% isopropanol solution of 2,6-di-t-butyl-p-cresol (BHT) was added to terminate the reaction, and the modified SBR was obtained by drying in the usual manner.
*3 Resin: manufactured by Eastman, trade name "Impera E1780", softening point = 130°C, weight-average molecular weight (Mw) = 909 g/mol, SP value = 8.35 (cal/cm³)^{1/2}
*4 Carbon black: recovered carbon black, manufactured by Enrestec, trade name "PB365", ash content = 17 mass%
*5 Silica: manufactured by Tosoh Silica Corporation, trade name "Nipsil AQ"
*6 Wax: microcrystalline wax, manufactured by Nippon Seiro Co., Ltd., trade name "Ozoace 0280"
*7 Silane coupling agent: bis(triethoxysilylpropyl) polysulfide, manufactured by Shin-Etsu Chemical Co., Ltd., trade name "ABC-856"
*8 Sulfur: manufactured by Hosoi Chemical Industry Co., Ltd., trade name "HK200-5", 5% oil
*9 Antioxidant 1: a compound represented by formula (2), in which R²¹ and R²² are alkyl groups having 6 carbon atoms
*10 Antioxidant 2: a compound (mixture) represented by formula (3), in which n3 is 2 to 5, "Nonflex RD-S" manufactured by Seiko-Chemical Co., Ltd.
*11 Antioxidant 3: a compound represented by formula (4), "Nocrac NS6" manufactured by Ouchi Shinko Chemical Industrial Co., Ltd.
*12 Antioxidant 4: a compound (mixture) represented by formula (5), in which n5 is 2 to 5, "Nocrac SP" manufactured by Ouchi Shinko Chemical Industrial Co., Ltd.
*13 Antioxidant 5: a compound represented by formula (8), in which R⁸¹ and R⁸⁵ are hydrogen atoms, R⁸² and R⁸⁶ are alkyl groups having 3 carbon atoms, R⁸³ and R⁸⁴ are alkyl groups having 3 carbon atoms, A⁸ is an alkylene group having 2 carbon atoms, l8 is 1, m8 is 0, and n8 is 0
*14 Antioxidant 6: a compound represented by formula (9), in which R⁹¹ and R⁹² are phenyl groups, and A⁹ is an alkylene group having 16 carbon atoms
*15 Other chemicals: total amount including at least zinc oxide manufactured by Hakusui Tech Co., Ltd. and "Sanceler CM-G" (vulcanization accelerator) manufactured by Sanshin Chemical Industry Co., Ltd.

From the results in Table 1, it can be seen that the rubber compositions of each example are all superior in ozone resistance compared to the rubber composition of Comparative Example 1, and cracks can be suppressed.

Further, it can be seen that the rubber compositions of each example all exhibit improved wet gripping performance and high fuel efficiency compared to the rubber composition of Comparative Example 1.

## Claims

1. A rubber composition for tread comprising a rubber component (A), a resin component (B), a filler (C), and an antioxidant (D), wherein
the rubber component (A) includes isoprene-based rubber,
content of the resin component (B) is not less than 1 part by mass and less than 50 parts by mass per 100 parts by mass of the rubber component (A),
the resin component (B) is at least partially hydrogenated, and a difference in SP value between the resin component (B) and the isoprene-based rubber is not more than 1.40 (cal/cm³)^{1/2},
the following formula:
mass ratio of resin component (B)/isoprene-based rubber ≥ 0.5 is satisfied, and
the antioxidant (D) is at least one selected from the group consisting of:
a compound represented by the following formula (1): 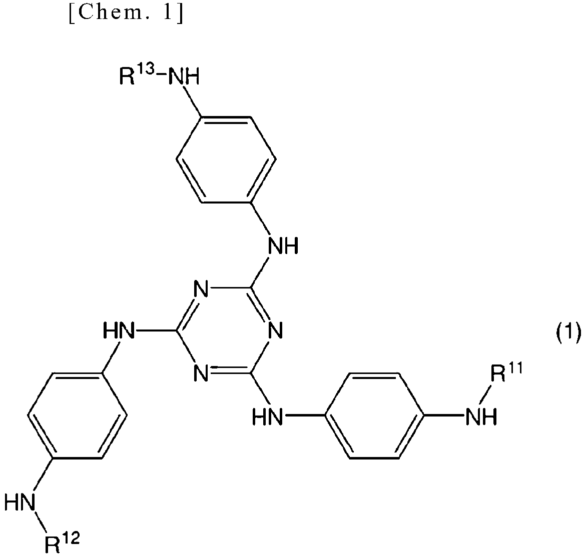 where, in formula (1), R¹¹, R¹², and R¹³ are each independently an alkyl group having 1 to 20 carbon atoms;
a compound represented by the following formula (2): 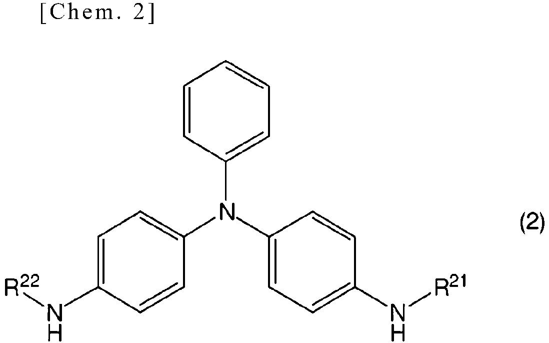 where, in formula (2), R²¹ and R²² are each independently an alkyl group having 1 to 20 carbon atoms;
a compound represented by the following formula (3): 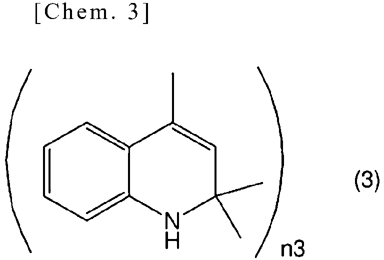 where, in formula (3), n3 is 2 to 5;
a compound represented by the following formula (4): 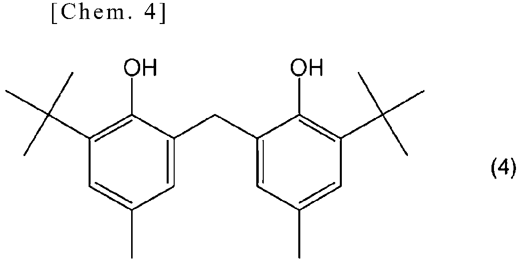
a compound represented by the following formula (5): 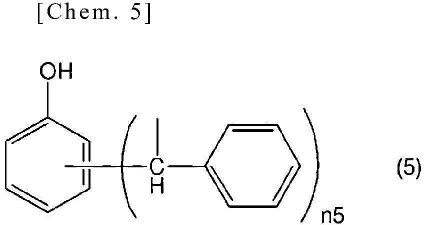 where, in formula (5), n5 is 2 to 5;
a compound represented by the following formula (6): 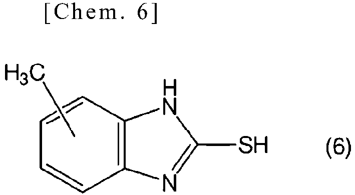
a compound represented by the following formula (7): 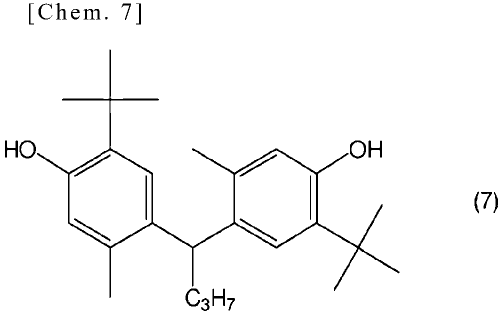
a compound represented by the following formula (8): 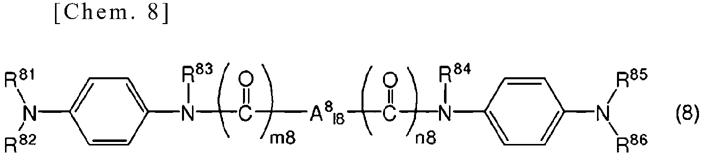 where, in formula (8), R⁸¹, R⁸², R⁸⁵, and R⁸⁶ each independently represent a hydrogen atom, an alkyl group having 1 to 10 carbon atoms, or a phenyl group, with a proviso that a case in which R⁸¹ and R⁸² are simultaneously hydrogen atoms and a case in which R⁸⁵ and R¹⁶ are simultaneously hydrogen atoms are excluded, R⁸³ and R⁸⁴ each independently represent an alkyl group having 1 to 8 carbon atoms or an aralkyl group, A⁸ represents an alkylene group having 1 to 12 carbon atoms, and 18, m8, and n8 each represent an integer of 0 or 1;
a compound represented by the following formula (9): 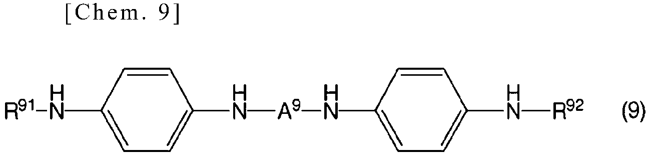 where, in formula (9), R⁹¹ and R⁹² each independently represent an alkyl group having 1 to 10 carbon atoms, an aralkyl group, or a phenyl group, and A⁹ represents an alkylene group having 6 to 30 carbon atoms and optionally having an interposed phenylene group; and
a compound represented by the following formula (10): 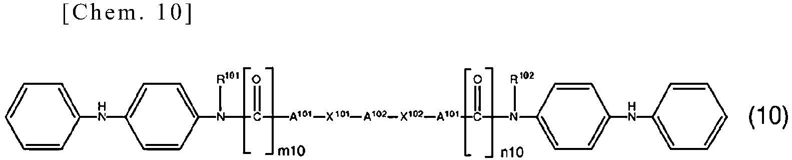 where, in formula (10), R¹⁰¹ and R¹⁰² each independently represent a hydrogen atom or an alkyl group having 1 to 6 carbon atoms, m10 and n10 each represent an integer of 0 or 1, each A¹⁰¹ independently represents an alkylene group having 1 to 7 carbon atoms, A¹⁰² represents an alkylene group having 1 to 8 carbon atoms, X¹⁰¹ represents an oxygen atom, a sulfur atom, or an -NR¹⁰³- group, and X¹⁰² represents an oxygen atom, a sulfur atom, or an -NR¹⁰⁴- group, wherein R¹⁰³ and R¹⁰⁴ are each independently a hydrogen atom or an alkyl group having 1 to 4 carbon atoms, or R¹⁰³ and R¹⁰⁴ optionally form an alkylene group having 1 to 4 carbon atoms together.

2. The rubber composition for tread according to claim 1, wherein the rubber component (A) further includes styrene-butadiene rubber.

3. The rubber composition for tread according to claim 2, wherein the styrene-butadiene rubber has a glass transition temperature of lower than -40°C.

4. The rubber composition for tread according to claim 1, wherein the difference in SP value between the resin component (B) and the isoprene-based rubber is not more than 0.50 (cal/cm³)^{1/2}.

5. The rubber composition for tread according to claim 2, wherein a difference in SP value between the styrene-butadiene rubber and the isoprene-based rubber is not less than 0.3 (cal/cm³)^{1/2}.

6. The rubber composition for tread according to claim 1, wherein content of the isoprene-based rubber is 1 part by mass to 80 parts by mass in 100 parts by mass of the rubber component (A).

7. The rubber composition for tread according to claim 6, wherein the content of the isoprene-based rubber is 1 part by mass to 40 parts by mass in 100 parts by mass of the rubber component (A).

8. The rubber composition for tread according to claim 2, wherein the styrene-butadiene rubber is modified with a modifier having a functional group containing a nitrogen atom and an alkoxy group.

9. The rubber composition for tread according to claim 1, wherein the resin component (B) has a softening point of higher than 110°C and a polystyrene-equivalent weight-average molecular weight of 200 g/mol to 1600 g/mol.

10. The rubber composition for tread according to claim 1, wherein the resin component (B) is at least one selected from the group consisting of hydrogenated C₅ resin, hydrogenated C₅-C₉ resin, hydrogenated dicyclopentadiene resin, and hydrogenated terpene resin.

11. The rubber composition for tread according to claim 1, wherein the filler (C) includes recovered carbon black.

12. The rubber composition for tread according to claim 11, wherein the recovered carbon black is obtained by pyrolysis of a vulcanized rubber product containing carbon black.

13. The rubber composition for tread according to claim 11, wherein the recovered carbon black has an ash content of not more than 20 mass%.

14. Tread rubber comprising the rubber composition for tread according to any one of claims 1 to 13.

15. A tire comprising the tread rubber according to claim 14.
